(19) Europäisches Patentamt
European Patent Office
Office européen des brevets

(11) **EP 2 120 069 A1**

(12) **EUROPEAN PATENT APPLICATION**

(43) Date of publication:
**18.11.2009 Bulletin 2009/47**

(51) Int Cl.:
***G02B 3/04*** (2006.01)  ***G11B 7/135*** (2006.01)

(21) Application number: **09006233.2**

(22) Date of filing: **07.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **14.05.2008 JP 2008127724**

(71) Applicant: **Hitachi Maxell Ltd.**
**Osaka 567-8567 (JP)**

(72) Inventor: **Ito, Mitsuru**
**Ibaraki-shi**
**Osaka 567-8567 (JP)**

(74) Representative: **Strehl Schübel-Hopf & Partner**
**Maximilianstrasse 54**
**80538 München (DE)**

(54) **Optical pickup lens**

(57) An optical pickup lens, which is a single lens, focuses a light beam from a laser light source on an optical information recording medium. The optical pickup lens has two surfaces where a surface R2 opposite to a surface R1 closer to the laser light source has a continuous shape and is designed in such a way that h1, h2 and h3 satisfying 0>Δsag1>Δsag2 and Δsag2<Δsag3 exist when the surface R2 has radii h1, h2 and h3 (h1<h2<h3) from an optical axis to a lens periphery, sags in the radii h1, h2 and h3 are sag1, sag2 and sag3, and changes in the sags are Δsag1, Δsag2 and Δsag3, respectively.

Fig. 1A

EP 2 120 069 A1

Fig. 1B

**Description**

BACKGROUND OF THE INVENTION

1. Field of the Invention

The present invention relates to an optical pickup lens used in an optical system for performing recording or playback of an optical disc.

2. Description of Related Art

The recording capacity of an optical disc is ever increasing, and the recording density per unit area is also increasing. In the reading of information on an optical disc, light from a light source of an optical disc apparatus passes through an optical path including transparent components such as a wave plate and a collimator lens and is then focused by an optical pickup lens to form an optical spot on the optical disc, thereby reading the information on the optical disc. Normally, light that is emitted from a laser light source is converted into parallel light by a collimator lens or the like and then incident on an optical pickup lens. For an optical pickup lens which is used for reading a high-capacity optical disc, laser light with a wavelength of 410 nm or shorter is used, and a numerical aperture NA is generally 0.84 or larger.

An example of an optical pickup lens of related art is disclosed in Japanese Unexamined Patent Application Publication No. 2002-156579. The objective lens for an optical disc disclosed therein is a double-sided aspherical single lens with a numerical aperture NA of 0.7 or larger and with the center thickness of the lens being longer than a focal length. Another example is disclosed in Japanese Unexamined Patent Application Publication No. 2001-324673. The objective lens disclosed therein has an aspherical surface on one side and satisfies $1.1 \leq d1/f \leq 3$ where d1 is an on-axis lens thickness and f is a focal length. Yet another example is disclosed in Japanese Unexamined Patent Application Publication No. 2002-303787. The objective lens disclosed therein is a double-sided aspherical single objective lens with a numerical aperture NA of 0.75 or larger which satisfies $1.75 < n$ and $35 < v$ where n is a refractive index for at least one use wavelength and v is Abbe number on a line d.

It is necessary to maintain good off-axis characteristics in order to mount an optical pickup lens to a pickup. However, if the numerical aperture NA exceeds 0.80, it is difficult to maintain good characteristics for both on-axis aberration such as spherical aberration and off-axis aberration such as astigmatic aberration and comatic aberration of the pickup lens. Particularly, a biconvex lens in which a surface on the side close to a laser light source (surface R1) and a surface on the opposite side (surface R2) are both convex is difficult to have good angle of view characteristics.

Further, if the numerical aperture NA exceeds 0.80, a working distance (WD) indicating the distance between the optical pickup lens and the optical disc becomes smaller. The working distance particularly becomes smaller in a meniscus lens in which the surface R2 is not convex, increasing the risk of collision between the optical disc and the optical pickup lens.

SUMMARY OF THE INVENTION

The present invention has been accomplished to solve the above problems and an object of the present invention is thus to provide an optical pickup lens with a high NA which has a long working distance and maintains good on-axis characteristic and off-axis characteristics.

An optical pickup lens according to one aspect of the present invention is a biconvex single lens with a numerical aperture NA of 0.84 or larger, having a convex first surface on which a light beam from a laser light source is incident and a convex second surface opposite to the first surface, which focuses the light beam from the laser light source with a main wavelength of 410 nm or shorter on an optical information recording medium. In the above optical pickup lens, the second surface has a continuous shape, the shape of the second surface having a radius h1, a radius h2 and a radius h3 (h1<h2<h3) from an optical axis to a lens periphery, where sags in the radius h1, the radius h2 and the radius h3 are sag1, sag2 and sag3 and changes in the sags are $\Delta$sag1, $\Delta$sag2 and $\Delta$sag3, respectively, satisfies $0 > \Delta$sag1$> \Delta$sag2 and $\Delta$sag2$< \Delta$sag3, and the second surface has a convex shape in a center part without having a concave shape in a peripheral part, where a slope ($\Delta$sag) is gradual, abrupt and gradual again sequentially from a lens center h0 coinciding with the optical axis outward to a peripheral edge.

Because the shape of the second surface satisfies $0 > \Delta$sag1$> \Delta$sag2 and $\Delta$sag2$< \Delta$sag3, it is possible to maintain a sufficient working distance (a distance between an optical pickup lens and an optical disc) and obtain good on-axis aberration characteristics.

The shape of the second surface of the above optical pickup lens preferably has radii h1, h2, h3 and h4 which satisfy sag2>sag3 and sag3<sag4 where a sag in the radius h4 (h3<h4) is a sag 4. Alternatively, the shape of the second surface of the above optical pickup lens preferably has radii h1, h2, h3 and h4 which satisfy $\Delta$sag3<0 and $\Delta$sag4>0

where a sag in a lens radius h4 (h3<h4) is a sag 4 and a change in the sag is $\Delta$sag4. Alternatively, the shape of the second surface preferably has a minimum value. It is also preferred in the above optical pickup lens that the second surface is convex in a center and concave in a periphery. By satisfying such conditions, it is possible to maintain a longer working distance and obtain better on-axis characteristics and off-axis characteristics.

It is further preferred in the above optical pickup lens to satisfy 0.84≤NA and 0.9≤d/f when the optical pickup lens is used in a recording and/or playback pickup apparatus using a laser with a wavelength of 410 nm or shorter and where a numerical aperture is NA, a single lens center thickness is d, and a focal length is f.

It is more preferred in the above optical pickup lens to satisfy 0.84≤NA and 0.9≤d/f≤1.2 when the optical pickup lens is used in a recording and/or playback pickup apparatus using a laser with a wavelength of 410 nm or shorter and where a numerical aperture is NA, a single lens center thickness is d, and a focal length is f. By satisfying such conditions, it is possible to maintain a suitable edge thickness and facilitate the manufacture of the shape of the second surface which satisfies 0>$\Delta$sag1>$\Delta$sag2 and $\Delta$sag2<$\Delta$sag3.

Further, in the above optical pickup lens, a refractive index n for a wavelength of 405 nm is preferably 1.51≤n≤1.64.

More preferably, a refractive index n for a wavelength of 405 nm is 1.59≤n≤1.62. By satisfying such conditions, it is possible to maintain a suitable edge thickness and facilitate the design of the second surface which satisfies 0>$\Delta$sag1>$\Delta$sag2 and $\Delta$sag2<$\Delta$sag3.

Furthermore, in the above optical pickup lens, an effective diameter D of the single lens is preferably 1.8≤D≤3.2 mm. By applying the present invention to the lens having such an effective diameter, it is possible to maintain a long working distance and improve on-axis characteristics and off-axis characteristics.

In addition, aberration is preferably 15m $\lambda$rms or smaller when an angle of view is 0.3 degrees as off-axis characteristics.

It is also preferred in the above optical pickup lens that a tangent angle $\alpha$ of the first surface is 60°≤$\alpha$. If the tangent angle $\alpha$ becomes larger, the sag in the first surface increases, and the sag in the second surface decreases accordingly. This facilitates the manufacture of the shape of the second surface which satisfies 0>$\Delta$sag1>$\Delta$sag2 and $\Delta$sag2<$\Delta$sag3.

It is further preferred that an Abbe number $\nu$d of a lens material is 50≤$\nu$d. This enables accurate writing of a pit sequence on an optical disc. As the Abbe number is larger, the lens is more resistant to the displacement of a wavelength during writing.

Further, parallel light or sub-finite light may enter the optical pickup lens through the first surface. The single lens may be made of plastic or glass.

The present invention provides an optical pickup lens with a high NA which has a long working distance and maintains good on-axis characteristic and good off-axis characteristics.

The above and other objects, features and advantages of the present invention will become more fully understood from the detailed description given hereinbelow and the accompanying drawings which are given by way of illustration only, and thus are not to be considered as limiting the present invention.

BRIEF DESCRIPTION OF THE DRAWINGS

Fig. 1A is a view showing an optical pickup lens according to an embodiment of the present invention;
Fig. 1B is a schematic view showing a part within a dotted line in Fig. 1A in an enlarged scale;
Fig. 2A is a view showing another optical pickup lens according to an embodiment of the present invention;
Fig. 2B is a schematic view showing a part within a dotted line in Fig. 2A in an enlarged scale;
Fig. 3 is a view to describe a lens center thickness d, an effective diameter D and a working distance WD of an optical pickup lens according to an embodiment of the present invention;
Fig. 4 is a view showing wavefront aberration in examples related to an output surface of the present invention;
Figs. 5A to 5D are views showing characteristic values of an optical pickup lens according to an example 1 related to an output surface of the present invention;
Fig. 6A is a view showing longitudinal aberration;
Fig. 6B is a view showing a sag in the radial direction;
Fig. 6C is a view showing an optical pickup lens according to the example 1 related to an output surface;
Figs. 7A to 7D are views showing characteristic values of an optical pickup lens according to an example 2 related to an output surface of the present invention;
Fig. 8A is a view showing longitudinal aberration;
Fig. 8B is a view showing a sag in the radial direction;
Fig. 8C is a view showing an optical pickup lens according to the example 2 related to an output surface;

Figs. 9A to 9D are views showing characteristic values of an optical pickup lens according to an example 3 related to an output surface of the present invention;

Fig. 10A is a view showing longitudinal aberration;

Fig. 10B is a view showing a sag in the radial direction;

Fig. 10C is a view showing an optical pickup lens according to the example 3 related to an output surface;

Figs. 11A to 11D are views showing characteristic values of an optical pickup lens according to an example 4 related to an output surface of the present invention;

Fig. 12A is a view showing longitudinal aberration;

Fig. 12B is a view showing a sag in the radial direction;

Fig. 12C is a view showing an optical pickup lens according to the example 4 related to an output surface;

Figs. 13A to 13D are views showing characteristic values of an optical pickup lens according to a reference example 1 related to an output surface of the present invention;

Fig. 14A is a view showing longitudinal aberration;

Fig. 14B is a view showing a sag in the radial direction;

Fig. 14C is a view showing an optical pickup lens according to the reference example 1 related to an output surface;

Figs. 15A to 15D are views showing characteristic values of an optical pickup lens according to a reference example 2 related to an output surface of the present invention;

Fig. 16A is a view showing longitudinal aberration;

Fig. 16B is a view showing a sag in the radial direction;

Fig. 16C is a view showing an optical pickup lens according to the reference example 2 related to an output surface;

Figs. 17A to 17D are views showing characteristic values of an optical pickup lens according to a reference example 3 related to an output surface of the present invention;

Fig. 18A is a view showing longitudinal aberration;

Fig. 18B is a view showing a sag in the radial direction;

Fig. 18C is a view showing an optical pickup lens according to the reference example 3 related to an output surface;

Figs. 19A to 19D are views showing characteristic values of an optical pickup lens according to a reference example 4 related to an output surface of the present invention;

Fig. 20A is a view showing longitudinal aberration;

Fig. 20B is a view showing a sag in the radial direction;

Fig. 20C is a view showing an optical pickup lens according to the reference example 4 related to an output surface;

Figs. 21A to 21D are views showing characteristic values of an optical pickup lens according to a reference example 5 related to an output surface of the present invention;

Fig. 22A is a view showing longitudinal aberration;

Fig. 22B is a view showing a sag in the radial direction;

Fig. 22C is a view showing an optical pickup lens according to the reference example 5 related to an output surface;

Figs. 23A to 23D are views showing characteristic values of an optical pickup lens according to a reference example 6 related to an output surface of the present invention;

Fig. 24A is a view showing longitudinal aberration;

Fig. 24B is a view showing a sag in the radial direction;

Fig. 24C is a view showing an optical pickup lens according to the reference example 6 related to an output surface;

Figs. 25A to 25D are views showing characteristic values of an optical pickup lens according to a reference example 7 related to an output surface of the present invention;

Fig. 26A is a view showing longitudinal aberration;

Fig. 26B is a view showing a sag in the radial direction;

Fig. 26C is a view showing an optical pickup lens according to the reference example 7 related to an output surface;

Figs. 27A to 27D are views showing characteristic values of an optical pickup lens according to a reference example 8 related to an output surface of the present invention;

Fig. 28A is a view showing longitudinal aberration;

Fig. 28B is a view showing a sag in the radial direction;

Fig. 28C is a view showing an optical pickup lens according to the reference example 8 related to an output surface;

Figs. 29A to 29D are views showing characteristic values of an optical pickup lens according to a reference example 9 related to an output surface of the present invention;

Fig. 30A is a view showing longitudinal aberration;

Fig. 30B is a view showing a sag in the radial direction;

Fig. 30C is a view showing an optical pickup lens according to the reference example 9 related to an output surface;

Figs. 31A to 31D are views showing characteristic values of an optical pickup lens according to a reference example 10 related to an output surface of the present invention;

Fig. 32A is a view showing longitudinal aberration;

Fig. 32B is a view showing a sag in the radial direction;
Fig. 32C is a view showing an optical pickup lens according to the reference example 10 related to an output surface;
Figs. 33A to 33D are views showing characteristic values of an optical pickup lens according to a reference example 11 related to an output surface of the present invention;
Fig. 34A is a view showing longitudinal aberration;
Fig. 34B is a view showing a sag in the radial direction;
Fig. 34C is a view showing an optical pickup lens according to the reference example 11 related to an output surface;
Figs. 35A to 35D are views showing characteristic values of an optical pickup lens according to a reference example 12 related to an output surface of the present invention;
Fig. 36A is a view showing longitudinal aberration;
Fig. 36B is a view showing a sag in the radial direction;
Fig. 36C is a view showing an optical pickup lens according to the reference example 12 related to an output surface;
Figs. 37A to 37D are views showing characteristic values of an optical pickup lens according to a reference example 13 related to an output surface of the present invention;
Fig. 38A is a view showing longitudinal aberration;
Fig. 38B is a view showing a sag in the radial direction;
Fig. 38C is a view showing an optical pickup lens according to the reference example 13 related to an output surface;
Figs. 39A to 39D are views showing characteristic values of an optical pickup lens according to a reference example 14 related to an output surface of the present invention;
Fig. 40A is a view showing longitudinal aberration;
Fig. 40B is a view showing a sag in the radial direction;
Fig. 40C is a view showing an optical pickup lens according to the reference example 14 related to an output surface;
Figs. 41A to 41D are views showing characteristic values of an optical pickup lens according to a reference example 15 related to an output surface of the present invention;
Fig. 42A is a view showing longitudinal aberration;
Fig. 42B is a view showing a sag in the radial direction;
Fig. 42C is a view showing an optical pickup lens according to the reference example 15 related to an output surface;
Figs. 43A to 43D are views showing characteristic values of an optical pickup lens according to an example 5 related to an output surface of the present invention;
Fig. 44A is a view showing longitudinal aberration;
Fig. 44B is a view showing a sag in the radial direction;
Fig. 44C is a view showing an optical pickup lens according to the example 5 related to an output surface;
Figs. 45A to 45D are views showing characteristic values of an optical pickup lens according to a reference example 16 related to an output surface of the present invention;
Fig. 46A is a view showing longitudinal aberration;
Fig. 46B is a view showing a sag in the radial direction;
Fig. 46C is a view showing an optical pickup lens according to the reference example 16 related to an output surface;
Figs. 47A to 47D are views showing characteristic values of an optical pickup lens according to a reference example 17 related to an output surface of the present invention;
Fig. 48A is a view showing longitudinal aberration;
Fig. 48B is a view showing a sag in the radial direction;
Fig. 48C is a view showing an optical pickup lens according to the reference example 17 related to an output surface;
Figs. 49A to 49D are views showing characteristic values of an optical pickup lens according to a reference example 18 related to an output surface of the present invention;
Fig. 50A is a view showing longitudinal aberration;
Fig. 50B is a view showing a sag in the radial direction;
Fig. 50C is a view showing an optical pickup lens according to the reference example 18 related to an output surface;
Figs. 51A to 51D are views showing characteristic values of an optical pickup lens according to a reference example 19 related to an output surface of the present invention;
Fig. 52A is a view showing longitudinal aberration;
Fig. 52B is a view showing a sag in the radial direction;
Fig. 52C is a view showing an optical pickup lens according to the reference example 19 related to an output surface;
Figs. 53A to 53D are views showing characteristic values of an optical pickup lens according to a reference example 20 related to an output surface of the present invention;
Fig. 54A is a view showing longitudinal aberration;
Fig. 54B is a view showing a sag in the radial direction;
Fig. 54C is a view showing an optical pickup lens according to the reference example 20 related to an output surface;
Figs. 55A to 55D are views showing characteristic values of an optical pickup lens according to a reference example 21 related to an output surface of the present invention;
Fig. 56A is a view showing longitudinal aberration;
Fig. 56B is a view showing a sag in the radial direction;
Fig. 56C is a view showing an optical pickup lens according to the reference example 21 related to an output surface;
Figs. 57A to 57D are views showing characteristic values of an optical pickup lens according to a reference example 22 related to an output surface of the present invention;
Fig. 58A is a view showing longitudinal aberration;
Fig. 58B is a view showing a sag in the radial direction;
Fig. 58C is a view showing an optical pickup lens according to the reference example 22 related to an output surface;
Figs. 59A to 59D are views showing characteristic values of an optical pickup lens according to a reference example 23 related to an output surface of the present invention;
Fig. 60A is a view showing longitudinal aberration;
Fig. 60B is a view showing a sag in the radial direction;
Fig. 60C is a view showing an optical pickup lens according to the reference example 23 related to an output surface;
Figs. 61A to 61D are views showing characteristic values of an optical pickup lens according to a reference example 24 related to an output surface of the present invention;
Fig. 62A is a view showing longitudinal aberration;
Fig. 62B is a view showing a sag in the radial direction;
Fig. 62C is a view showing an optical pickup lens according to the reference example 24 related to an output surface;
Figs. 63A to 63D are views showing characteristic values of an optical pickup lens according to a reference example 25 related to an output surface of the present invention;
Fig. 64A is a view showing longitudinal aberration;
Fig. 64B is a view showing a sag in the radial direction;
Fig. 64C is a view showing an optical pickup lens according to the reference example 25 related to an output surface;
Figs. 65A to 65D are views showing characteristic values of an optical pickup lens according to a reference example 26 related to an output surface of the present invention;
Fig. 66A is a view showing longitudinal aberration;
Fig. 66B is a view showing a sag in the radial direction;
Fig. 66C is a view showing an optical pickup lens according to the reference example 26 related to an output surface;
Figs. 67A to 67D are views showing characteristic values of an optical pickup lens according to a reference example 27 related to an output surface of the present invention;
Fig. 68A is a view showing longitudinal aberration;
Fig. 68B is a view showing a sag in the radial direction; and
Fig. 68C is a view showing an optical pickup lens according to the reference example 27 related to an output surface.

DESCRIPTION OF THE PREFERRED EMBODIMENTS

An embodiment of the present invention is described hereinafter in detail with reference to the drawings. In the following embodiment, the present invention is applied to an optical pickup lens used for recording or playing back information on an optical information recording medium.

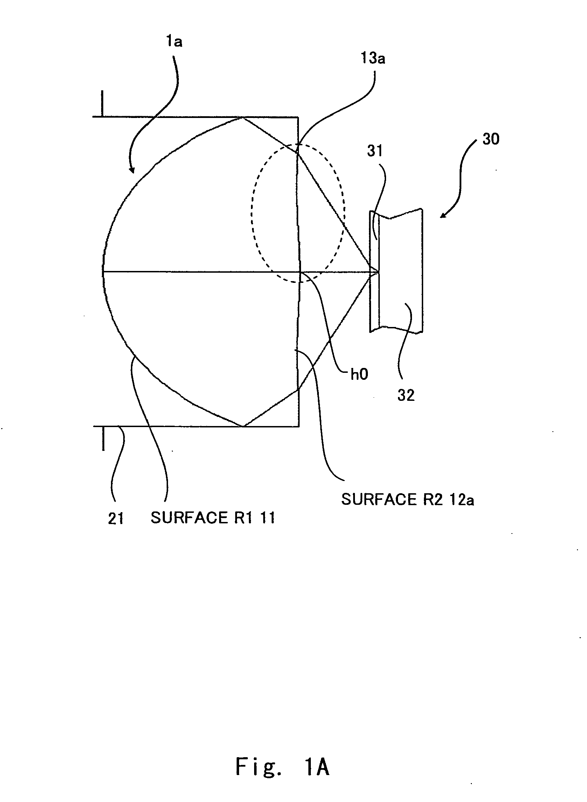

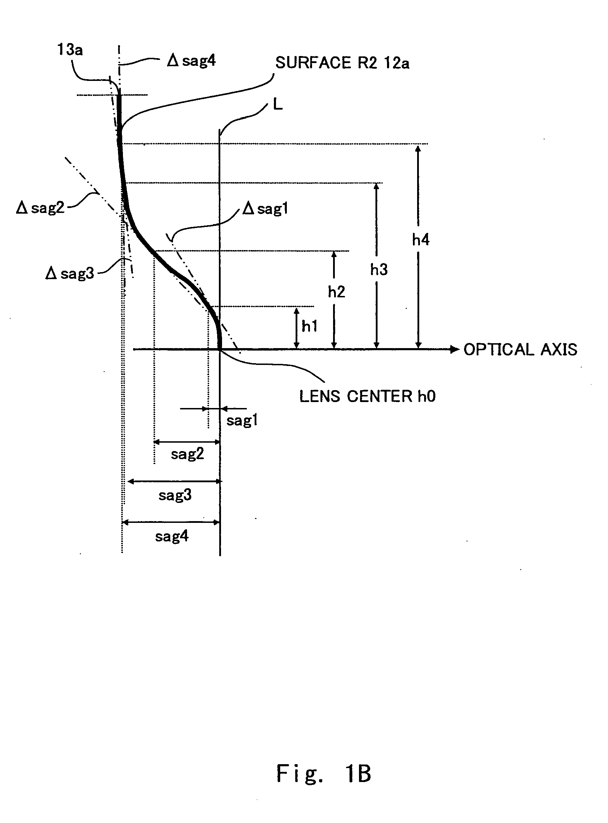

Fig. 1A is a view showing an optical pickup lens according to the embodiment of the present invention. Fig. 1B is a view to describe the sag of the optical pickup lens, which schematically shows a part surrounded by a dotted line in Fig. 1A in an enlarged scale. As shown in Fig. 1A, an optical pickup lens 1a, which is a single lens, of this embodiment has a first surface (which is referred to hereinafter as a surface R1) 11 that is closer to a laser light source and a second surface (referred to hereinafter as a surface R2) 12a that is opposite to the first surface 11 and that faces an optical disc 30 which includes an optical disc substrate 32 and a light transmitting layer 31 in an optical disc. The surface R2 12a has the following shape.

If the lens surface has radius h1 < radius h2 < radius h3 from the center to the periphery of the lens, and changes in sag in the radius h1, the radius h2 and the radius h3 are Δsag1, Δsag2 and Δsag3, respectively, the shape of the surface R2 12a satisfies the following expressions (1) and (2):

$$0 > \Delta sag1 > \Delta sag2 \qquad (1)$$

$$\Delta sag2 < \Delta sag3 \qquad (2)$$

Firstly, a sag and a change in sag (Δsag) are described hereinafter. Fig. 1B schematically shows the surface R2 12a from the center h0 to the periphery 13a. As shown in Fig. 1B, when the optical pickup lens 1 is disposed in such a way that the optical axis and the lens center h0 of the surface R2 are in the corresponding position, the sag is a distance from the normal L to the optical axis on the lens center h0 to the surface R2 in a given radius h. The direction from the surface R1 11 to the surface R2 12a is referred to as positive. A change in sag (Δsag) is the slope of the sag in a given radius h on the surface R2 12a, which is, the slope of the tangent to the surface R2 from the line L in a radius h. An increase in sag from the inside to the outside is referred to as positive, and a decrease is referred to as negative.

In Figs. 1A and 1B, when the sags of the radii h1, h2 and h3 are sag1, sag2 and sag3, respectively, the following relationships are satisfied:

$$h1 < h2 < h3,$$

and

$$sag1 > sag2 > sag3$$

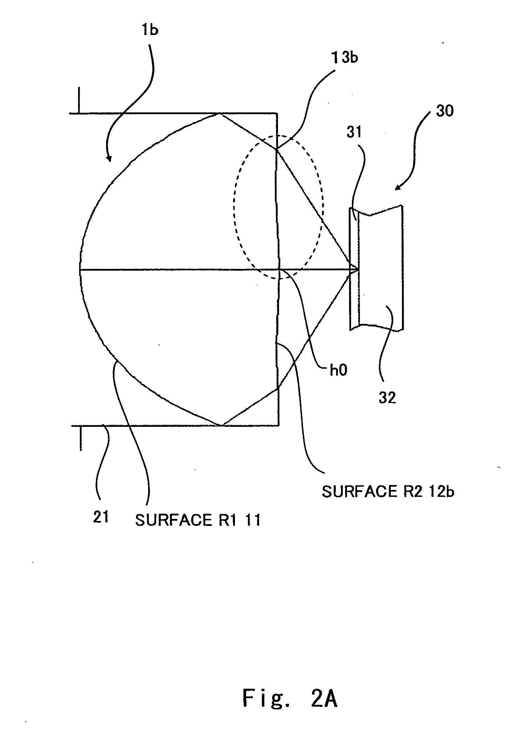

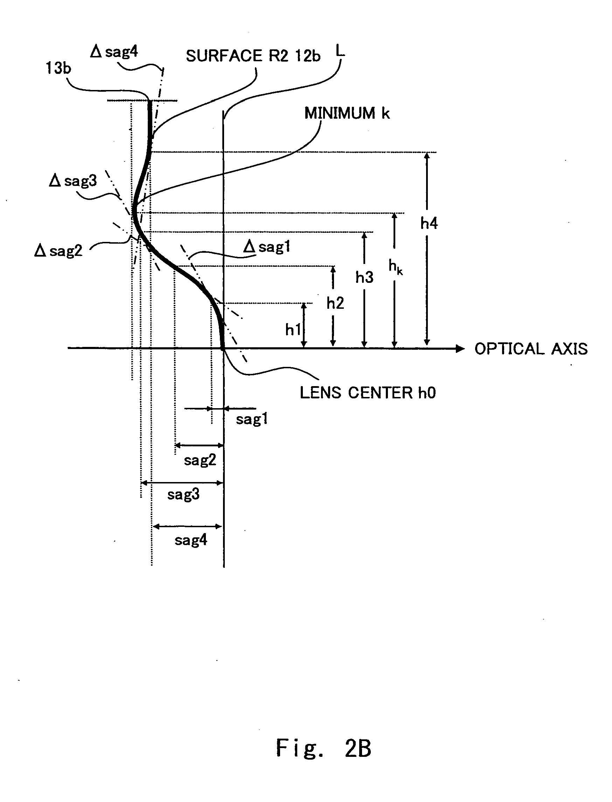

Fig. 2A shows another optical pickup lens according to the embodiment of the present invention. Fig. 2B schematically shows a part within a dotted line in Fig. 2A in an enlarged scale. The optical pickup lens may have the shape shown in Figs. 2A and 2B rather than the shape shown in Figs. 1A and 1B described above. Specifically, as shown in Figs. 2A and 2B, a surface R2 12b has the shape which satisfies the above-described expressions (1) and (2) and further has a minimum value k (radius $h_k$).

Having the minimum value means that, when the lens has radii h1<h2<h3<h4 with sag1, sag2, sag3 and sag4, respectively, the following relationships are satisfied:

$$sag1 > sag2 > sag3 \qquad (3)$$

$$sag3 < sag4 \qquad (4)$$

Specifically, the surface R2 12b has the radii h1 to h4 which satisfy the expressions (3) and (4).

Further, if the lens radii h1, h2, h3 and h4 satisfy h1<h2<h3<h4, and changes in sag in the radii h1, h2, h3 and h4 are Δsag1, Δsag2, Δsag3 and Δsag4, respectively, the shape of the surface R2 12b satisfies the following expression (5) as well as the expressions (1) and (2):

$$0 > \Delta sag1 > \Delta sag2 \qquad (1)$$

$$\Delta sag2 < \Delta sag3 < 0 \qquad (2)$$

$$\Delta sag4 > 0 \qquad (5)$$

Then, when the effective diameter of the surface R2 is represented as a radius B (mm), if the refractive index n and the radius $h_k$ are substituted into the relational expression of $(1-h_k/B)=3.572*n+(D-5.358)$, D is in the range of $-0.3 \leq D \leq 0.3$.

In Figs. 1A and 1B, the lens surface is convex-shaped in its center part, with the slope (Δsag) being gradual, then abrupt and gradual again from the lens center h0 to the outside. In Figs. 2A and 2B, the lens surface further has a concave-shaped portion in its periphery, with concave and convex shapes alternately arranged in the radial direction. Specifically, the surface R2 12b of the optical pickup lens 1b shown in Figs. 2A and 2B has the shape in which the center part is convex and the peripheral part is concave.

The surface R2 of the optical pickup lenses shown in Figs. 1A to 2B has a continuous shape, and there is no ring-zone structure with steps like a diffraction lens. However, two or three steps may be formed without departing from the technical gist of the present invention. The surface R1 may have a continuous shape or a ring-zone structure with steps.

The surface R2 of the optical pickup lens may have any shape as long as the slope is continuous, including the shape where the surface R2 is continuous and the shape where the continuous shape of the surface R2 is shifted in parallel along the optical axis in a part of the lens surface.

With the surface R2 12a or 12b having such a shape, the following advantages are obtained. A general pickup lens is a biconvex lens having convex surfaces on both sides or a meniscus lens composed of a convex lens and a concave lens. Each lens has different features. Specifically, the working distance (WD), which is a distance from the center of the surface R2 to the optical disc 30, is shorter in the meniscus lens than in the biconvex lens because the surface R2 of the meniscus lens is concave. On the other hand, the angle of view characteristics, which are the off-axis characteristics, are better in the meniscus lens than in the biconvex lens because the both surfaces of the meniscus lens are curved in the same direction.

On the other hand, because the optical pickup lenses 1a and 1b of this embodiment have a concave portion in the periphery and a convex portion in the center, they satisfies the both features of the meniscus lens and the biconvex lens. Specifically, the optical pickup lenses 1a and 1b have a long working distance and achieve good angle of view characteristics as off-axis characteristics while maintaining good on-axis characteristics.

Thus, in the optical pickup lens 1a shown in Figs. 1A and 1B, the sag increases gradually from the center h0 toward the periphery 13a along the radius of the surface R2 12a and, after reaching a certain radius, which is the radius h3 in the example of Fig. 1B, the sag does not substantially change. Further, in the optical pickup lens 1b shown in Figs. 2A and 2B, the sag increases gradually from the center h0 toward the periphery 13b along the radius of the surface R2 12b and, after reaching a certain radius, which is the radius h4 in the example of Fig. 2B, the sag decreases gradually to the periphery 13b. The part of the lens which is inside of the position where the increase or decrease amount of the sag changes has the characteristics of a biconvex lens, and the part of the lens which is outside of that position has the characteristics of a meniscus lens.

Specifically, because the center part of the lens serves as a biconvex lens, the working distance is long, and because a curvature radius is not very large, the angle of view characteristics are good in spite of being a biconvex lens. Further, because the part of the lens which is outside of the position where the increase or decrease amount of the sag changes, which is the peripheral part of the surface R2, has the feature of a meniscus lens, good angle of view characteristics, which are the advantage of the meniscus lens, can be obtained. Furthermore, because the portion which corresponds to a meniscus lens is formed not in the center part of the lens but in the peripheral part of the lens, the working distance is not shortened. In this manner, the optical pickup lenses 1a and 1b of this embodiment have a substantially flat or concave portion in the outer part to exert the characteristics of a meniscus lens and further have a convex portion in the inner part to exert the characteristics of a biconvex lens, thereby maintaining a long working distance and achieving good angle of view characteristics as well as good on-axis characteristics. The radii h1 to h4 in Figs. 1B and 2B are preferably located in the region through which a laser light beam passes.

Although the optical pickup lens 1a has a meniscus shape in the part outside of the position of the radius h3 where the sag increase/decrease amount changes as shown in Figs. 1A and 1B, the optical pickup lens 1b has an extreme meniscus shape having a minimum value k as shown in Figs. 2A and 2B. Such a shape ensures a longer working distance and better angle of view characteristics as off-axis characteristic and on-axis characteristics.

When the optical pickup lenses 1a and 1b are used in a recording and/or playback pickup apparatus which uses a laser with a wavelength of 410 nm or shorter as a light source used in an optical head or an optical disc apparatus, it is preferred to satisfy the following expressions:

$$0.84 \leq NA$$

$$0.9 \leq d/f \leq 1.2$$

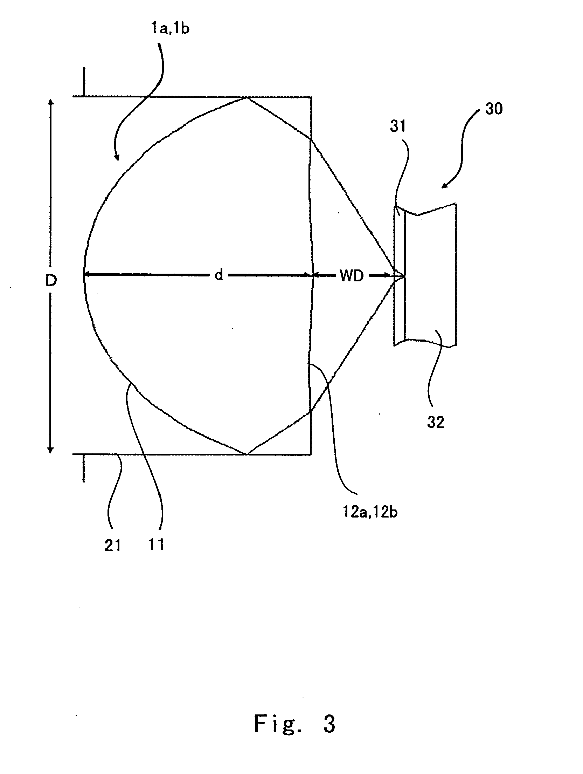

where NA is a numerical aperture of the optical pickup lens, d is a single lens center thickness of the optical pickup lens (cf. Fig. 3), and f is s focal length.

If the numerical aperture NA is smaller than 0.84, the effective diameter of the surface R2 becomes smaller.

If the effective diameter of the surface R2 becomes smaller, it becomes difficult to form the boundary between a biconvex lens portion and a meniscus lens portion in the peripheral part of the surface R2 as described above. Therefore, the numerical aperture NA is preferably 0.8 or larger and more preferably 0.84 or larger.

In order to increase the working distance, it is generally preferred to reduce the center thickness d and lower the refractive index n. On the other hand, in order to set the numerical aperture NA to be 0.84 or larger, increase the working distance and improve the angle of view characteristics, it is preferred to regulate the lens performance, which is the relationship d/f between the focal length f and the center thickness d.

The reason that d/f is preferably 0.9 or larger is as follows. If the focal length f is a fixed value, the value of d/f decreases as the center thickness d becomes smaller. The decrease in d/f results in reduction of the distance between the surface R1 and the surface R2 in the peripheral edge, which is called the edge thickness. The reduction of the edge thickness causes a problem such as edge cracking, which makes it difficult to mount the lens. Further, because f=h/NA (f: a focal length, h: a radius), the relationship of d/f=d*NA/h is satisfied. Because the numerical aperture NA is preferably 0.84 or larger, if NA is set to be a fixed value, the value of d/f decreases as the radius is larger, and it is thus necessary to increase the center thickness d accordingly so as to maintain a sufficient edge thickness. It is therefore preferred to set the value of d/f to be 0.9 or larger.

If the value of d/f is 1.2 or smaller, the shape of the surface R2 can be formed easily. It is therefore preferred to set the value of d/f to be 1.2 or smaller.

Setting the numerical aperture NA to be 0.84 or larger and the value of d/f to be 0.9 or larger makes it easy to design the optical pickup lens having the shape shown in Figs. 1A to 2B, ensuring a long working distance and good angle of view characteristics as well as good on-axis characteristics.

The refractive index is preferably set to be 1.51≤n≤1.64 where n is a refractive index for a blue-violet laser with a wavelength of 405 nm. If the refractive index n is smaller than 1.51, a curvature is larger compared with a lens having the same center thickness and a larger refractive index, which causes reduction of the edge thickness, which is a distance between the peripheral edges of the surface R1 and the surface R2. It is therefore preferred that the refractive index is 1.51 or larger.

On the other hand, if the refractive index n is larger than 1.64, it is difficult to maintain the shape of the surface R2 of the present invention which has both the features of a biconvex lens and a meniscus lens, and it becomes closer to a regular meniscus lens. It is therefore preferred that the refractive index is 1.64 or smaller. However, the refractive index n can be larger than 1.64 if the center part of the surface R2 is convex and the peripheral part is concave.

It is further preferred that the refractive index is set to be 1.59≤n≤1.62. Setting the refractive index n in the range of 1.59 to 1.62 makes it easy to design the optical pickup lens having the shape shown in Figs. 2A and 2B. It is therefore further preferred to set the refractive index in the range of 1.59 to 1.62.

Setting the refractive index n in the range of 1.51 to 1.64 or, more preferably, the range of 1.59 to 1.62 makes it possible to design the optical pickup lens having the shapes shown in Figs. 1A to 2B easily. It is thereby possible to ensure a long working distance and improve the on-axis characteristics and the angle of view characteristics. The optical pickup lens has a practical lens diameter.

It is also preferred that the effective diameter D (cf. Fig. 3) is set to be 1.8≤D≤3.2 mm. If the effective diameter D is larger than 3.2 mm, the working distance is too long, making it difficult to manufacture the lens. If, on the other hand, the effective diameter D is smaller than 1.8 mm, the working distance is too short and it is not practical. It is therefore preferred that the effective diameter D is in the range of 1.8 mm to 3.2 mm.

It is also preferred that the tangent angle α of the surface R1, which is one of the two surfaces of a single lens (optical pickup lens) that is closer to a laser light source, is 60°≤α. As the tangent angle α becomes larger, the sag of the surface R1 increases and the sag of the surface R2 decreases accordingly, which makes it easy to manufacture the shape of the optical pickup lens shown in Figs. 1A, 1B and 2A, 2B. On the other hand, if the tangent angle α is smaller than 60 degrees, the sag of the surface R1 decreases and the sag of the surface R2 increases accordingly. This makes it difficult to manufacture the shape of the surface R2 and deteriorates the angle of view characteristics. It is therefore preferred that the tangent angle α of the surface R1 is 60° or larger. It is thereby possible to facilitate the manufacture of the shape of the surface R2 and obtain good angle of view characteristics and good on-axis characteristics.

It is further preferred that the Abbe number νd is 50≤νd. As the lens has a larger Abbe number, chromatic aberration improves in the pickup lens. The chromatic aberration indicates a displacement of the best spot position when a wavelength is deviated by +1 nm each. In the pickup lens, a laser power is turned up when performing recording. The increase in laser power causes a temporal deviation of the wavelength to be longer. If the best spot position is displaced during recording, tracking can be deviated and recording on the best spot position becomes difficult. It is thus necessary to increase the Abbe number in order to maintain good recording characteristics. The Abbe number is inversely proportional to the refractive index. The refractive index is preferably 1.51≤n≤1.64 as described earlier, and with the refractive index in the above range, the Abbe number is about 50≤νd≤81. Therefore, the Abbe number is preferably 50 or larger, and more preferably 60 or larger.

In the case where the optical pickup lens with NA of 0.85 is designed so as to satisfy the sine conditions as much as possible and the refractive index at a wavelength of 405 nm is in the range of 1.50 to 1.65, the maximum tangent angle of the surface of the optical pickup lens facing the laser light source exceeds 60° or even 70° in some cases.

Regarding the relationship between the incident angle and the transmittance to the flat plate with a refractive index of n=1.52, when the incident angle is 56.7 degrees, the incident angle is called Brewster's angle. Brewster's angle is the angle at which the transmittance of a P-wave is 100%, and the transmittance of a S-wave is 80% or higher at this time. Because the transmittance as generally referred to is the average of the transmittance of the P-wave and the transmittance of the S-wave, if the incident angle is more acute Brewster's angle, the transmittance of the P-wave, not only the S-wave, decreases, and the average of them also decreases significantly.

In the case of the flat plate, if an anti-reflection coating is deposited using a two-layer film made of different materials, it is possible to maximize the transmittance of one wavelength. If the film obtained by such plate design is deposited on the pickup lens, it is possible to obtain the transmittance performance as designed until the incident angle to the pickup lens surface of laser light is close to Brewster's angle.

However, in the optical pickup lens with the incident angle exceeding Brewster's angle, the transmittance performance cannot be obtained. Therefore, in the optical pickup lens with NA of 0.85, even if the anti-reflection coating which maximizes the transmittance when deposited on the flat plate is deposited on the optical pickup lens, the transmittance decreases significantly when the incident angle exceeds Brewster's angle, thus unable to function as the anti-reflection coating.

In light of the above, it is preferred to design an anti-reflection coating of three or more layers on the lens surface facing the laser light source of the optical pickup lens with NA of 0.85, and the material to be used may be as follows, for example, and a commercial item partly containing those materials may be used.

$AlF_3$, AlN, $Al_2O_3$, $BaF_2$, BeO, $Bi_2O_3$, $BiF_3$, $CaF_2$, CdSe, CdS, CdTe, $CeF_3$, $CeO_2$, Csl, $Cr_2O_3$, $DyF_2$, $Fe_2O_3$, GaAs, $GdF_3$, $Gd_2O_3$, Ge, $HfO_2$, $HoF_3$, $In_2O_3$, ITO, $LaF_3$, $La_2O_3$, LiF, $MgF_2$, MgO, NaF, $Na_3AlF_6$, $Na_5Al_3F_{14}$, $Nb_2O_5$, $NdF_3$, $Nd_2O_3$, $PbCl_2$, $PbCl_2$, $PbF_2$, PbTe, PbO, PbS, $Pr_6O_{11}$, $Sb_2S_3$, $Sb_2O_3$, $SC_2O_3$, Si, $Si_3N_4$, SiO, $Si_2O_3$, $SiO_2$, $SnO_2$, $SrO_2$, $SrF_2$, Te, Ti, TiN, TiNxWv, $TiO_2$, TlCl, $ThF_4$, $ThO_2$, $V_2O_5$, $WO_3$, $YF_3$, $Y_2O_3$, $YbF_3$, $Yb_2O_3$, ZnO, ZnS, ZnSe, $ZrO_2$

The reason to design the anti-reflection coating of three or more layers, rather than two layers, is because the optimal conditions of the transmittance change between light incident on the center of the lens and light obliquely incident on the periphery of the lens when laser light is incident on the lens surface facing the laser light source due to a large difference in the thickness of the thin film along the normal to the lens surface facing the laser light source.

Therefore, the optimal conditions of the transmittance of light incident on the center of the lens and light obliquely incident on the periphery of the lens are adjusted by adding another layer to the two-layer film. Further, in the design of the anti-reflection coating, the refractive index of the surface in contact with the air needs to be lower than that of the lens material in this embodiment. By adding the anti-reflection coating described above, it is possible to fabricate the optical pickup lens with NA of 0.85 having good transmittance performance.

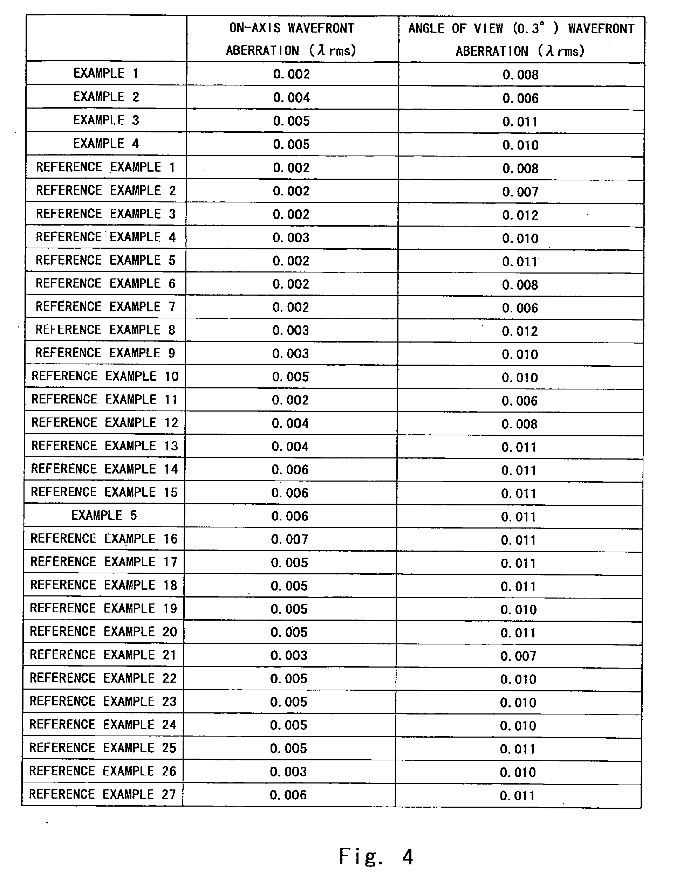

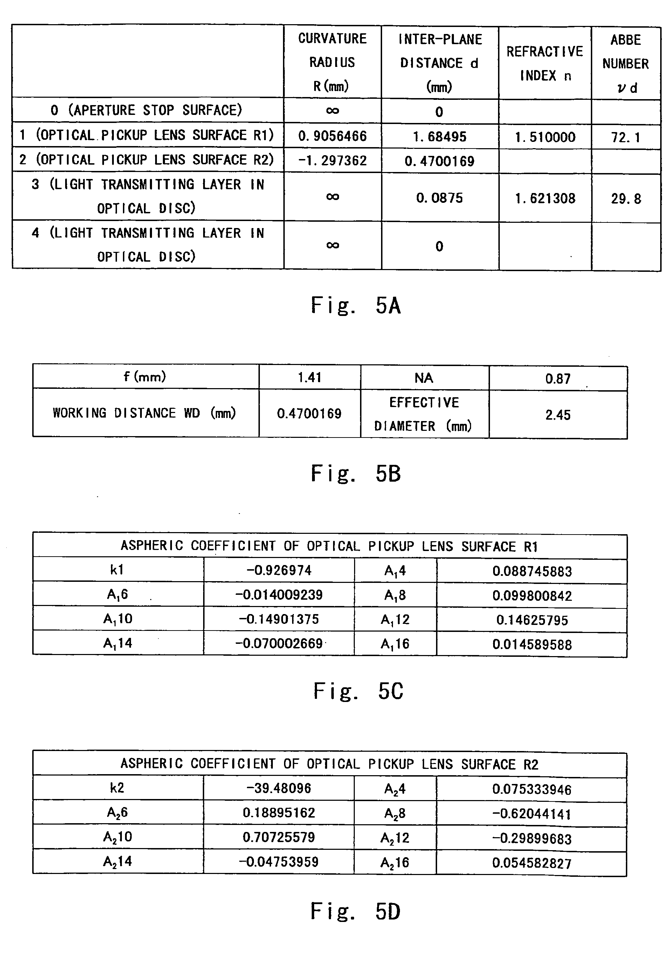

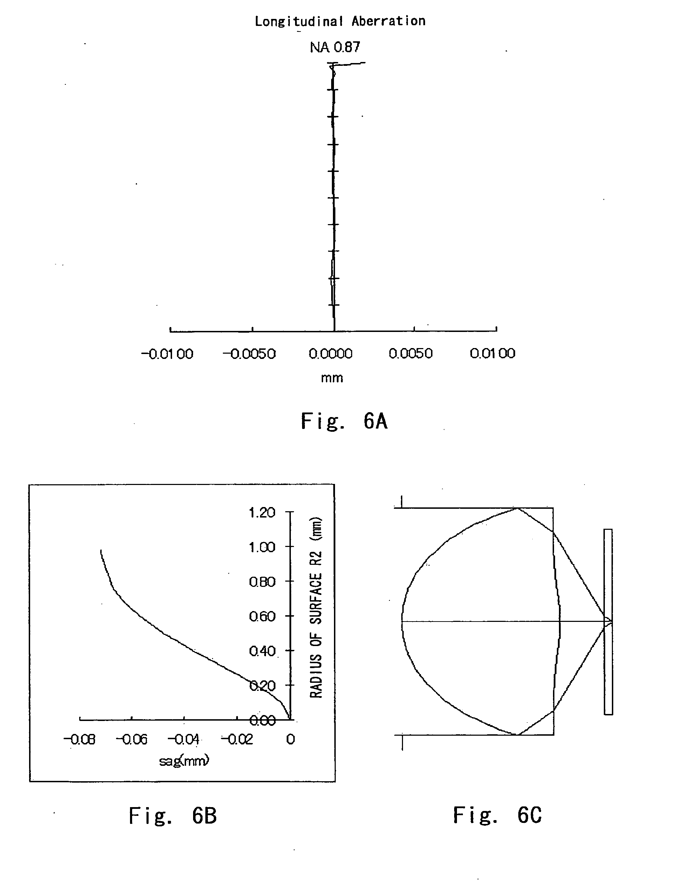

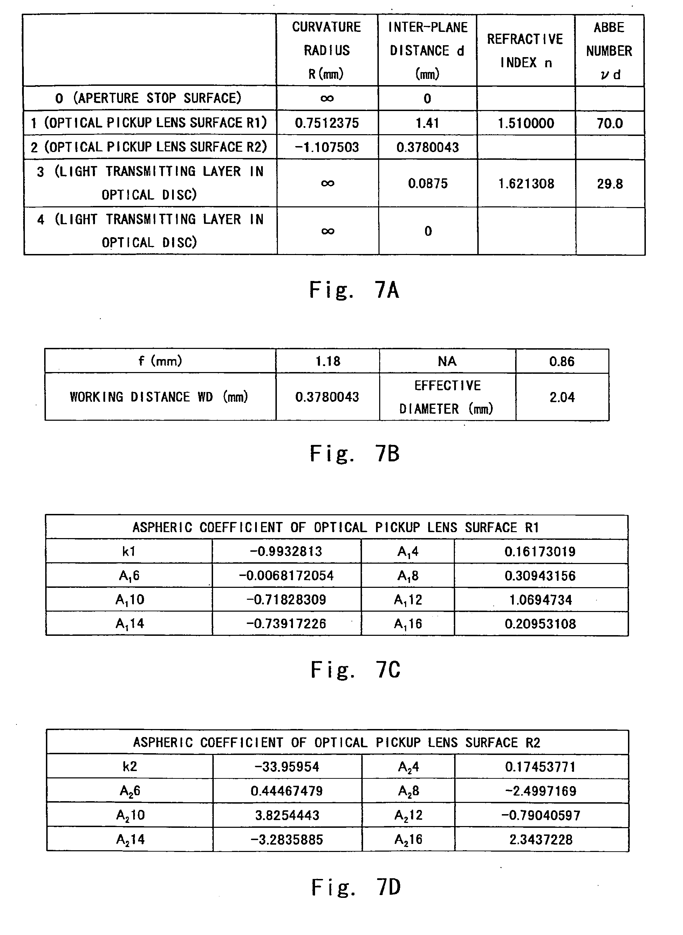

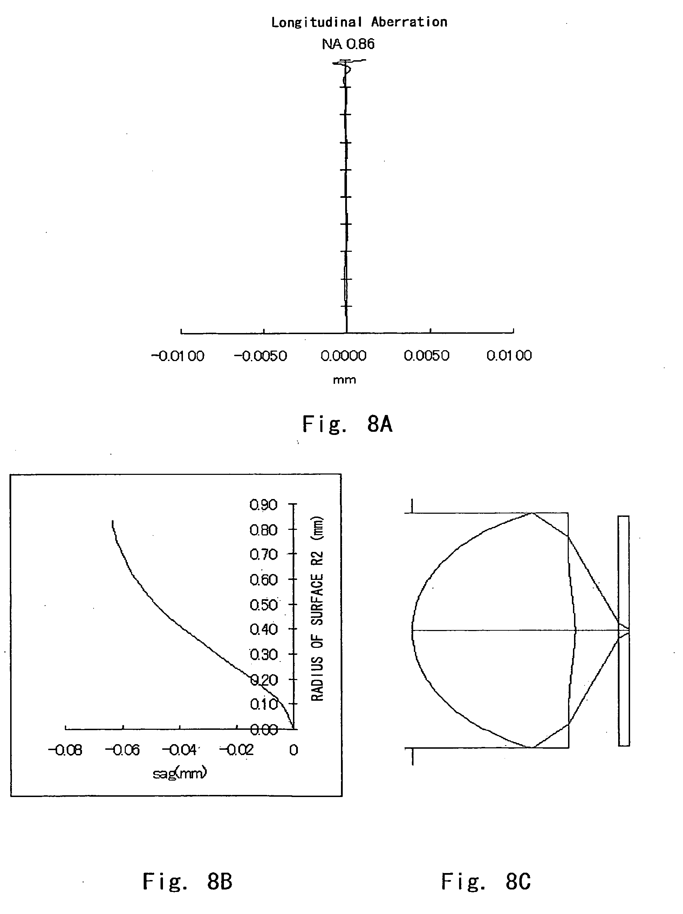

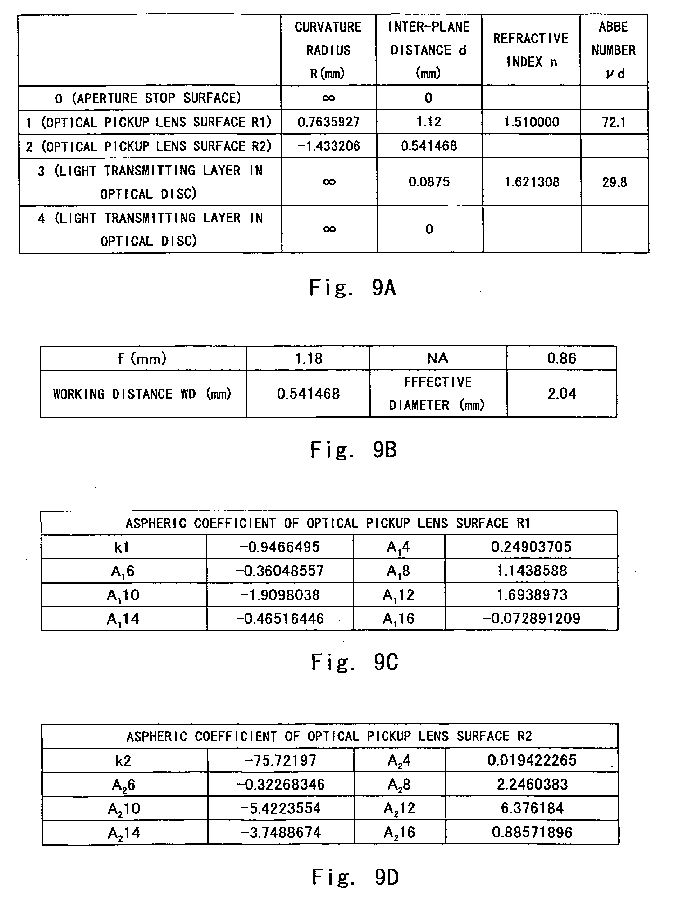

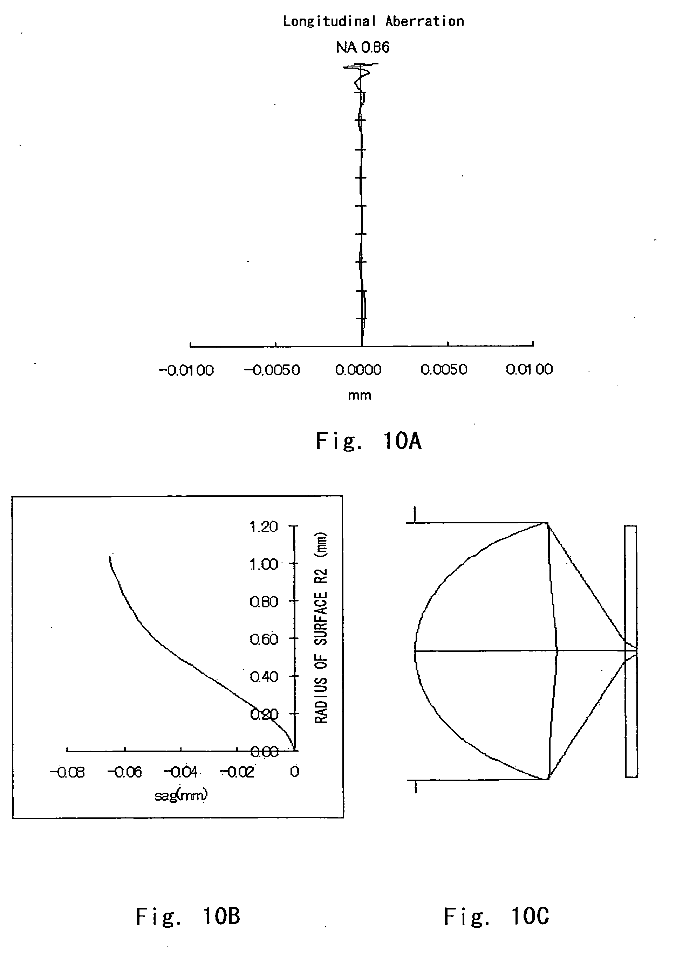

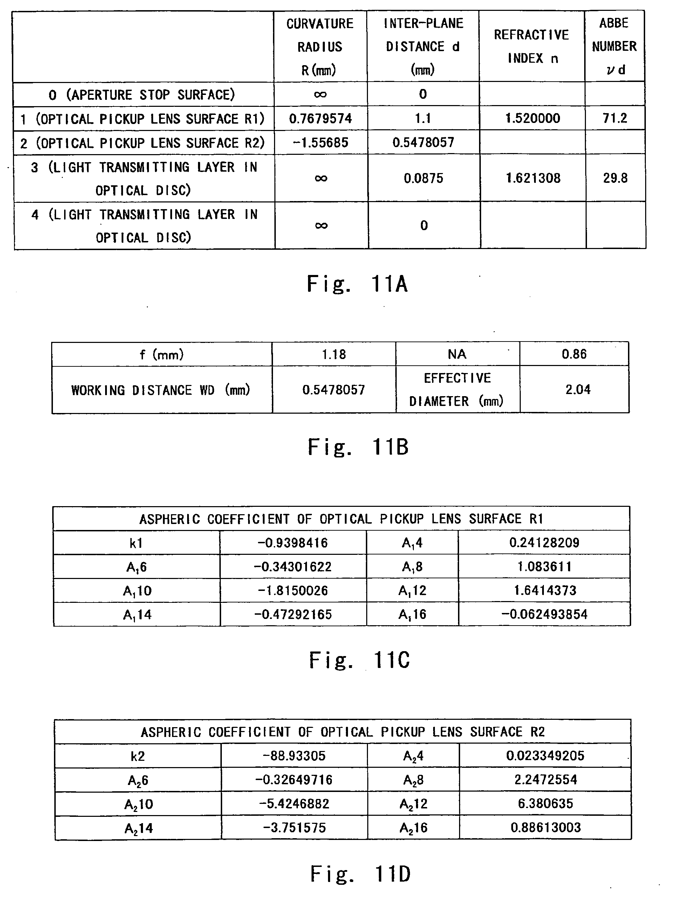

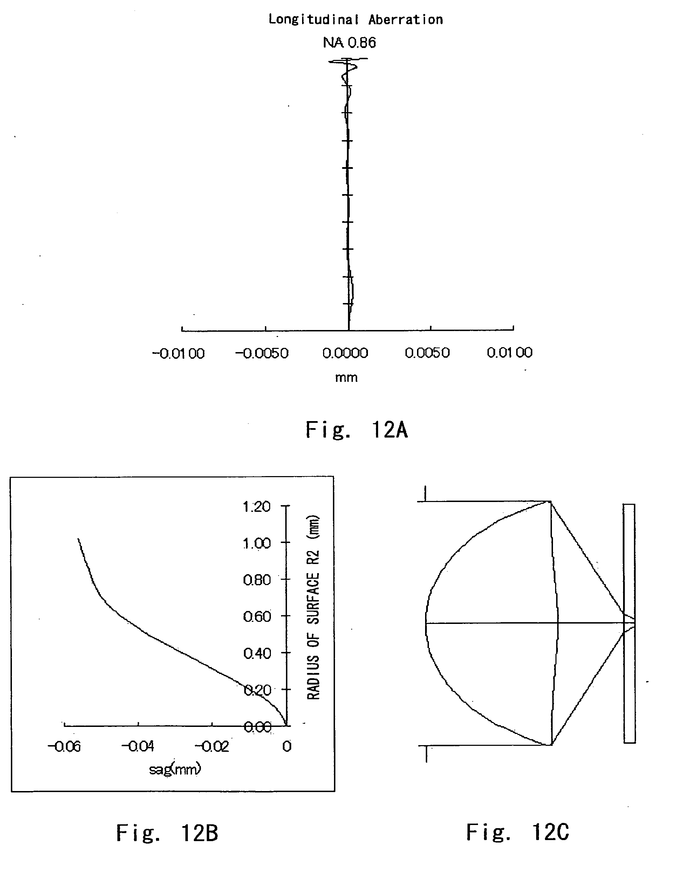

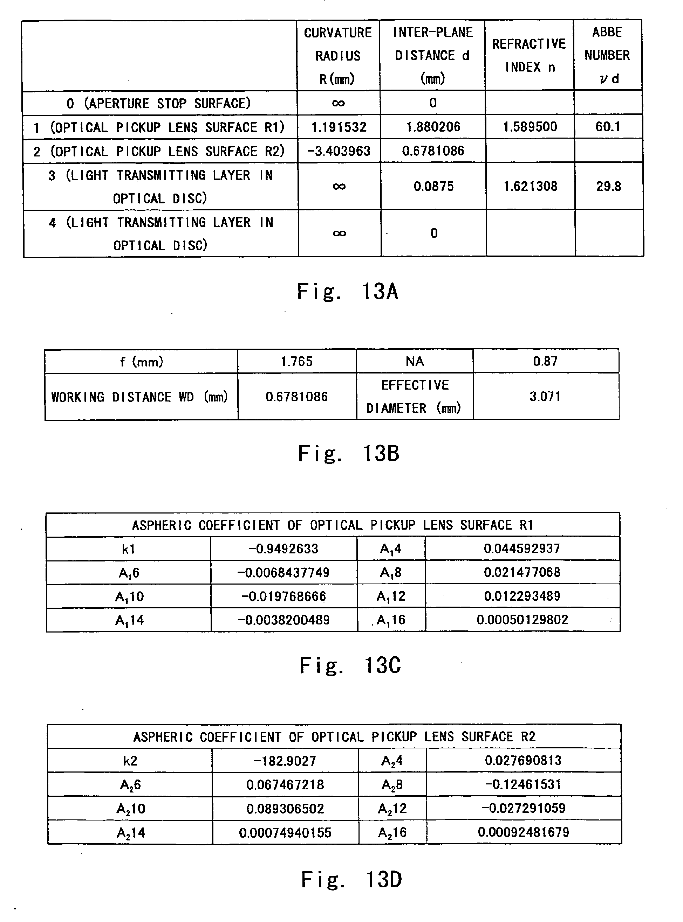

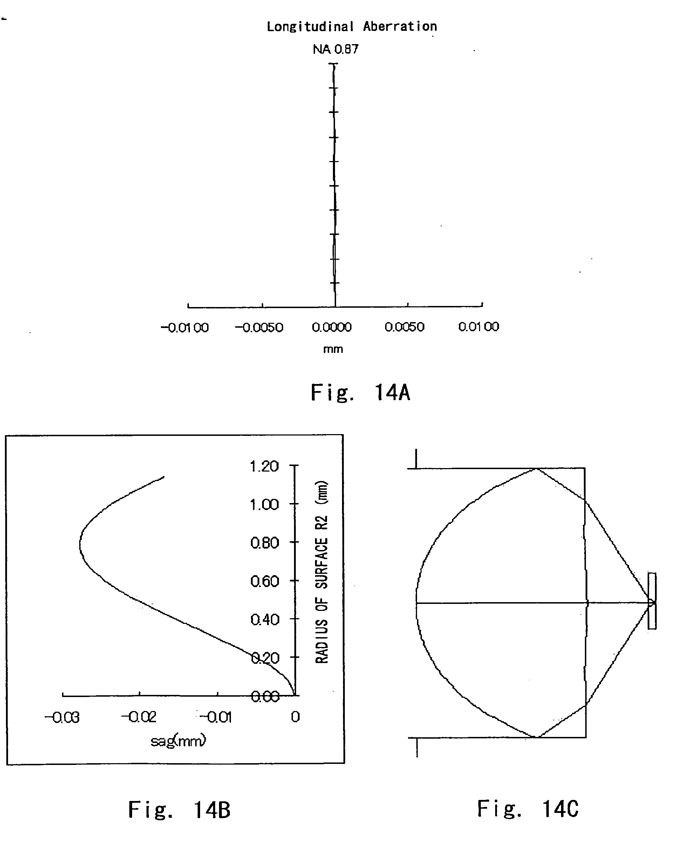

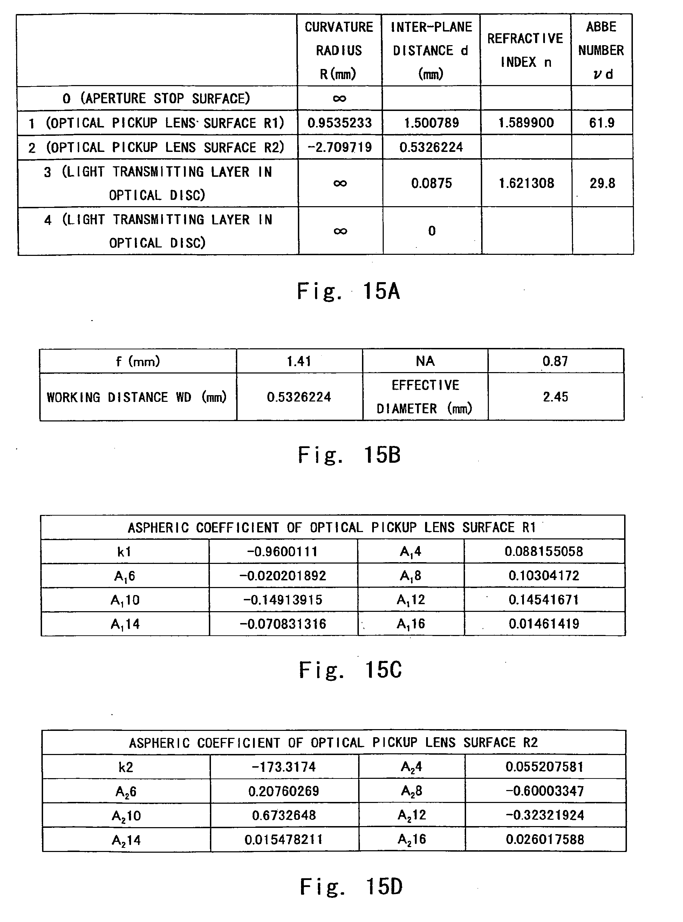

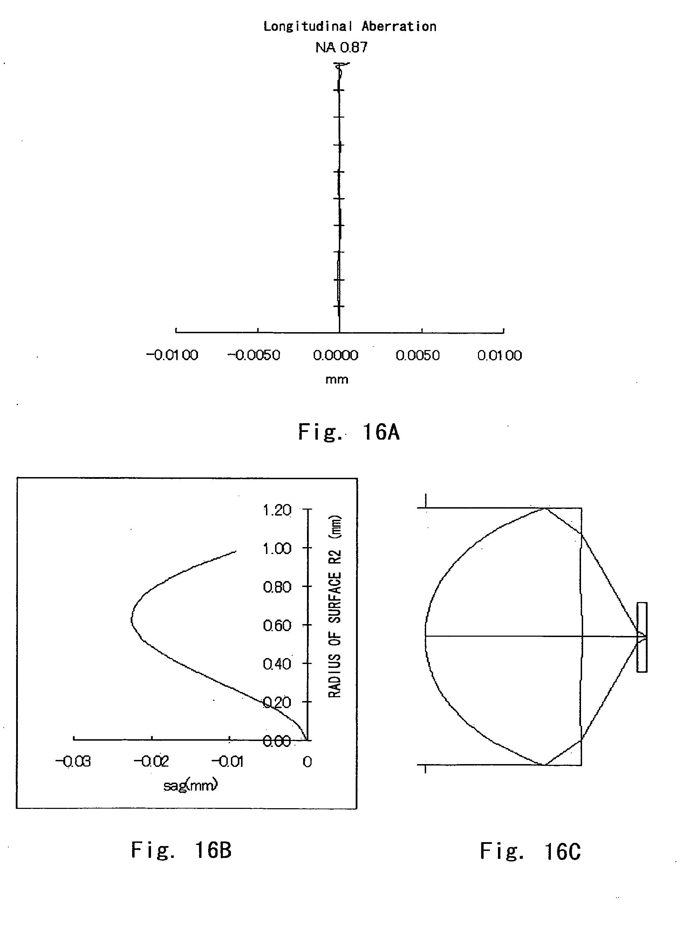

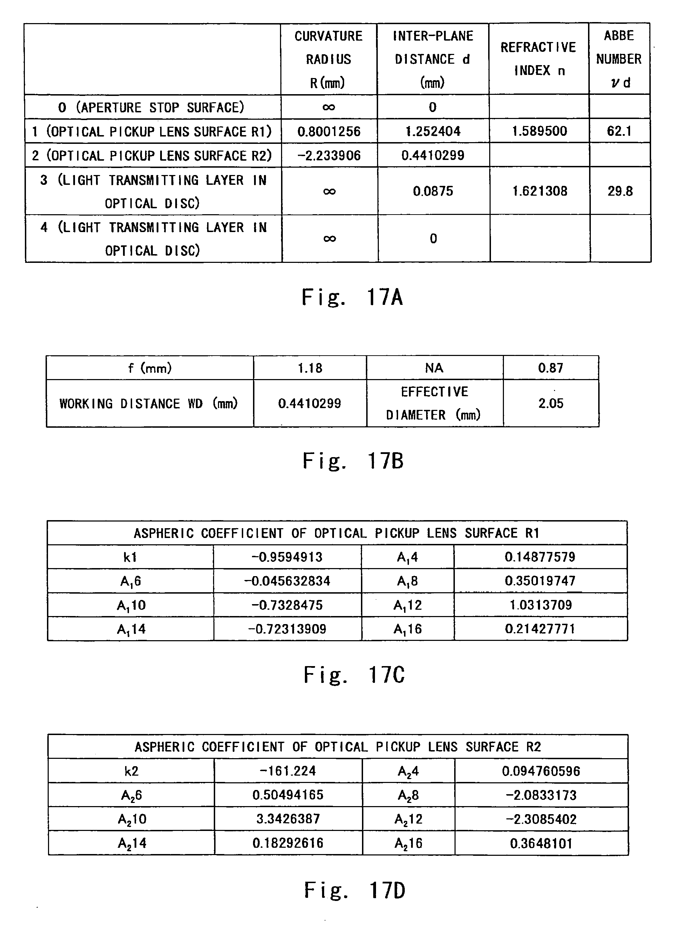

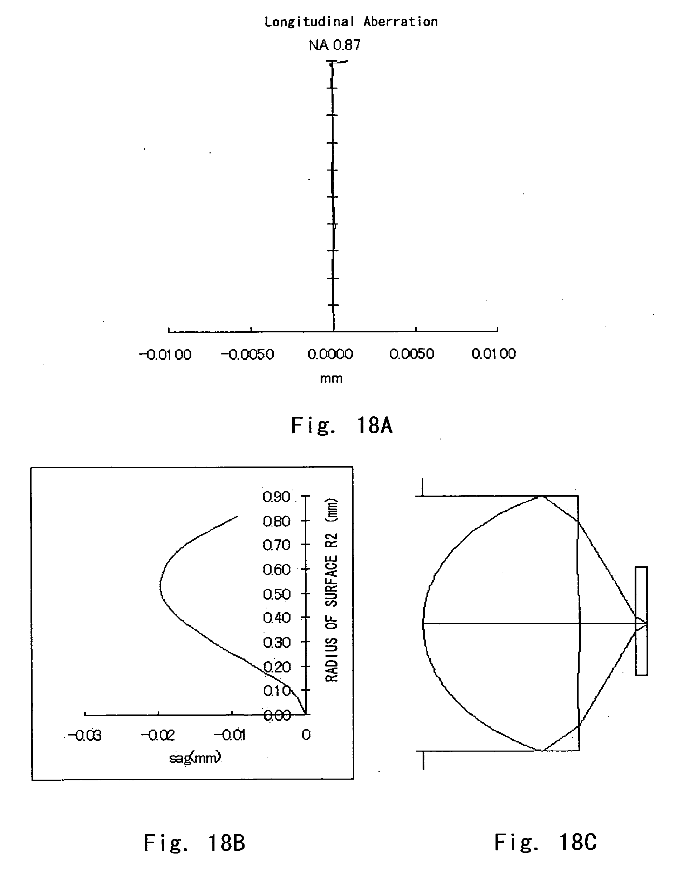

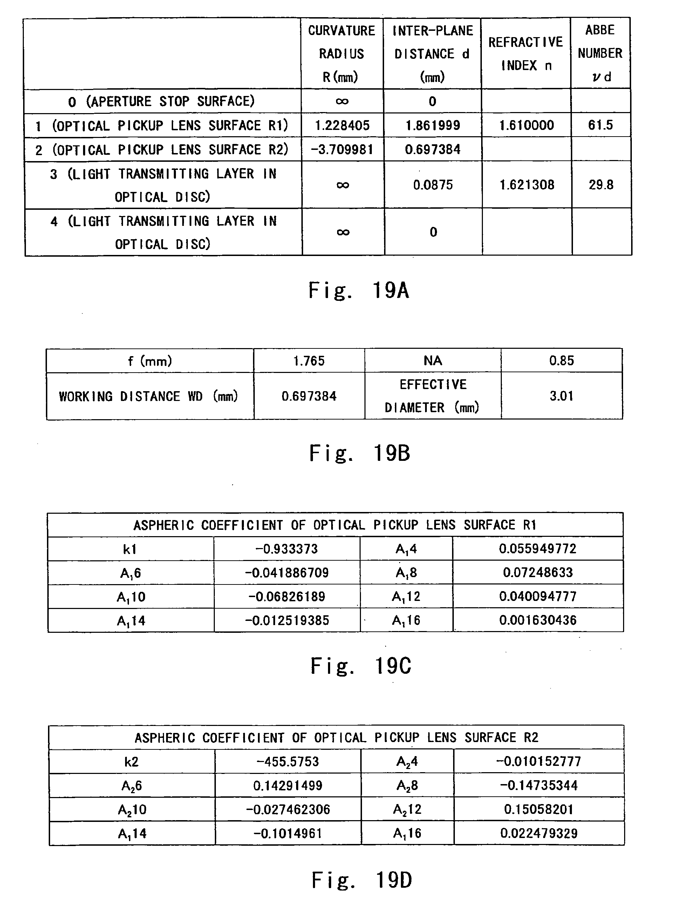

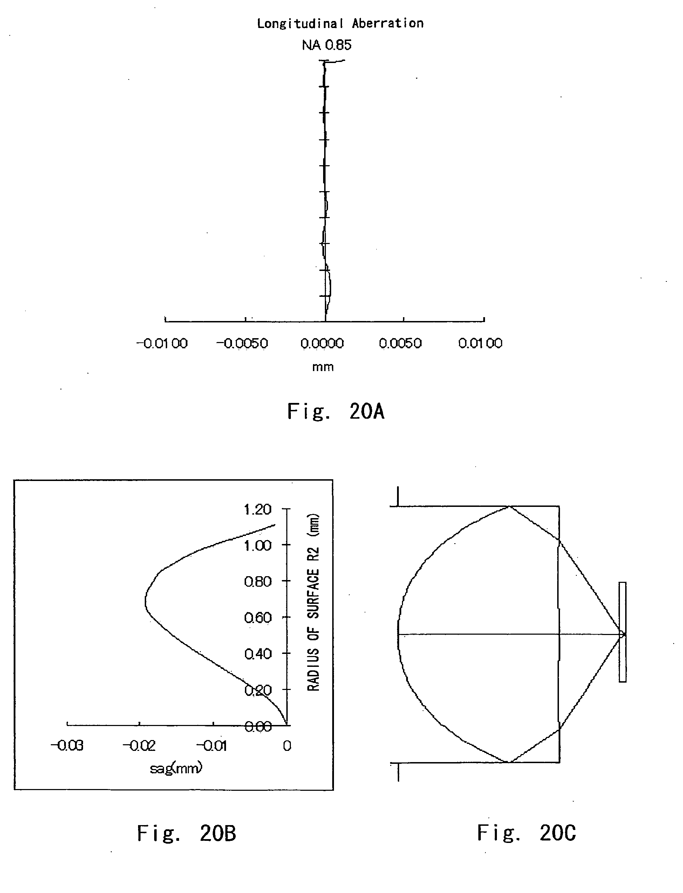

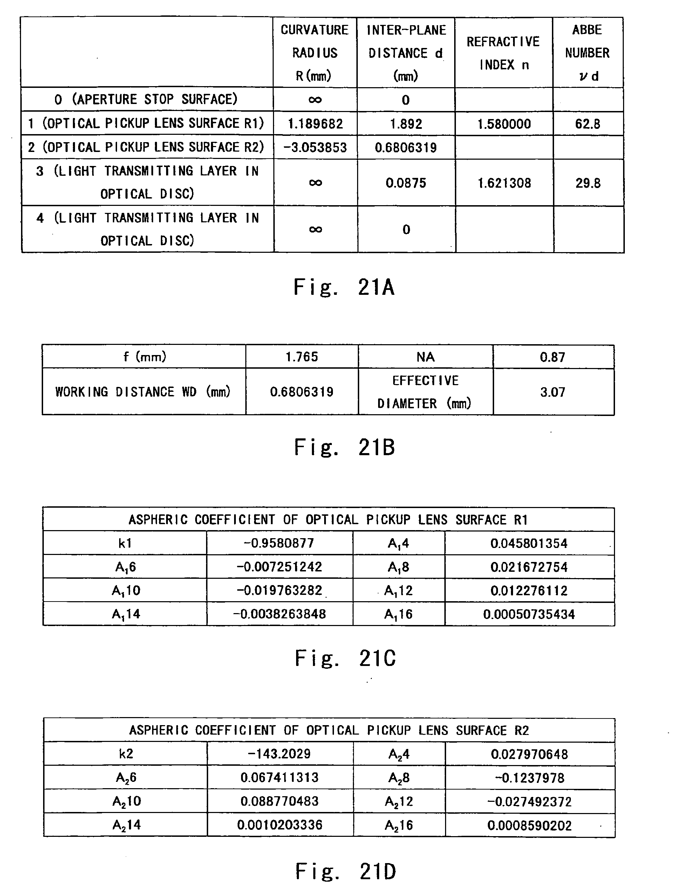

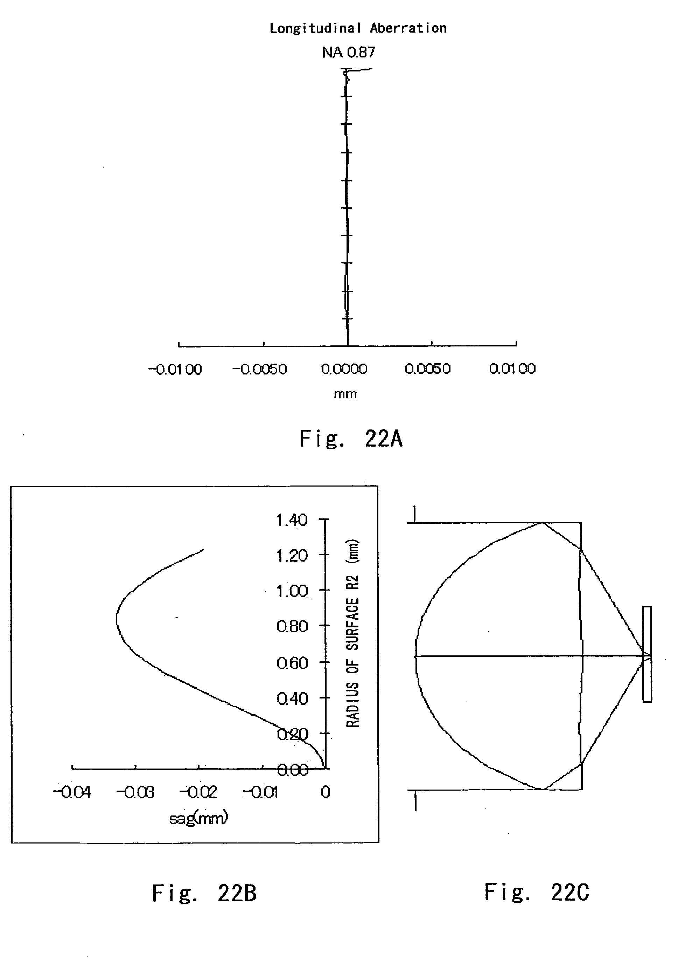

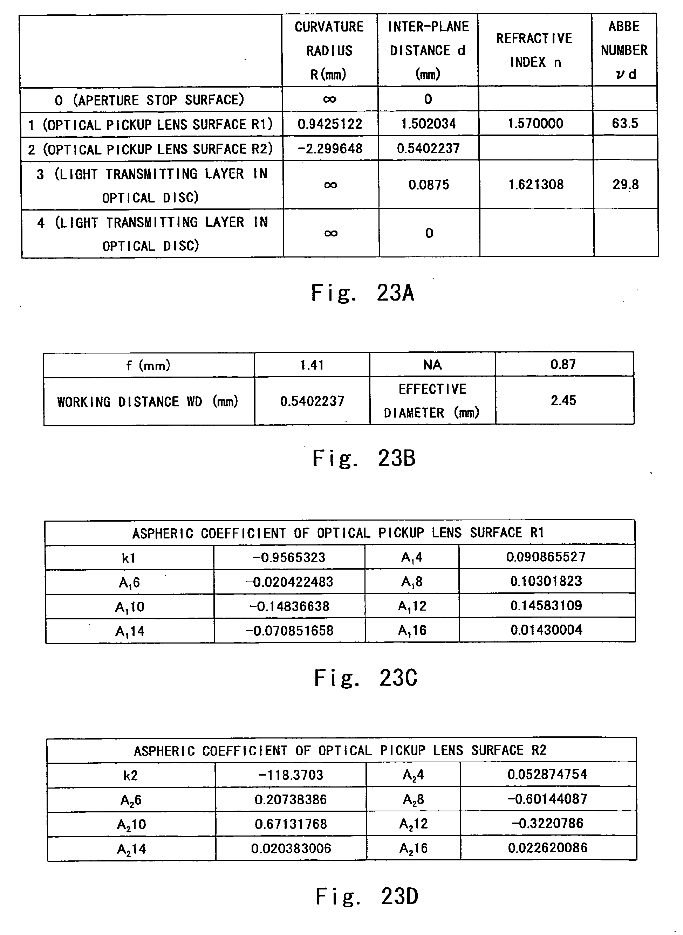

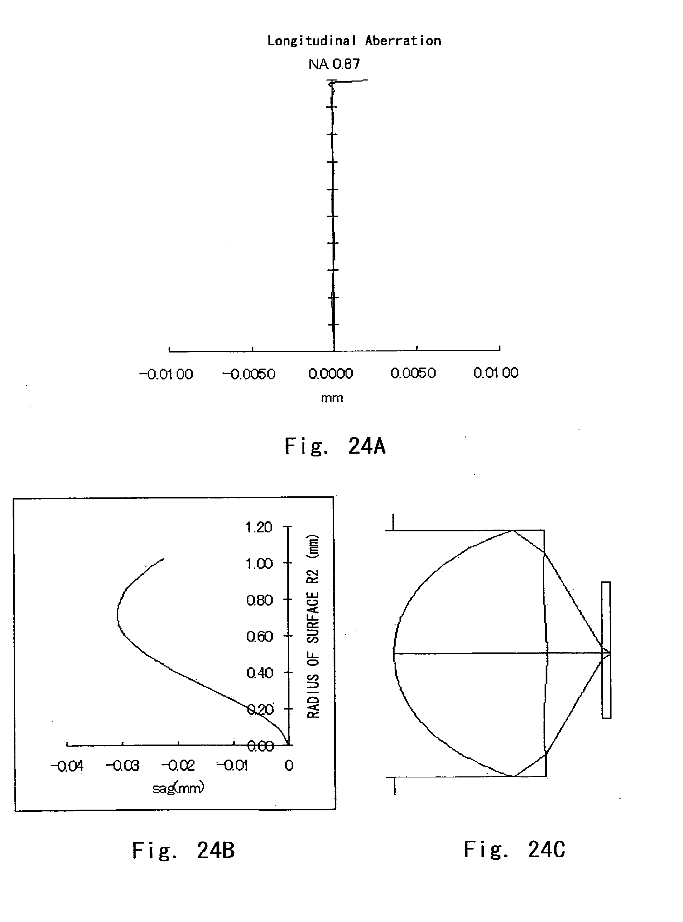

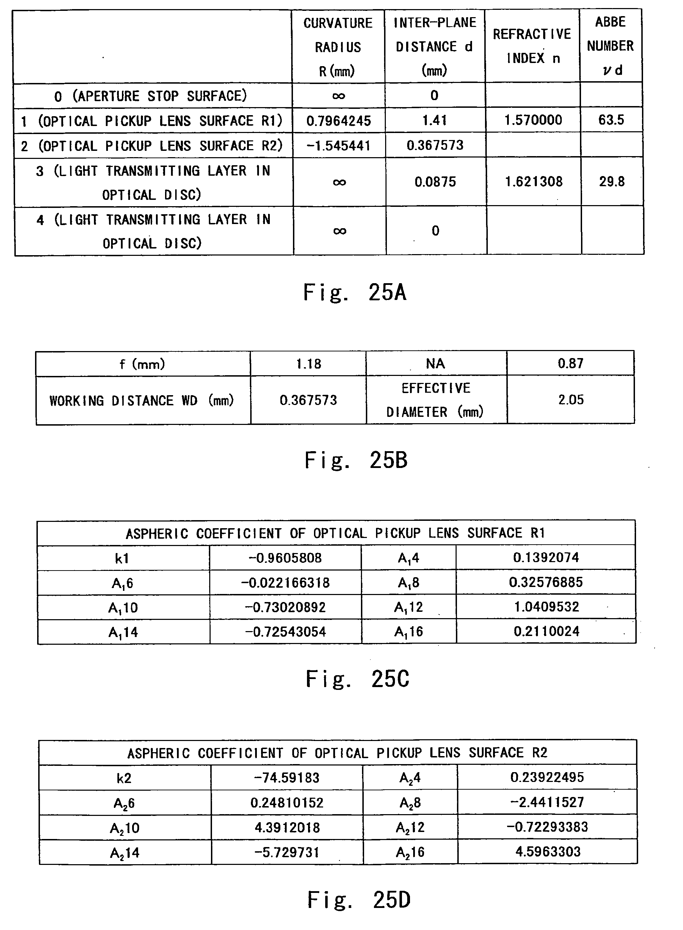

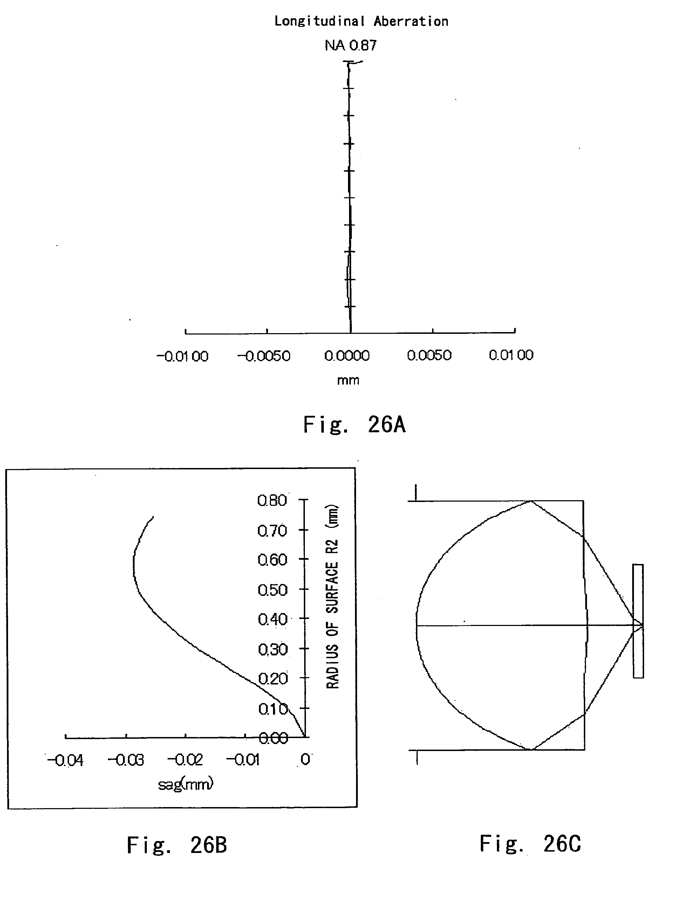

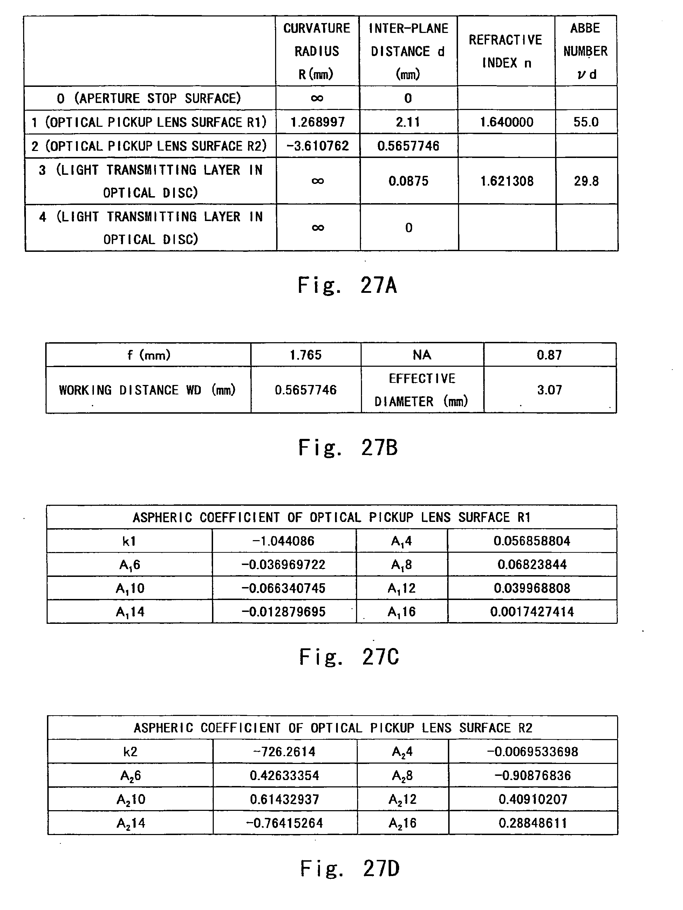

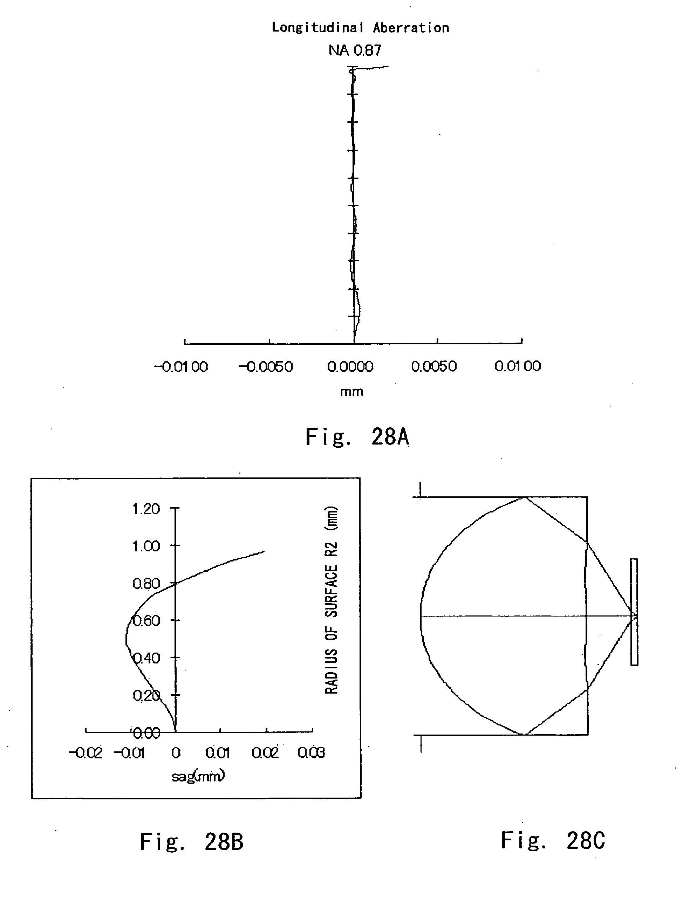

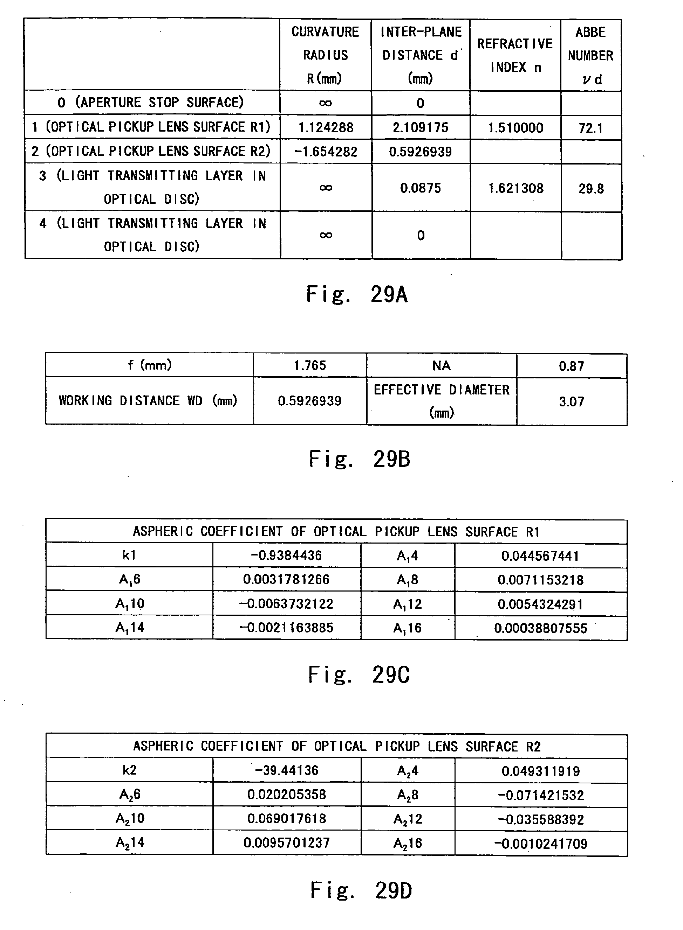

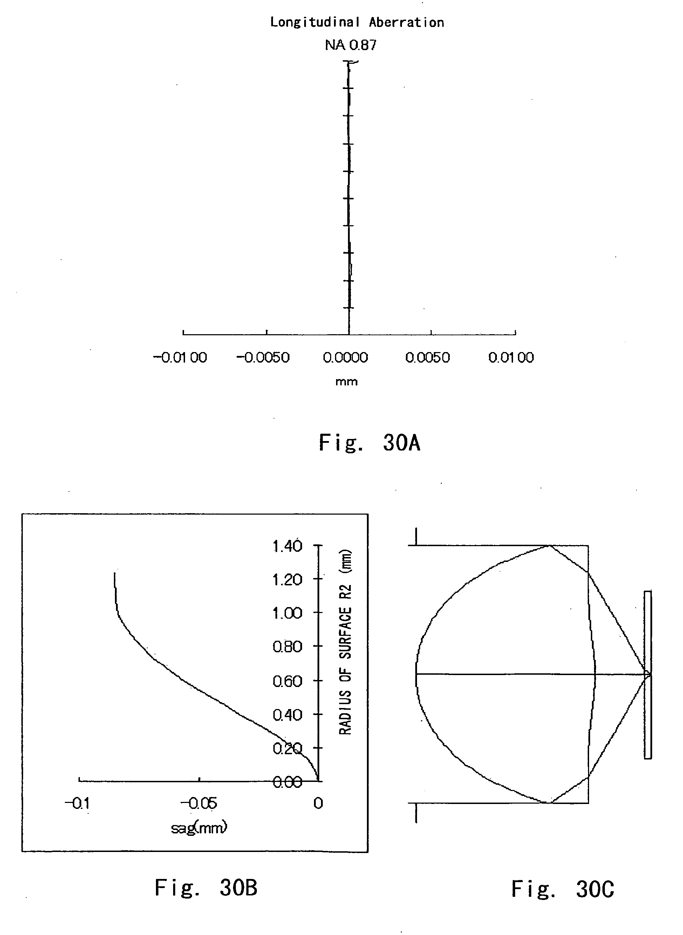

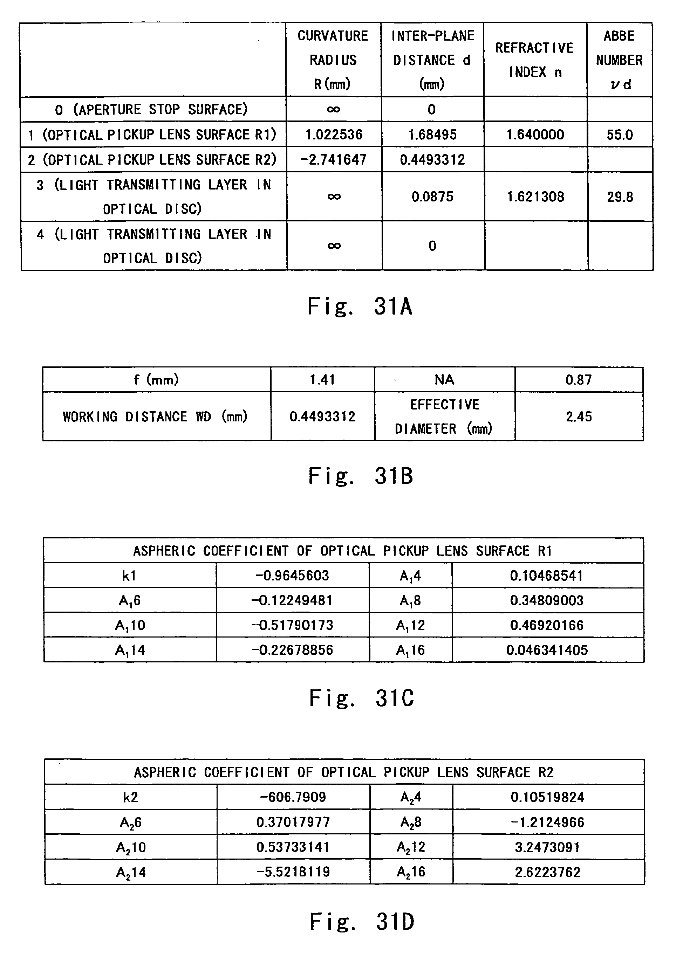

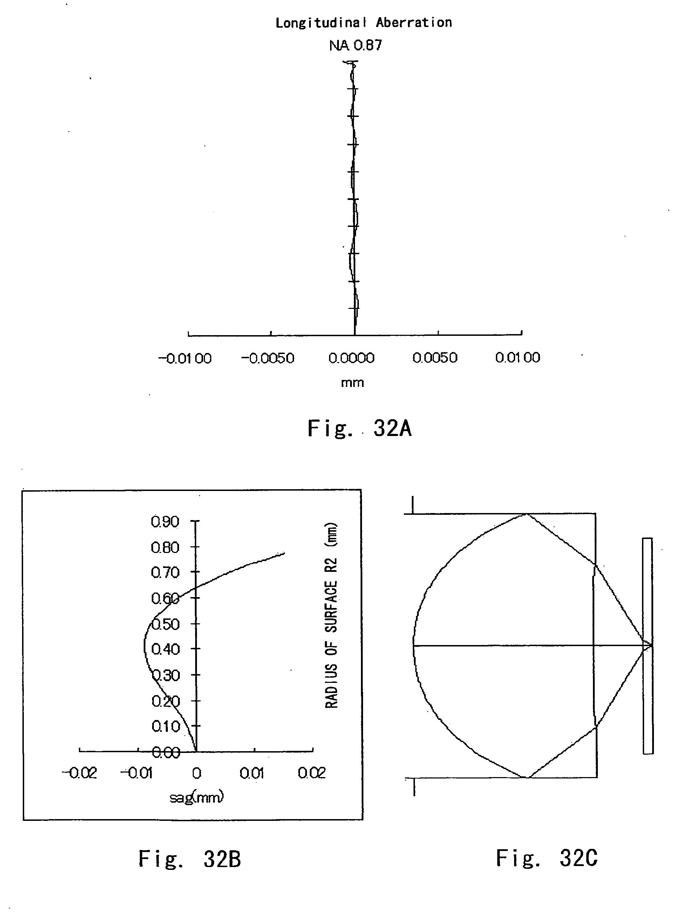

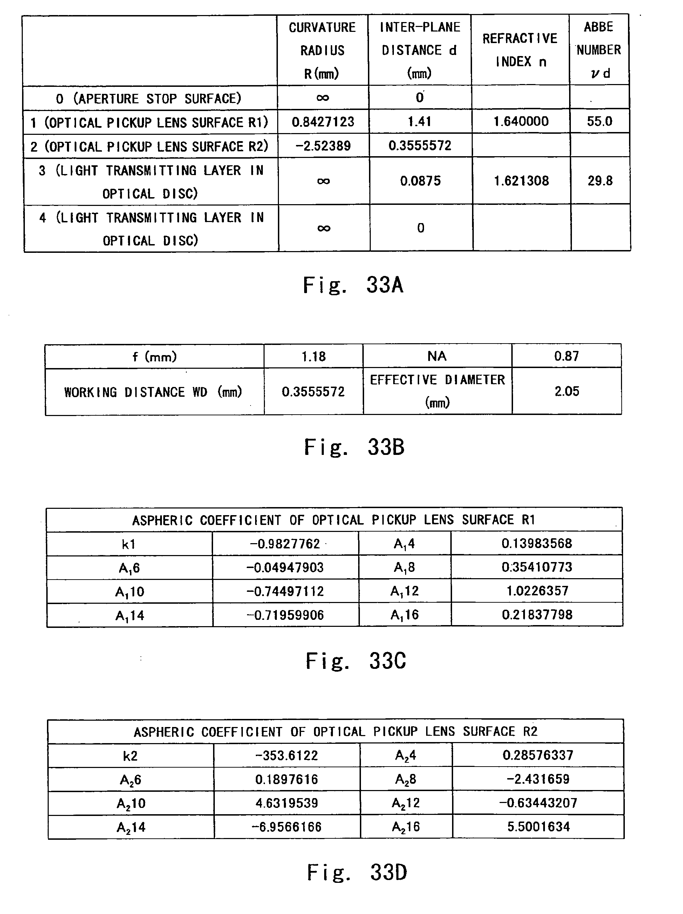

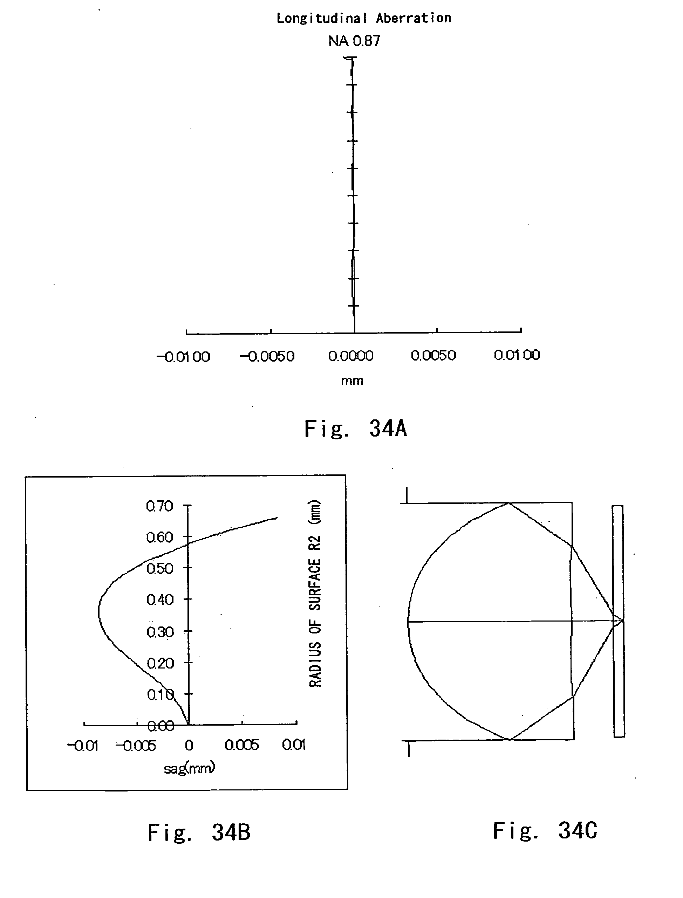

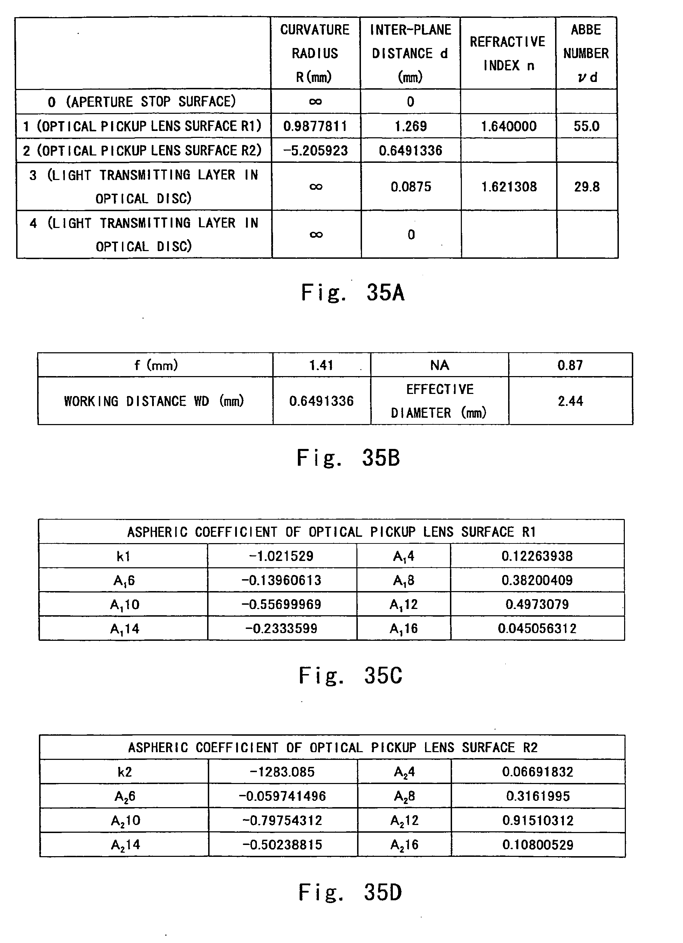

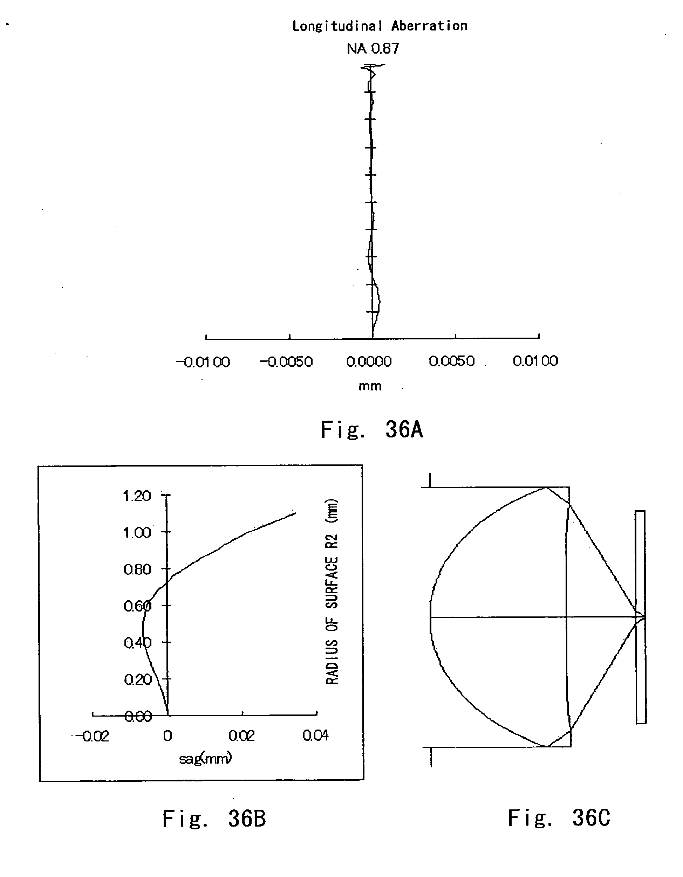

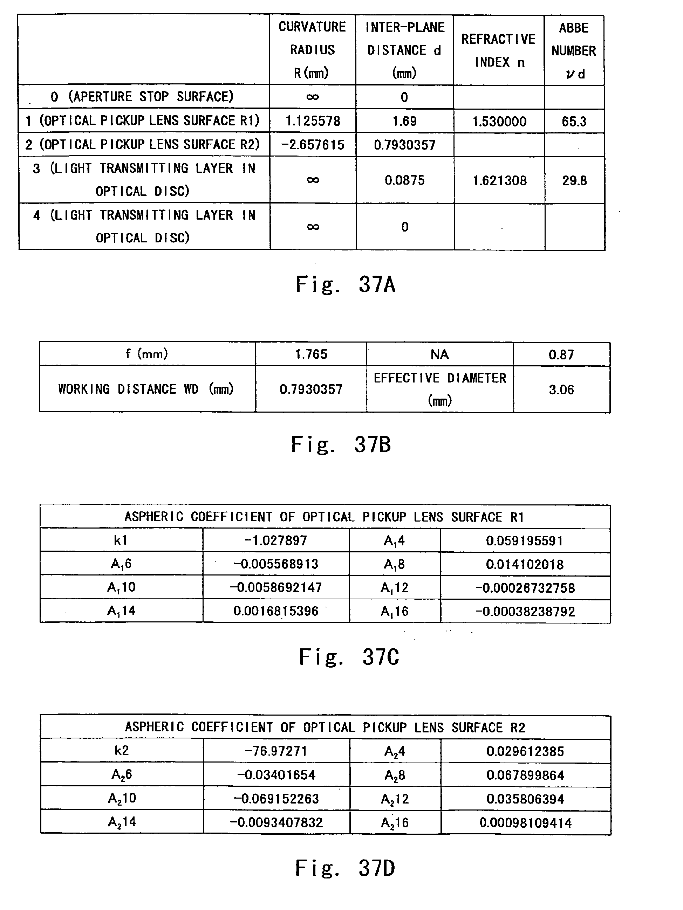

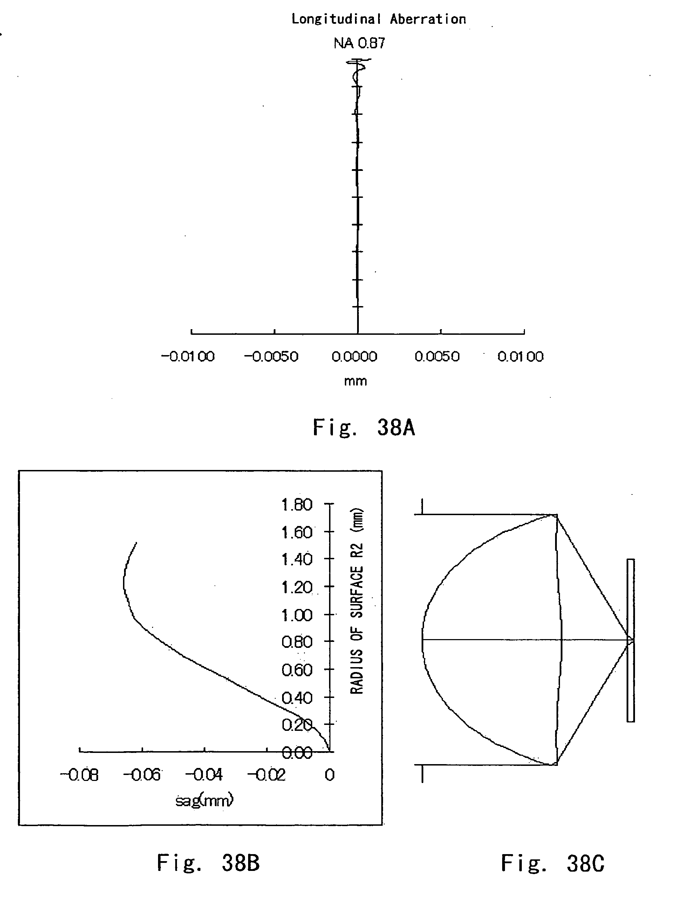

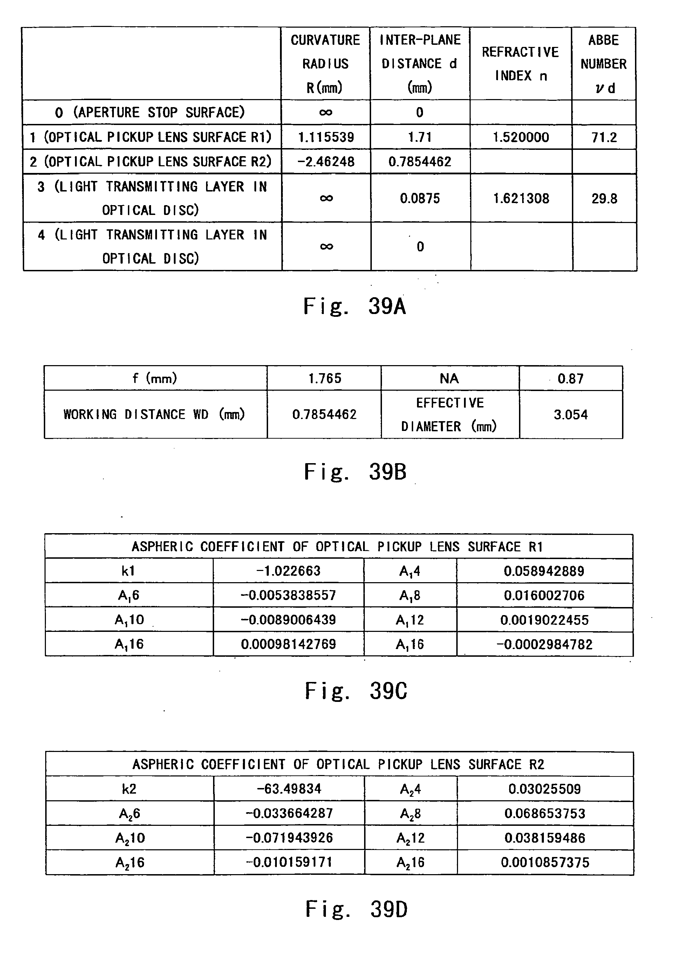

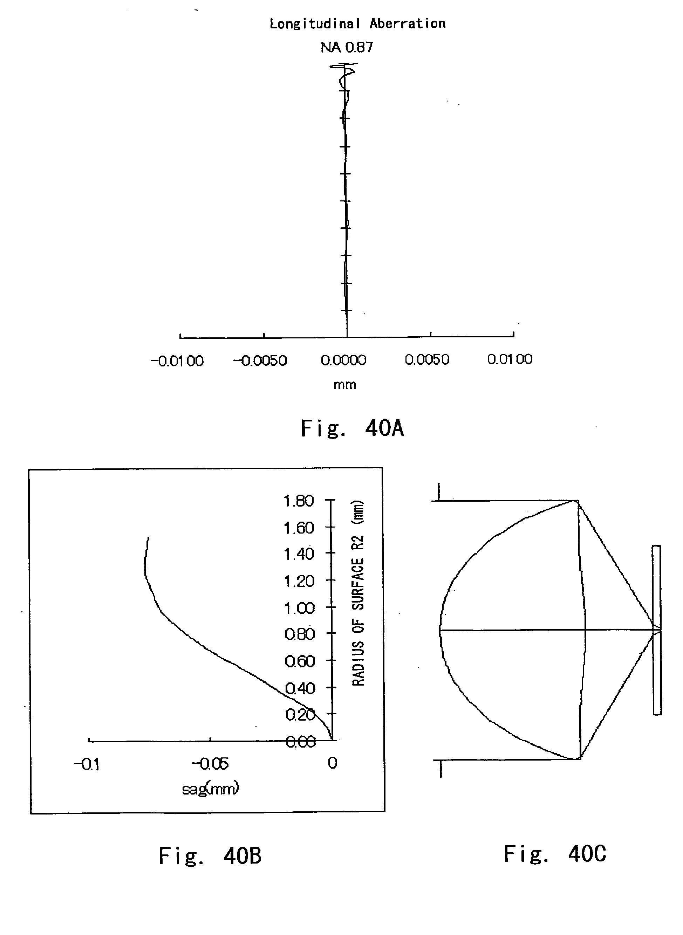

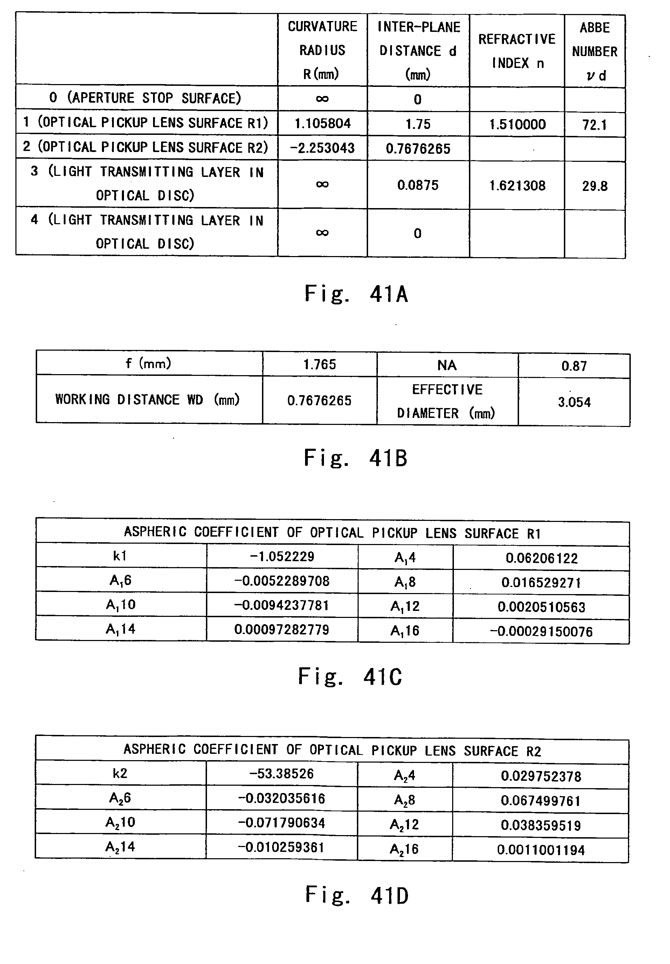

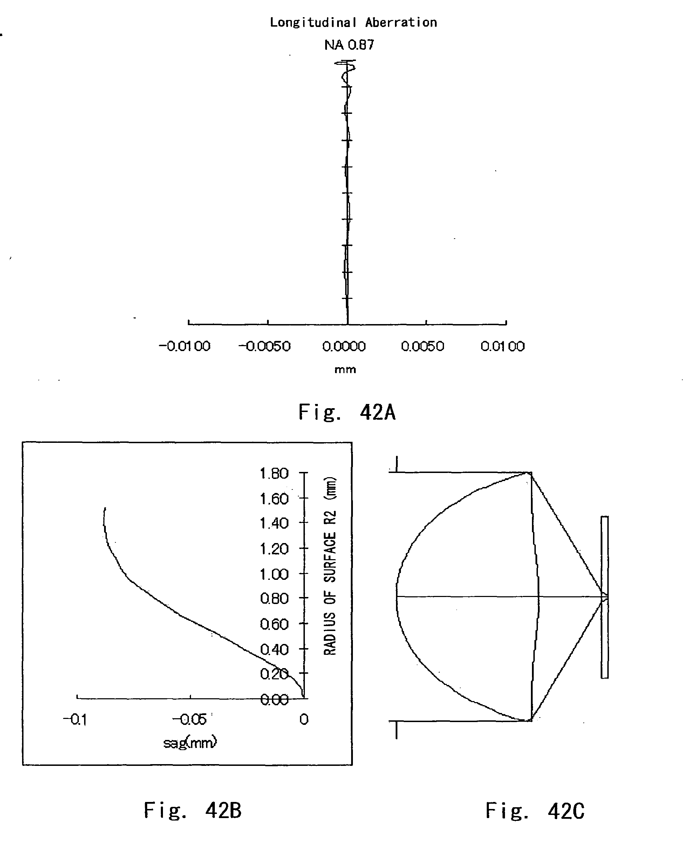

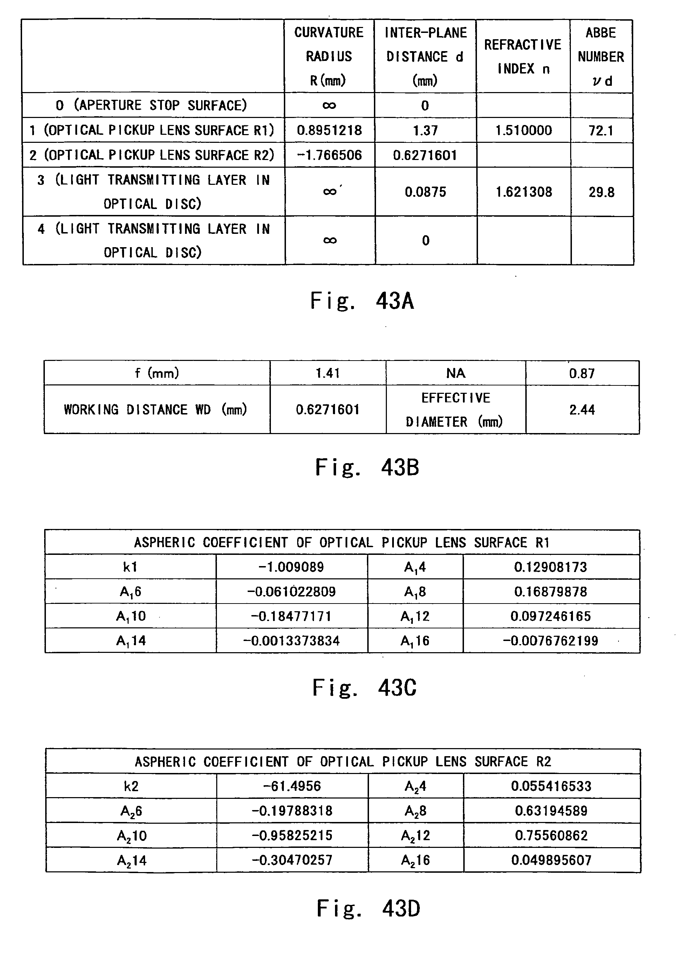

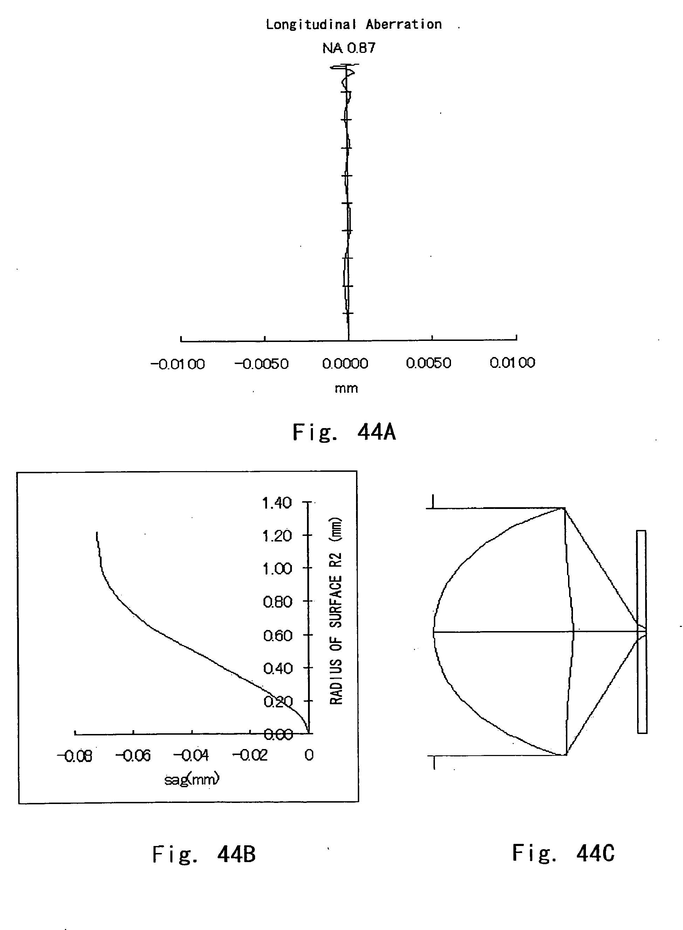

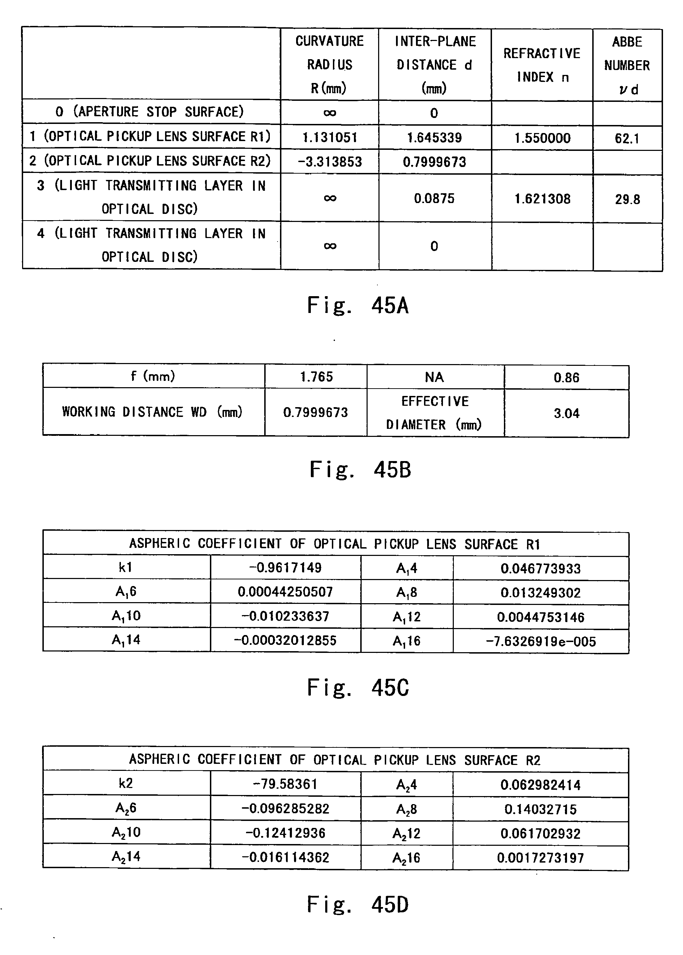

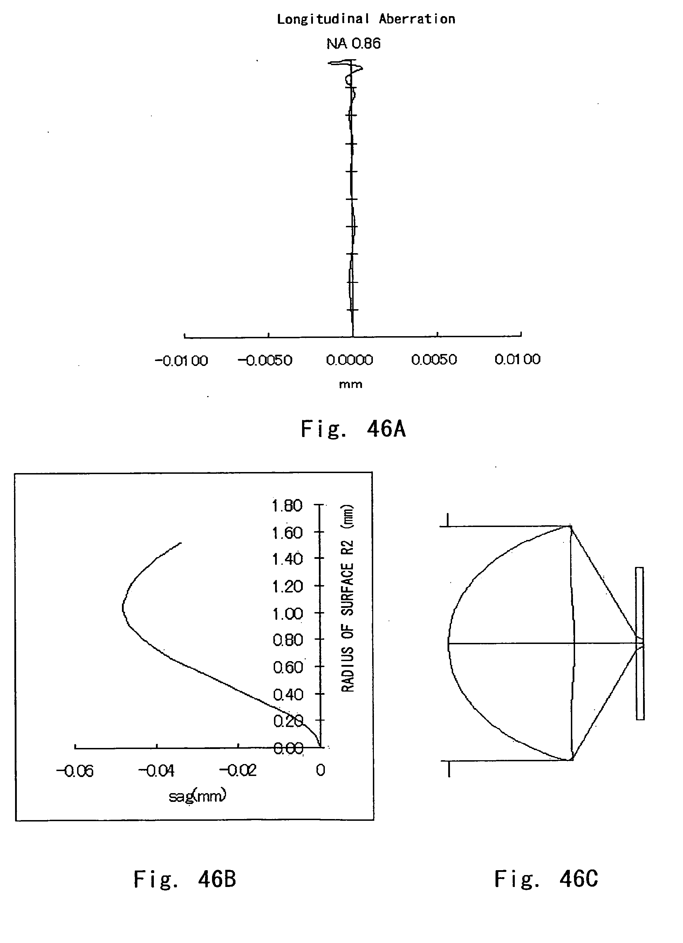

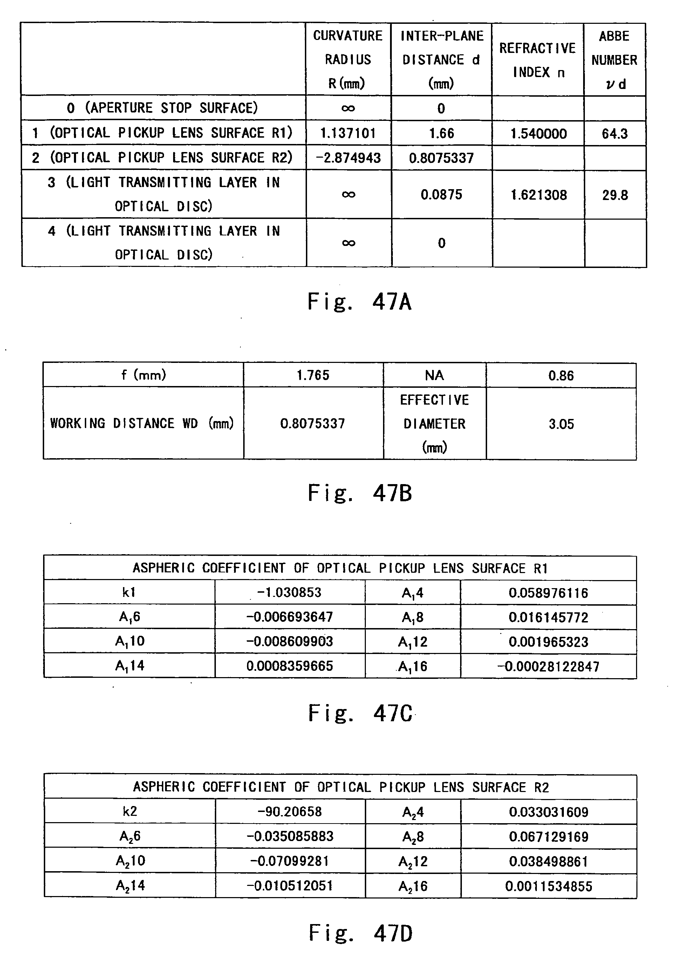

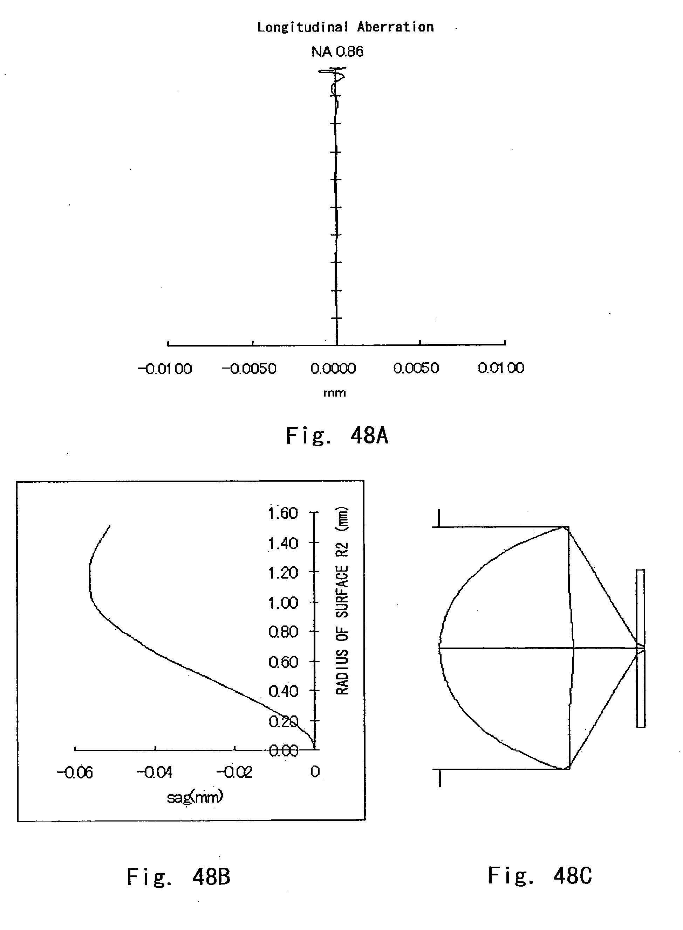

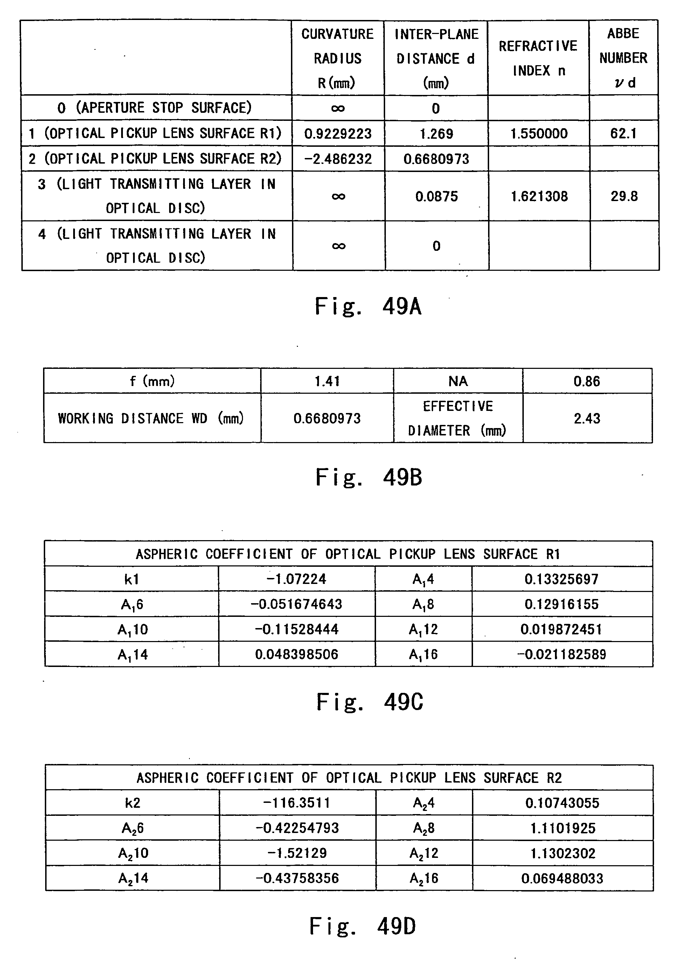

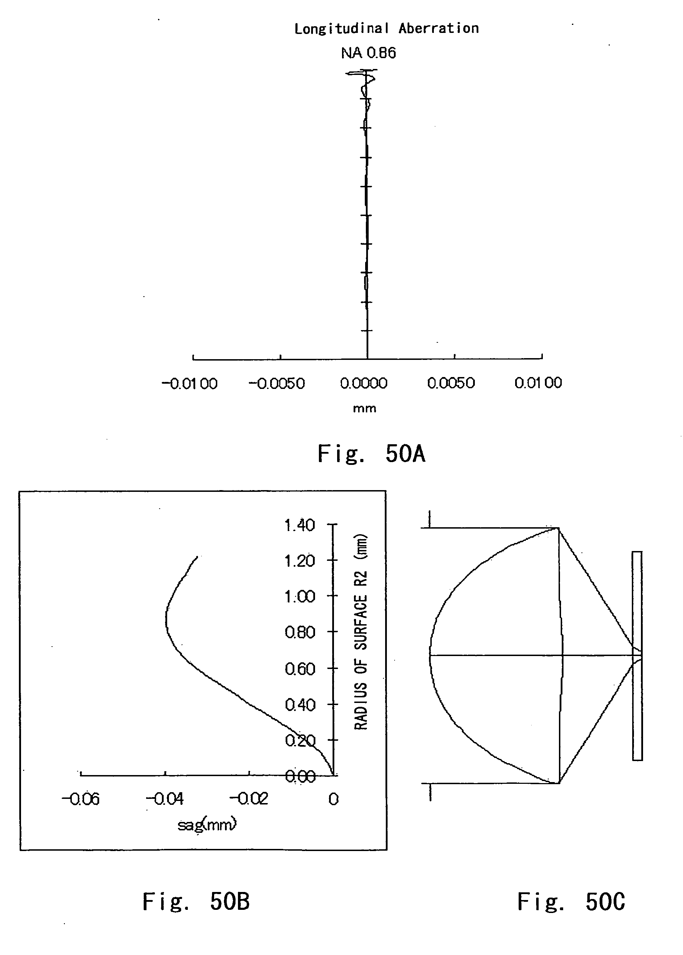

Examples related to an output surface and reference examples related to an output surface to which the present invention is applied are described hereinafter. Fig. 4 shows wavefront aberration in examples 1 to 5 related to an output surface and reference examples 1 to 27 related to an output surface. The example 1 related to an output surface corresponds to Figs. 5A to 5D and Figs. 6A to 6C, the example 2 related to an output surface corresponds to Figs. 7A to 7D and Figs. 8A to 8C, the example 3 related to an output surface corresponds to Figs. 9A to 9D and Figs. 10A to 10C, the example 4 related to an output surface corresponds to Figs.11A to 11D and Figs. 12A to 12C, and the example 5 related to an output surface corresponds to Figs.43A to 43D and Figs. 44A to 44C. Further, the reference example 1 related to an output surface corresponds to Figs. 13A to 13D and Figs. 14A to 14C, the reference example 2 related to an output surface corresponds to Figs. 15A to 15D and Figs. 16A to 16C, the reference example 3 related to an output surface corresponds to Figs. 17A to 17D and Figs. 18A to 18C, the reference example 4 related to an output surface corresponds to Figs. 19A to 19D and Figs. 20A to 20C, the reference example 5 related to an output surface corresponds to Figs. 21A to 21D and Figs. 22A to 22C, the reference example 6 related to an output surface corresponds to Figs. 23A to 23D and Figs. 24A to 24C, the reference example 7 related to an output surface corresponds to Figs. 25A to 25D and Figs. 26A to 26C, the reference example 8 related to an output surface corresponds to Figs. 27A to 27D and Figs. 28A to 28C, the reference example 9 related to an output surface corresponds to Figs. 29A to 29D and Figs. 30A to 30C, the reference example 10 related to an output surface corresponds to Figs. 31A to 31D and Figs. 32A to 32C, the reference example 11 related to an output surface corresponds to Figs. 33A to 33D and Figs. 34A to 34C, the reference example 12 related to an output surface corresponds to Figs. 35A to 35D and Figs. 36A to 36C, the reference example 13 related to an output surface corresponds to Figs. 37A to 37D and Figs. 38A to 38C, the reference example 14 related to an output surface corresponds to Figs. 39A to 39D and Figs. 40A to 40C, the reference example 15 related to an output surface corresponds to Figs. 41A to 41D and Figs. 42A to 42C, the reference example 16 related to an output surface corresponds to Figs. 45A to 45D and Figs. 46A to 46C, the reference example 17 related to an output surface corresponds to Figs. 47A to 47D and Figs. 48A to 48C, the reference example 18 related to an output surface corresponds to Figs. 49A to 49D and Figs. 50A to 50C, the reference example 19 related to an output surface corresponds to Figs.

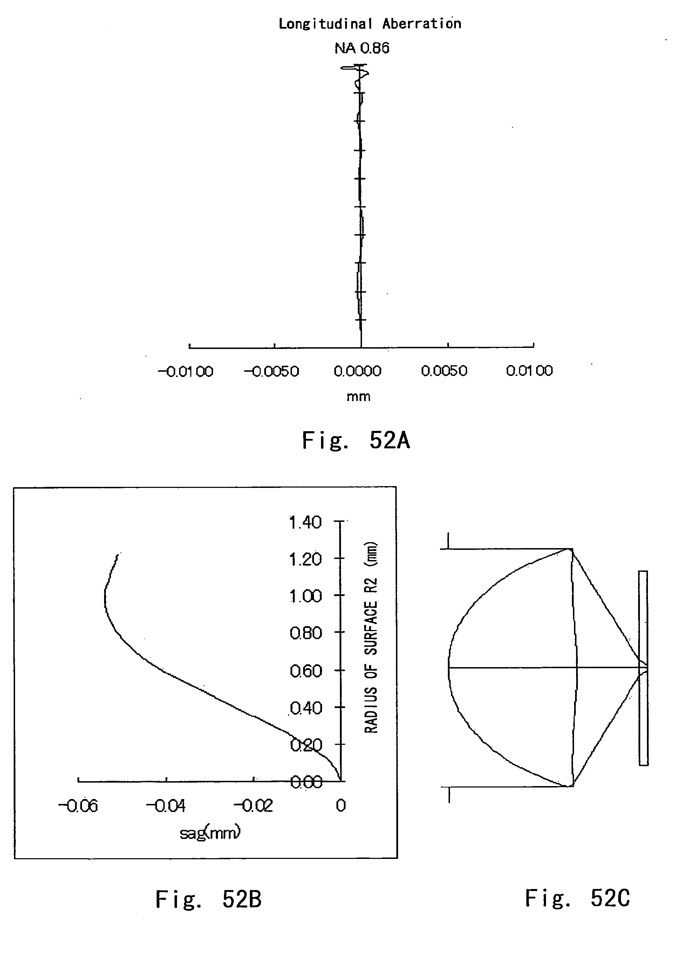

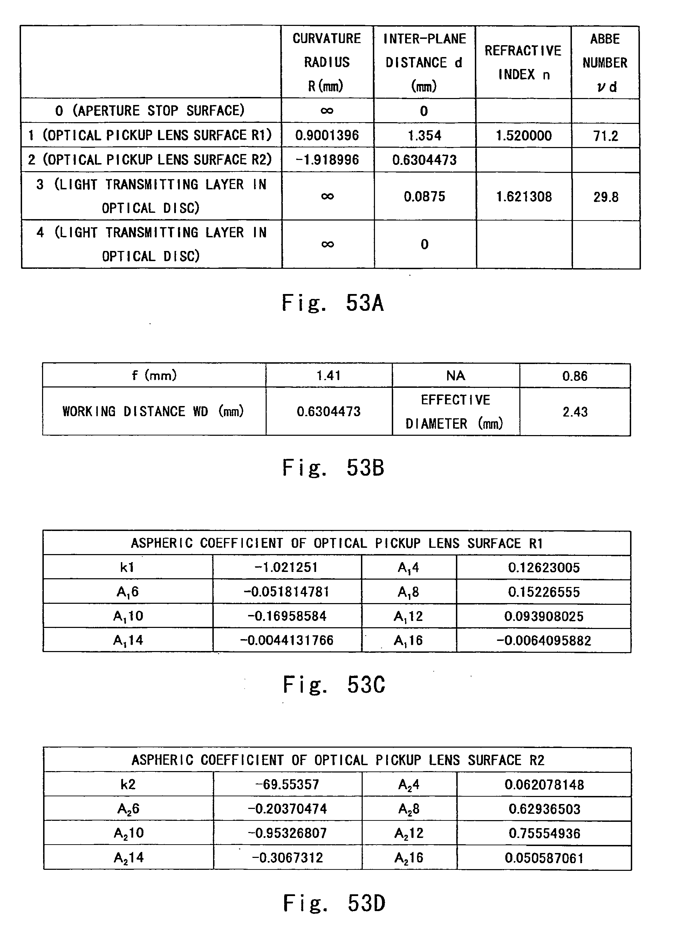

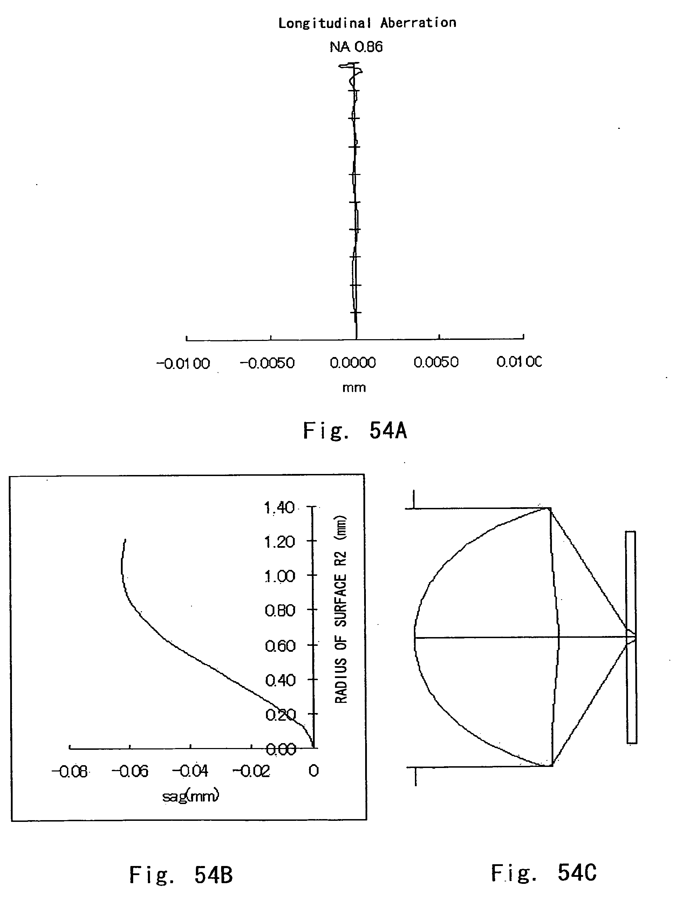

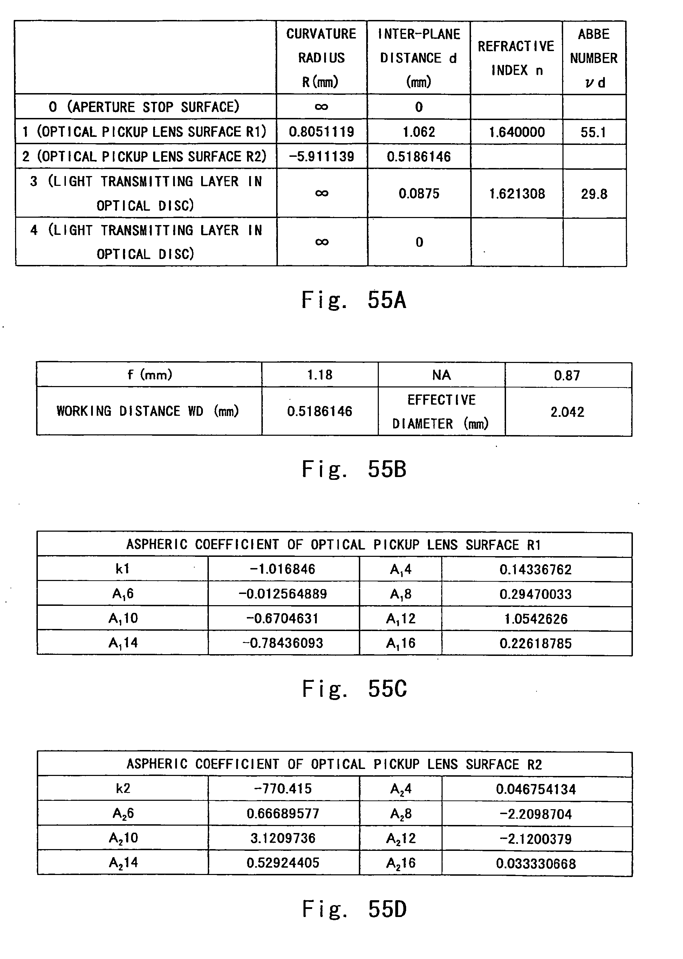

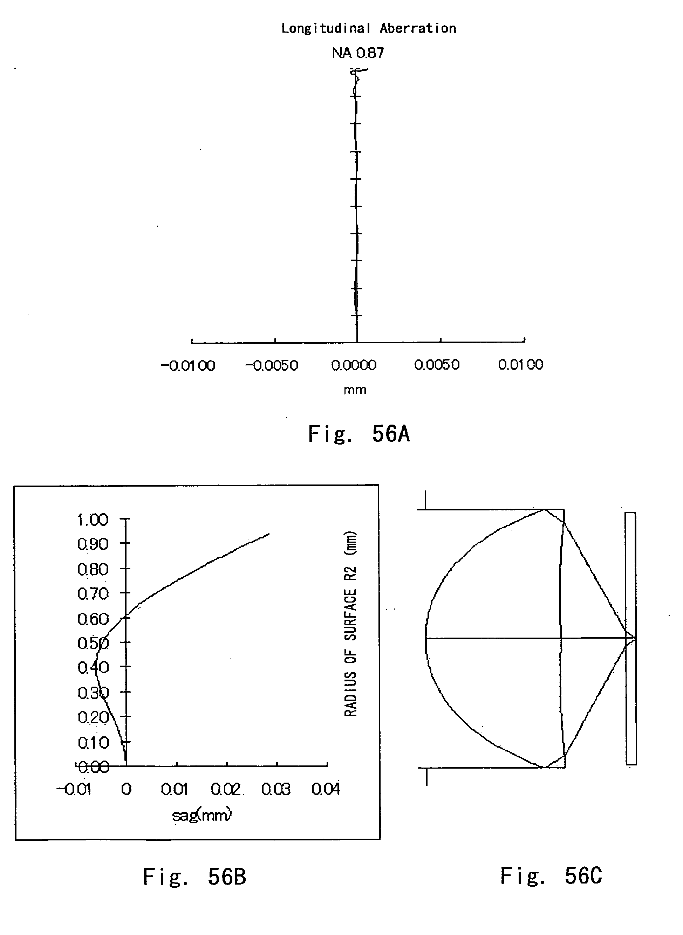

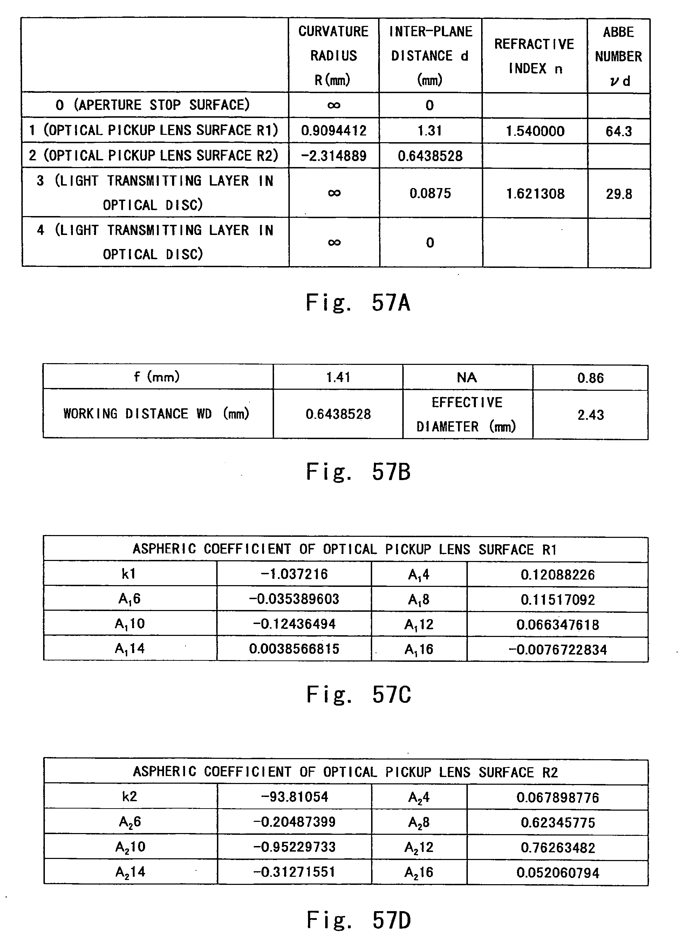

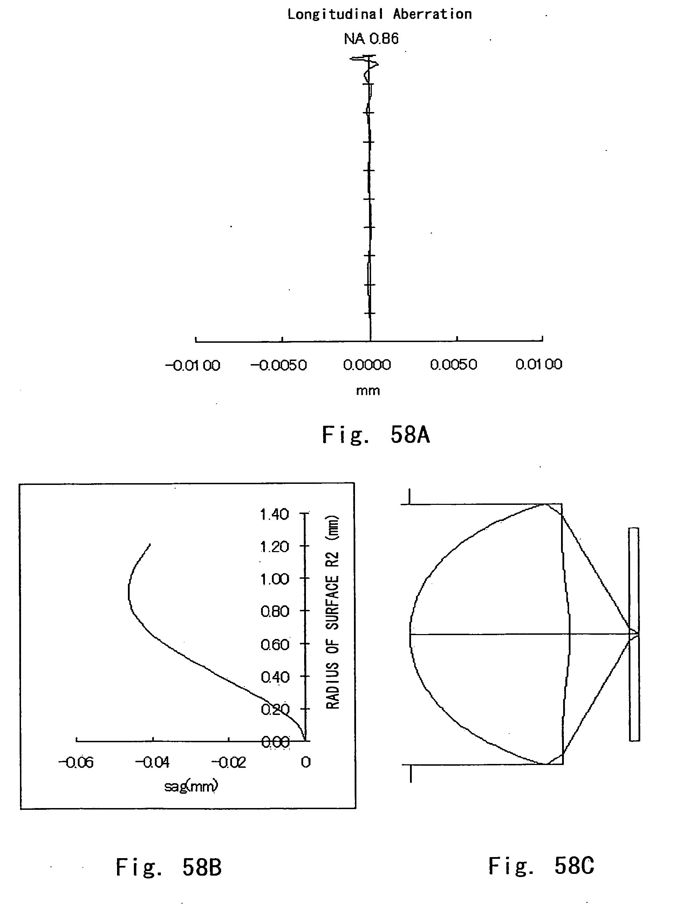

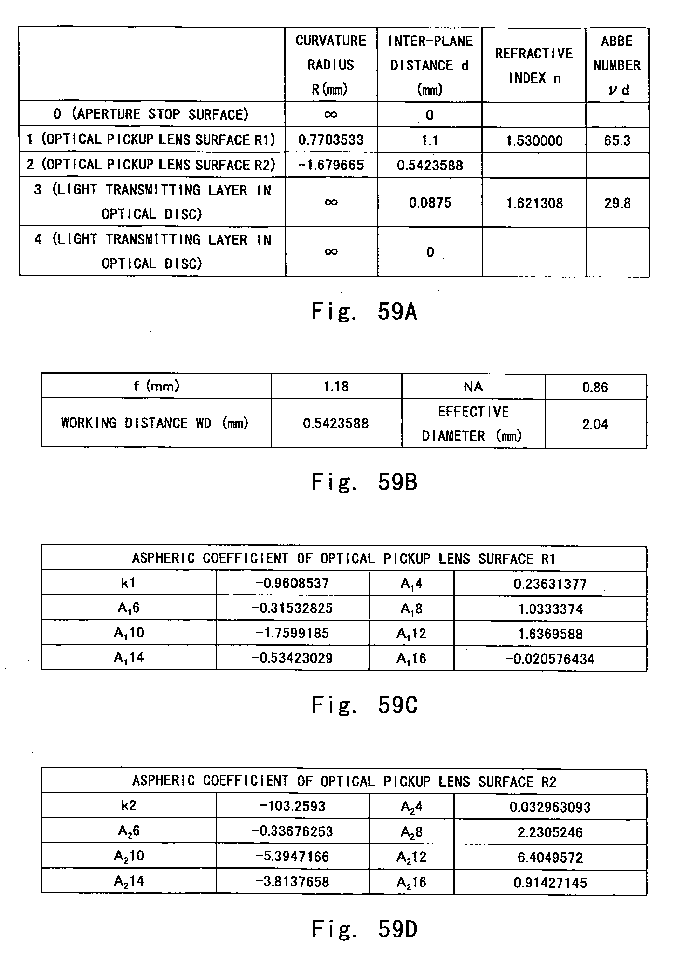

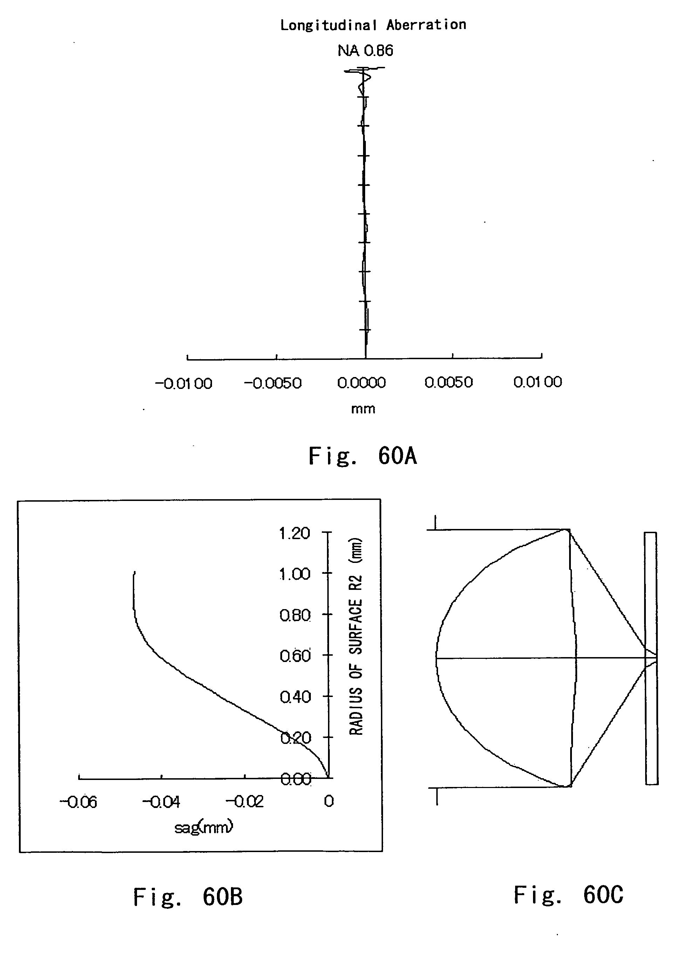

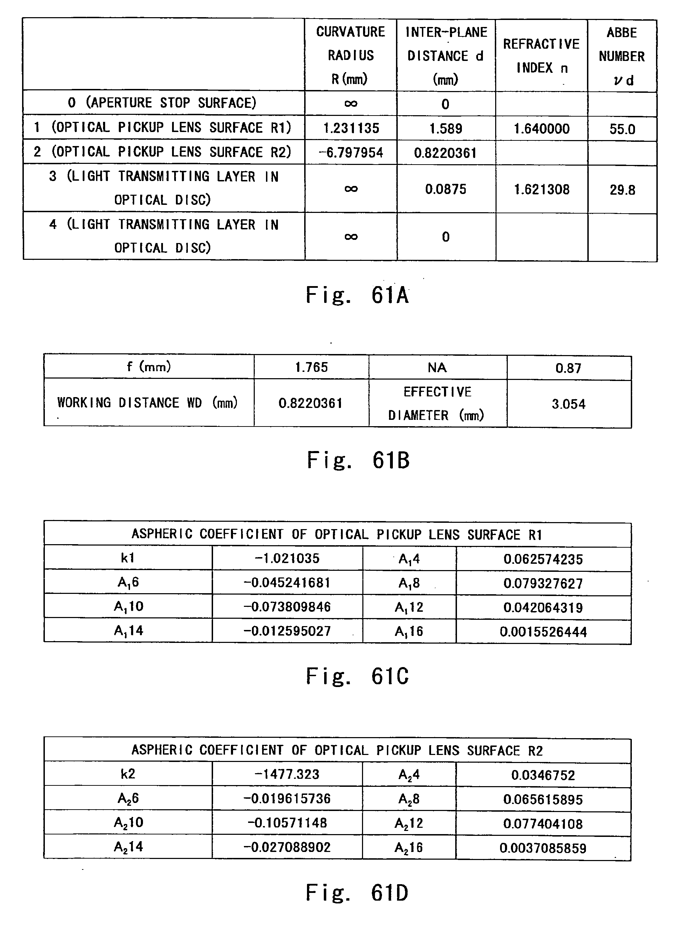

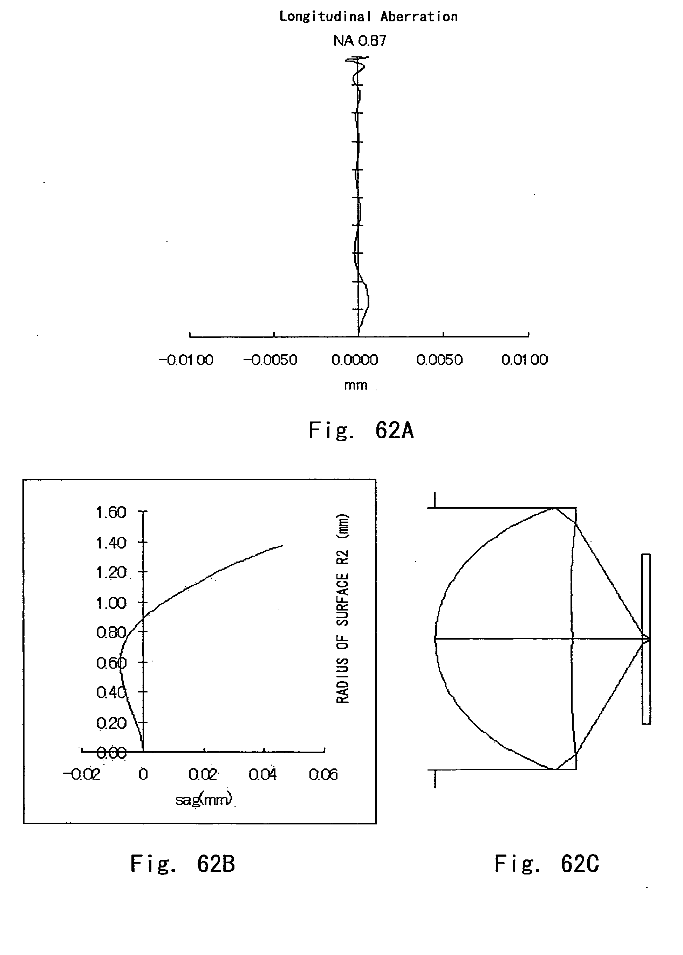

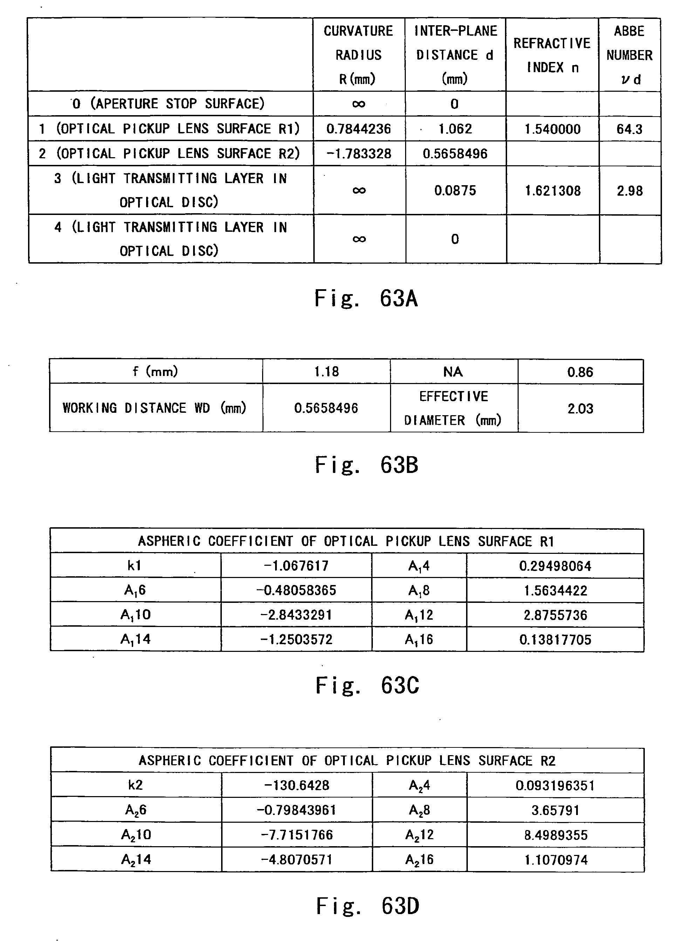

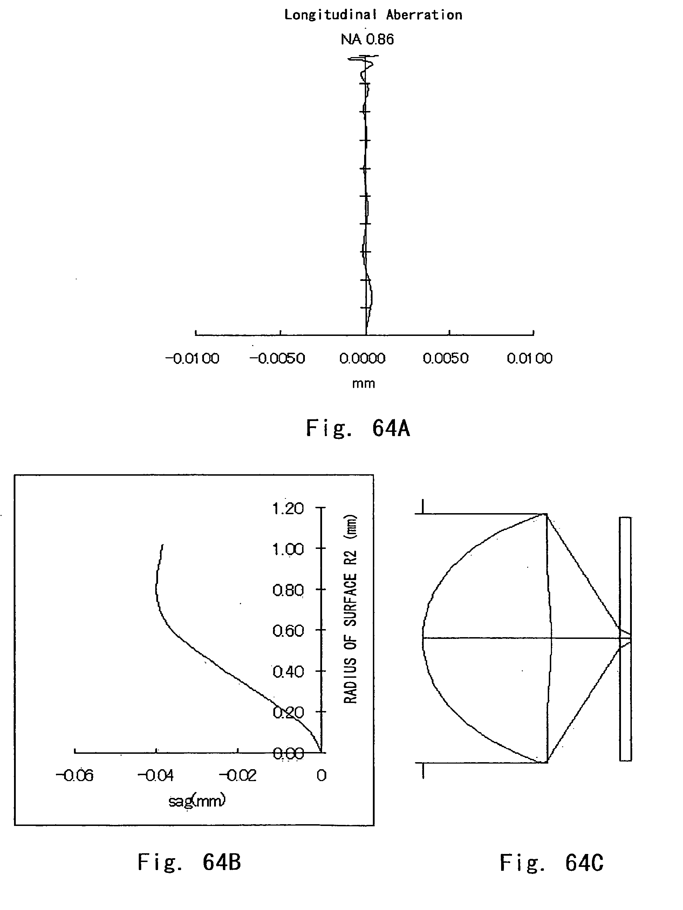

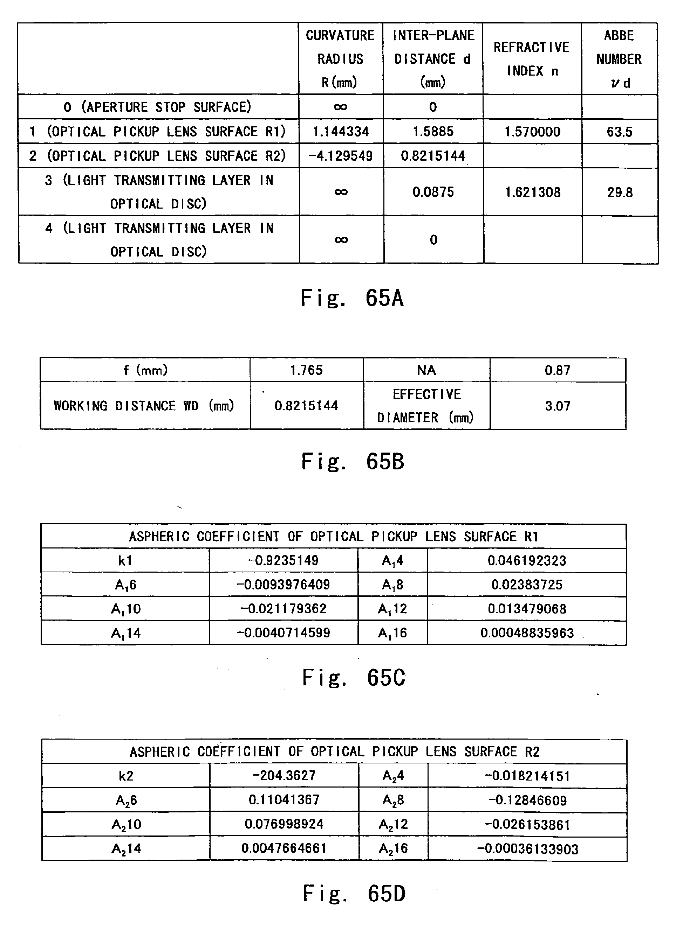

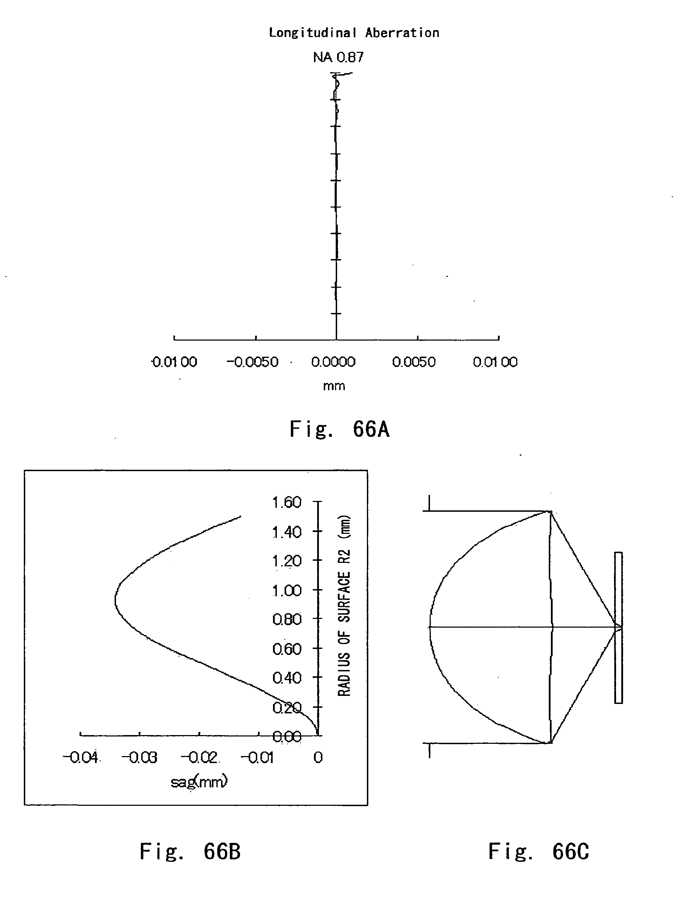

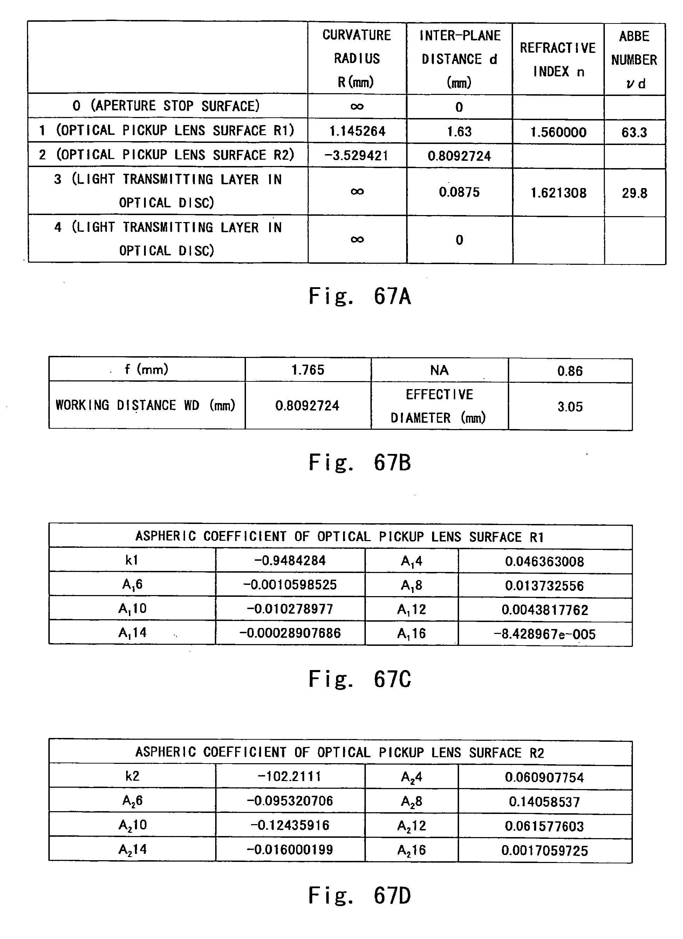

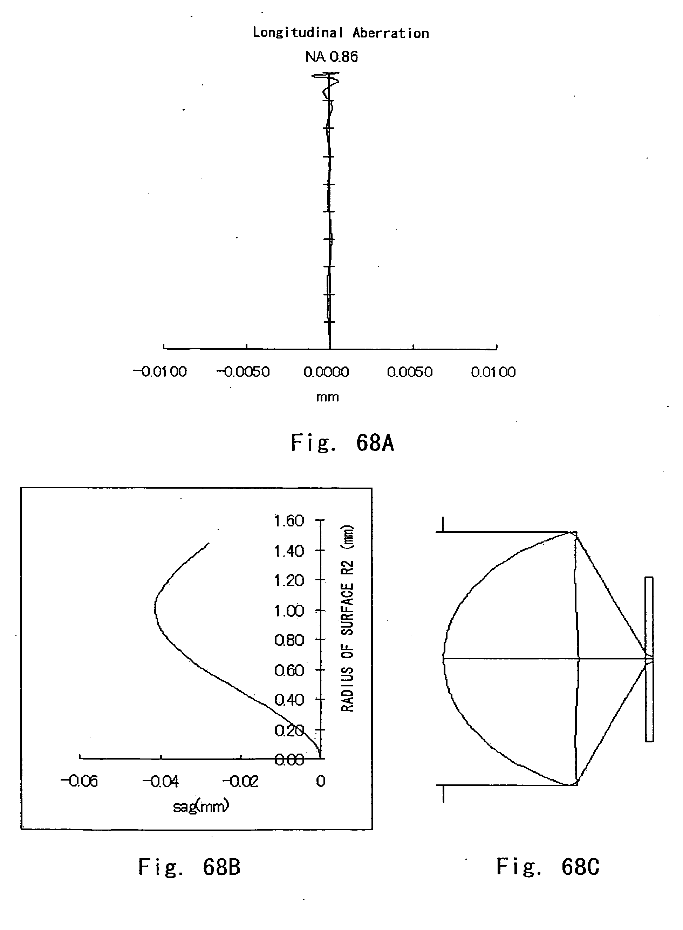

51A to 51D and Figs. 52A to 52C, the reference example 20 related to an output surface corresponds to Figs. 53A to 53D and Figs. 54A to 54C, the reference example 21 related to an output surface corresponds to Figs. 55A to 55D and Figs. 56A to 56C, the reference example 22 related to an output surface corresponds to Figs. 57A to 57D and Figs. 58A to 58C, the reference example 23 related to an output surface corresponds to Figs. 59A to 59D and Figs. 60A to 60C, the reference example 24 related to an output surface corresponds to Figs. 61A to 61D and Figs. 62A to 62C, the reference example 25 related to an output surface corresponds to Figs. 63A to 63D and Figs. 64A to 64C, the reference example 26 related to an output surface corresponds to Figs. 65A to 65D and Figs. 66A to 66C, and the reference example 27 related to an output surface corresponds to Figs. 67A to 67D and Figs. 68A to 68C. The example 1 related to an output surface to the example 5 related to an output surface are examples related to an output surface corresponding to the optical pickup lens 1a shown in Figs. 1A and 1B. Further, the reference example 1 related to an output surface to the reference example 27 related to an output surface are reference examples related to an output surface corresponding to the optical pickup lens 1b shown in Figs. 2A and 2B. In the examples 1 related to an output surface, for instance, the corresponding Figs. 5A to 5D show the characteristic values of the optical pickup lens. Further, Fig. 6A shows longitudinal aberration, Fig. 6B shows the sag from the center to the periphery of the surface R2, and Fig. 6C illustrates the optical pickup lens of the example 1 related to an output surface.

The coefficients in the examples 1 to 5 related to an output surface and the reference examples 1 to 27 related to an output surface are described hereinafter. The expression $Z_1(h_1)$ indicating the curve of the surface R1 of the optical pickup lens is represented by the following expression (6):

$$Z_1(h_1) = \frac{h_1^1}{R_1\left(1 + \sqrt{1 - \frac{(1+k_1)h_1^2}{R_1^2}}\right)} + A_1 4h_1^4 + A_1 6h_1^6 + A_1 8h_1^8 + A_1 10h_1^{10} + A_1 12h_1^{12} + A_1 14h_1^{14} + A_1 16h_1^{16} + \cdots \quad \cdots(6)$$

where
$Z_1(h_1)$ is the sag of the surface R1 of the optical pickup lens at the height h1 from the optical axis,
$h_1$ is the height from the optical axis,
$k_1$ is the constant of the cone of the surface R1 of the optical pickup lens,
$A_1 4$, $A_1 6$, $A_1 8$, $A_1 10$, $A_1 12$, $A_1 14$ and $A_1 16$ are aspheric coefficients of the surface R1 of the optical pickup lens, and
R1 is the curvature radius of the surface R1 of the optical pickup lens.

The expression $Z_2(h_2)$ indicating the curve of the surface R2 of the optical pickup lens is represented by the following expression (7):

$$Z_2(h_2) = \frac{h_2^2}{R_2\left(1 + \sqrt{1 - \frac{(1+k_2)h_2^2}{R_2^2}}\right)} + A_2 4h_2^4 + A_2 6h_2^6 + A_2 8h_2^8 + A_2 10h_2^{10} + A_2 12h_2^{12} + A_2 14h_2^{14} + A_2 16h_2^{16} + \cdots \quad \cdots(7)$$

where
$Z_2(h_2)$ is the sag of the surface R2 of the optical pickup lens at the height h2 from the optical axis,
$h_2$ is the height from the optical axis,
$k_2$ is the constant of the cone of the surface R2 of the optical pickup lens,
$A_2 4$, $A_2 6$, $A_2 8$, $A_2 10$, $A_2 12$, $A_2 14$ and $A_2 16$ are aspheric coefficients of the surface R2 of the optical pickup lens, and
R2 is the curvature radius of the surface R2 of the optical pickup lens.

The example 1 related to an output surface shown in Figs. 5A to 5D and Figs. 6A to 6C as a typical example of the optical pickup lens 1a shown in Figs. 1A and 1B, and the reference example 1 related to an output surface shown in Figs. 13A to 13D and Figs. 14A to 14C as a typical example of the optical pickup lens 1b shown in Figs. 2A and 2B are described hereinbelow. The single lens (optical pickup lens) according to the example 1 related to an output surface has the curvature radius R, the inter-surface distance d, the refractive index n for a wavelength of 405 nm, and the Abbe number νd as shown in Fig. 5A. The longitudinal aberration is measured for the single lens (optical pickup lens) according to the example 1 related to an output surface and an optical disc. Fig. 6A shows the result. Further, Fig. 5B shows the focal length d, the working distance WD, the numerical aperture NA and the effective diameter of the optical pickup lens according to the example 1 related to an output surface, Figs. 5C and 5D show the aspheric coefficients of the surfaces R1 and R2, respectively, and Fig. 6C shows a schematic illustration of the optical pickup lens. Fig. 6B shows the shape of the surface R2 as a graph with the vertical axis indicating the distance from the center h0 to the peripheral edge (effective diameter) and the horizontal axis indicating the sag. As shown in Fig. 6B, the example 1 related to an output surface satisfies:

$$(1) \quad 0 > \Delta sag1 > \Delta sag2$$

$$(2) \quad \Delta sag2 < \Delta sag3$$

and

$$h1 < h2 < h3,$$

and

$$sag1 > sag2 > sag3$$

in the range of the lens effective diameter just like the optical pickup lens 1a shown in Figs. 1A and 1B. As shown in Fig. 6A, suitable longitudinal aberration can be obtained within the lens effective diameter in the optical pickup lens according to the example 1 related to an output surface having the surface R2 of such a shape. Further, good angle of view characteristics can be obtained as shown in FIG. 4.

As shown in Fig. 14B, the reference example 1 related to an output surface satisfies:

$$(3) \quad sag1 > sag2 > sag3$$

$$(4) \quad sag3 < sag4$$

and

$$(1) \quad 0 > \Delta sag1 > \Delta sag2$$

$$(2) \quad \Delta sag2 < \Delta sag3 < 0$$

$$(5) \quad \Delta sag4 > 0$$

just like the optical pickup lens 1b shown in Figs. 2A and 2B. As shown in Fig. 14A, suitable longitudinal aberration can be obtained within the lens effective diameter in the optical pickup lens according to the reference example 1 related to an output surface having the surface R2 of such a shape. Further, good angle of view characteristics can be obtained as shown in Fig. 4.

Likewise, in the other examples related to an output surface and the other reference examples related to an output surface as well, suitable longitudinal aberration can be obtained within the lens effective diameter and good angle of view characteristics can be obtained as shown in Fig. 4.

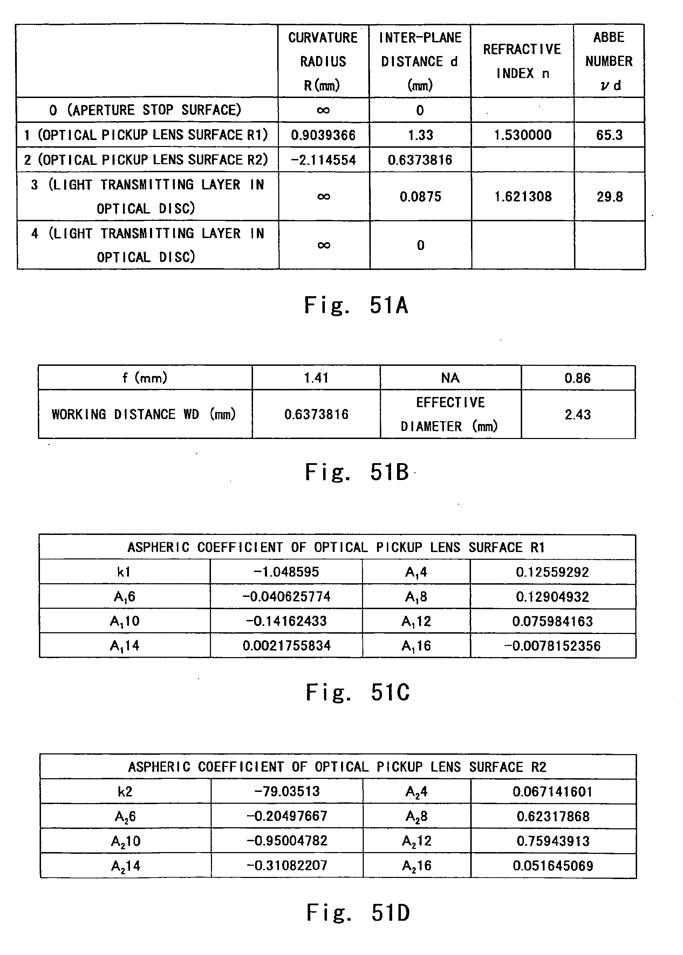

Therefore, it is possible in the examples 1 to 5 related to an output surface and the reference examples 1 to 27 related to an output surface to fabricate the optical pickup lenses with a high NA which has a long working distance and maintains suitable sine conditions and good off-axis characteristics as shown in Figs. 4 and 5A to 68C.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**Claims**

1. An optical pickup lens being a biconvex single lens with a numerical aperture NA of 0.84 or larger, having a convex first surface on which a light beam from a laser light source is incident and a convex second surface opposite to the first surface, to focus the light beam from the laser light source with a main wavelength of 410 nm or shorter on an optical information recording medium, wherein
the second surface has a continuous shape,
the shape of the second surface having a radius h1, a radius h2 and a radius h3 (h1<h2<h3) from an optical axis to a lens periphery, where sags in the radius h1, the radius h2 and the radius h3 are sag1, sag2 and sag3 and changes in the sags are $\Delta sag1$, $\Delta sag2$ and $\Delta sag3$, respectively, satisfies $0 > \Delta sag1 > \Delta sag2$ and $\Delta sag2 < \Delta sag3$,
the second surface has a convex shape in a center part without having a concave shape in a peripheral part, where a slope ($\Delta sag$) is gradual, abrupt and gradual again sequentially from a lens center h0 coinciding with the optical axis outward to a peripheral edge, and
a refractive index n at a wavelength of 405 nm is $1.59 \leq n \leq 1.62$.

2. The optical pickup lens according to claim 1, wherein
the light beam from the laser light source is incident on the first surface without passing through a diffraction ring-zone element.

3. The optical pickup lens according to claim 1 or 2, wherein
an effective diameter D is $1.8 \leq D \leq 3.2$ mm, and an Abbe number $\nu d$ is $50 \leq \nu d$.

4. An optical pickup lens being a biconvex single lens with a numerical aperture NA of 0.84 or larger, having a convex first surface on which a light beam from a laser light source is incident and a convex second surface opposite to the first surface, to focus the light beam from the laser light source with a main wavelength of 410 nm or shorter on an optical information recording medium, wherein
the second surface has a continuous shape,
the shape of the second surface having a radius h1, a radius h2 and a radius h3 (h1<h2<h3) from an optical axis to a lens periphery, where sags in the radius h1, the radius h2 and the radius h3 are sag1, sag2 and sag3 and changes in the sags are $\Delta sag1$, $\Delta sag2$ and $\Delta sag3$, respectively, satisfies $0 > \Delta sag1 > \Delta sag2$ and $\Delta sag2 < \Delta sag3$,
the second surface has a convex shape in a center part without having a concave shape in a peripheral part, where a slope ($\Delta sag$) is gradual, abrupt and gradual again sequentially from a lens center h0 coinciding with the optical axis outward to a peripheral edge, and
when a center thickness of the single lens is d and a focal length of an objective lens is f, $0.9 \leq d/f \leq 1.2$ is satisfied.

5. The optical pickup lens according to claim 4, wherein
the light beam from the laser light source is incident on the first surface without passing through a diffraction ring-zone element.

6. The optical pickup lens according to claim 4 or 5, wherein
   an effective diameter D is 1.8≤D≤3.2 mm, and an Abbe number νd is 50≤νd.

7. An optical pickup lens being a biconvex single lens with a numerical aperture NA of 0.84 or larger, having a convex first surface on which a light beam from a laser light source is incident and a convex second surface opposite to the first surface, to focus the light beam from the laser light source with a main wavelength of 410 nm or shorter on an optical information recording medium, wherein
   the second surface has a continuous shape,
   the shape of the second surface having a radius h1, a radius h2 and a radius h3 (h1<h2<h3) from an optical axis to a lens periphery, where sags in the radius h1, the radius h2 and the radius h3 are sag1, sag2 and sag3 and changes in the sags are Δsag1, Δsag2 and Δsag3, respectively, satisfies 0>Δsag1>Δsag2 and Δsag2<Δsag3,
   the second surface has a convex shape in a center part without having a concave shape in a peripheral part, where a slope (Δsag) is gradual, abrupt and gradual again sequentially from a lens center h0 coinciding with the optical axis outward to a peripheral edge, and
   a tangent angle α of the first surface is 60°≤α, and a refractive index n at a wavelength of 405 nm is 1.59≤n≤1.62.

8. The optical pickup lens according to claim 7, wherein
   the light beam from the laser light source is incident on the first surface without passing through a diffraction ring-zone element.

9. The optical pickup lens according to claim 7 or 8, wherein
   an effective diameter D is 1.8≤D≤3.2 mm, and an Abbe number νd is 50≤νd.

1a

13a

31

30

SURFACE R2 12a

21    SURFACE R1 11

h0

32

Fig. 1A

Fig. 1B

Fig. 2A

Fig. 2B

1a,1b

30

31

D

d

WD

12a,12b

21    11

32

Fig. 3

| | ON-AXIS WAVEFRONT ABERRATION ($\lambda$ rms) | ANGLE OF VIEW (0.3°) WAVEFRONT ABERRATION ($\lambda$ rms) |
|---|---|---|
| EXAMPLE 1 | 0.002 | 0.008 |
| EXAMPLE 2 | 0.004 | 0.006 |
| EXAMPLE 3 | 0.005 | 0.011 |
| EXAMPLE 4 | 0.005 | 0.010 |
| REFERENCE EXAMPLE 1 | 0.002 | 0.008 |
| REFERENCE EXAMPLE 2 | 0.002 | 0.007 |
| REFERENCE EXAMPLE 3 | 0.002 | 0.012 |
| REFERENCE EXAMPLE 4 | 0.003 | 0.010 |
| REFERENCE EXAMPLE 5 | 0.002 | 0.011 |
| REFERENCE EXAMPLE 6 | 0.002 | 0.008 |
| REFERENCE EXAMPLE 7 | 0.002 | 0.006 |
| REFERENCE EXAMPLE 8 | 0.003 | 0.012 |
| REFERENCE EXAMPLE 9 | 0.003 | 0.010 |
| REFERENCE EXAMPLE 10 | 0.005 | 0.010 |
| REFERENCE EXAMPLE 11 | 0.002 | 0.006 |
| REFERENCE EXAMPLE 12 | 0.004 | 0.008 |
| REFERENCE EXAMPLE 13 | 0.004 | 0.011 |
| REFERENCE EXAMPLE 14 | 0.006 | 0.011 |
| REFERENCE EXAMPLE 15 | 0.006 | 0.011 |
| EXAMPLE 5 | 0.006 | 0.011 |
| REFERENCE EXAMPLE 16 | 0.007 | 0.011 |
| REFERENCE EXAMPLE 17 | 0.005 | 0.011 |
| REFERENCE EXAMPLE 18 | 0.005 | 0.011 |
| REFERENCE EXAMPLE 19 | 0.005 | 0.010 |
| REFERENCE EXAMPLE 20 | 0.005 | 0.011 |
| REFERENCE EXAMPLE 21 | 0.003 | 0.007 |
| REFERENCE EXAMPLE 22 | 0.005 | 0.010 |
| REFERENCE EXAMPLE 23 | 0.005 | 0.010 |
| REFERENCE EXAMPLE 24 | 0.005 | 0.010 |
| REFERENCE EXAMPLE 25 | 0.005 | 0.011 |
| REFERENCE EXAMPLE 26 | 0.003 | 0.010 |
| REFERENCE EXAMPLE 27 | 0.006 | 0.011 |

Fig. 4

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.9056466 | 1.68495 | 1.510000 | 72.1 |
| 2 (OPTICAL PICKUP LENS SURFACE R2) | -1.297362 | 0.4700169 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

## Fig. 5A

| f (mm) | 1.41 | NA | 0.87 |
|---|---|---|---|
| WORKING DISTANCE WD (mm) | 0.4700169 | EFFECTIVE DIAMETER (mm) | 2.45 |

## Fig. 5B

| ASPHERIC COEFFICIENT OF OPTICAL PICKUP LENS SURFACE R1 | | | |
|---|---|---|---|
| k1 | -0.926974 | $A_1 4$ | 0.088745883 |
| $A_1 6$ | -0.014009239 | $A_1 8$ | 0.099800842 |
| $A_1 10$ | -0.14901375 | $A_1 12$ | 0.14625795 |
| $A_1 14$ | -0.070002669 | $A_1 16$ | 0.014589588 |

## Fig. 5C

| ASPHERIC COEFFICIENT OF OPTICAL PICKUP LENS SURFACE R2 | | | |
|---|---|---|---|
| k2 | -39.48096 | $A_2 4$ | 0.075333946 |
| $A_2 6$ | 0.18895162 | $A_2 8$ | -0.62044141 |
| $A_2 10$ | 0.70725579 | $A_2 12$ | -0.29899683 |
| $A_2 14$ | -0.04753959 | $A_2 16$ | 0.054582827 |

## Fig. 5D

Longitudinal Aberration

NA 0.87

-0.0100    -0.0050    0.0000    0.0050    0.0100

mm

Fig. 6A

RADIUS OF SURFACE R2 (mm)

1.20

1.00

0.80

0.60

0.40

0.20

0.00

-0.08    -0.06    -0.04    -0.02    0

sag(mm)

Fig. 6B

Fig. 6C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.7512375 | 1.41 | 1.510000 | 70.0 |
| 2 (OPTICAL PICKUP LENS SURFACE R2) | -1.107503 | 0.3780043 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 7A

| f (mm) | 1.18 | NA | 0.86 |
|---|---|---|---|
| WORKING DISTANCE WD (mm) | 0.3780043 | EFFECTIVE DIAMETER (mm) | 2.04 |

Fig. 7B

| ASPHERIC COEFFICIENT OF OPTICAL PICKUP LENS SURFACE R1 | | | |
|---|---|---|---|
| k1 | -0.9932813 | $A_1 4$ | 0.16173019 |
| $A_1 6$ | -0.0068172054 | $A_1 8$ | 0.30943156 |
| $A_1 10$ | -0.71828309 | $A_1 12$ | 1.0694734 |
| $A_1 14$ | -0.73917226 | $A_1 16$ | 0.20953108 |

Fig. 7C

| ASPHERIC COEFFICIENT OF OPTICAL PICKUP LENS SURFACE R2 | | | |
|---|---|---|---|
| k2 | -33.95954 | $A_2 4$ | 0.17453771 |
| $A_2 6$ | 0.44467479 | $A_2 8$ | -2.4997169 |
| $A_2 10$ | 3.8254443 | $A_2 12$ | -0.79040597 |
| $A_2 14$ | -3.2835885 | $A_2 16$ | 2.3437228 |

Fig. 7D

Longitudinal Aberration
NA 0.86

-0.0100    -0.0050    0.0000    0.0050    0.0100
mm

Fig. 8A

0.90
0.80
0.70
0.60
0.50
0.40
0.30
0.20
0.10
0.00

RADIUS OF SURFACE R2 (mm)

-0.08    -0.06    -0.04    -0.02    0
sag(mm)

Fig. 8B

Fig. 8C

| | CURVATURE RADIUS R(mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.7635927 | 1.12 | 1.510000 | 72.1 |
| 2 (OPTICAL PICKUP LENS SURFACE R2) | −1.433206 | 0.541468 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

## Fig. 9A

| f (mm) | 1.18 | NA | 0.86 |
|---|---|---|---|
| WORKING DISTANCE WD (mm) | 0.541468 | EFFECTIVE DIAMETER (mm) | 2.04 |

## Fig. 9B

| ASPHERIC COEFFICIENT OF OPTICAL PICKUP LENS SURFACE R1 | | | |
|---|---|---|---|
| k1 | −0.9466495 | $A_1 4$ | 0.24903705 |
| $A_1 6$ | −0.36048557 | $A_1 8$ | 1.1438588 |
| $A_1 10$ | −1.9098038 | $A_1 12$ | 1.6938973 |
| $A_1 14$ | −0.46516446 | $A_1 16$ | −0.072891209 |

## Fig. 9C

| ASPHERIC COEFFICIENT OF OPTICAL PICKUP LENS SURFACE R2 | | | |
|---|---|---|---|
| k2 | −75.72197 | $A_2 4$ | 0.019422265 |
| $A_2 6$ | −0.32268346 | $A_2 8$ | 2.2460383 |
| $A_2 10$ | −5.4223554 | $A_2 12$ | 6.376184 |
| $A_2 14$ | −3.7488674 | $A_2 16$ | 0.88571896 |

## Fig. 9D

Longitudinal Aberration

NA 0.86

-0.0100    -0.0050    0.0000    0.0050    0.0100

mm

Fig. 10A

1.20

1.00

0.80

0.60

0.40

0.20

0.00

RADIUS OF SURFACE R2 (mm)

-0.08    -0.06    -0.04    -0.02    0

sag(mm)

Fig. 10B                    Fig. 10C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | $\infty$ | 0 | | |
| 1 (OPTICAL PICKUP LENS SURFACE R1) | 0.7679574 | 1.1 | 1.520000 | 71.2 |
| 2 (OPTICAL PICKUP LENS SURFACE R2) | −1.55685 | 0.5478057 | | |
| 3 (LIGHT TRANSMITTING LAYER IN OPTICAL DISC) | $\infty$ | 0.0875 | 1.621308 | 29.8 |
| 4 (LIGHT TRANSMITTING LAYER IN OPTICAL DISC) | $\infty$ | 0 | | |

Fig. 11A

| f (mm) | 1.18 | NA | 0.86 |
|---|---|---|---|
| WORKING DISTANCE WD (mm) | 0.5478057 | EFFECTIVE DIAMETER (mm) | 2.04 |

Fig. 11B

| ASPHERIC COEFFICIENT OF OPTICAL PICKUP LENS SURFACE R1 | | | |
|---|---|---|---|
| k1 | −0.9398416 | $A_1 4$ | 0.24128209 |
| $A_1 6$ | −0.34301622 | $A_1 8$ | 1.083611 |
| $A_1 10$ | −1.8150026 | $A_1 12$ | 1.6414373 |
| $A_1 14$ | −0.47292165 | $A_1 16$ | −0.062493854 |

Fig. 11C

| ASPHERIC COEFFICIENT OF OPTICAL PICKUP LENS SURFACE R2 | | | |
|---|---|---|---|
| k2 | −88.93305 | $A_2 4$ | 0.023349205 |
| $A_2 6$ | −0.32649716 | $A_2 8$ | 2.2472554 |
| $A_2 10$ | −5.4246882 | $A_2 12$ | 6.380635 |
| $A_2 14$ | −3.751575 | $A_2 16$ | 0.88613003 |

Fig. 11D

Longitudinal Aberration
NA 0.86

-0.0100    -0.0050    0.0000    0.0050    0.0100
mm

## Fig. 12A

RADIUS OF SURFACE R2 (mm)

1.20

1.00

0.80

0.60

0.40

0.20

0.00

-0.06    -0.04    -0.02    0
sag(mm)

## Fig. 12B

## Fig. 12C

| | CURVATURE RADIUS R(mm) | INTER-PLANE DISTANCE d (mm) | REFRACTIVE INDEX n | ABBE NUMBER νd |
|---|---|---|---|---|
| 0 (APERTURE STOP SURFACE) | ∞ | 0 | | |
| 1 (OPTICAL PICKUP LENS SURFACE R1) | 1.191532 | 1.880206 | 1.589500 | 60.1 |
| 2 (OPTICAL PICKUP LENS SURFACE R2) | -3.403963 | 0.6781086 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 13A

| f (mm) | 1.765 | NA | 0.87 |
|---|---|---|---|
| WORKING DISTANCE WD (mm) | 0.6781086 | EFFECTIVE DIAMETER (mm) | 3.071 |

Fig. 13B

| ASPHERIC COEFFICIENT OF OPTICAL PICKUP LENS SURFACE R1 | | | |
|---|---|---|---|
| $k1$ | -0.9492633 | $A_14$ | 0.044592937 |
| $A_16$ | -0.0068437749 | $A_18$ | 0.021477068 |
| $A_110$ | -0.019768666 | $A_112$ | 0.012293489 |
| $A_114$ | -0.0038200489 | $A_116$ | 0.00050129802 |

Fig. 13C

| ASPHERIC COEFFICIENT OF OPTICAL PICKUP LENS SURFACE R2 | | | |
|---|---|---|---|
| $k2$ | -182.9027 | $A_24$ | 0.027690813 |
| $A_26$ | 0.067467218 | $A_28$ | -0.12461531 |
| $A_210$ | 0.089306502 | $A_212$ | -0.027291059 |
| $A_214$ | 0.00074940155 | $A_216$ | 0.00092481679 |

Fig. 13D

Longitudinal Aberration

NA 0.87

-0.0100    -0.0050    0.0000    0.0050    0.0100

mm

Fig. 14A

RADIUS OF SURFACE R2 (mm)

1.20

1.00

0.80

0.60

0.40

0.20

0.00

-0.03    -0.02    -0.01    0

sag(mm)

Fig. 14B

Fig. 14C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | | | |
| 1 (OPTICAL PICKUP LENS SURFACE R1) | 0.9535233 | 1.500789 | 1.589900 | 61.9 |
| 2 (OPTICAL PICKUP LENS SURFACE R2) | -2.709719 | 0.5326224 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 15A

| f (mm) | 1.41 | NA | 0.87 |
|---|---|---|---|
| WORKING DISTANCE WD (mm) | 0.5326224 | EFFECTIVE DIAMETER (mm) | 2.45 |

Fig. 15B

| ASPHERIC COEFFICIENT OF OPTICAL PICKUP LENS SURFACE R1 | | | |
|---|---|---|---|
| k1 | -0.9600111 | $A_1 4$ | 0.088155058 |
| $A_1 6$ | -0.020201892 | $A_1 8$ | 0.10304172 |
| $A_1 10$ | -0.14913915 | $A_1 12$ | 0.14541671 |
| $A_1 14$ | -0.070831316 | $A_1 16$ | 0.01461419 |

Fig. 15C

| ASPHERIC COEFFICIENT OF OPTICAL PICKUP LENS SURFACE R2 | | | |
|---|---|---|---|
| k2 | -173.3174 | $A_2 4$ | 0.055207581 |
| $A_2 6$ | 0.20760269 | $A_2 8$ | -0.60003347 |
| $A_2 10$ | 0.6732648 | $A_2 12$ | -0.32321924 |
| $A_2 14$ | 0.015478211 | $A_2 16$ | 0.026017588 |

Fig. 15D

Longitudinal Aberration
NA 0.87

-0.0100    -0.0050    0.0000    0.0050    0.0100
mm

Fig. 16A

Fig. 16B

Fig. 16C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.8001256 | 1.252404 | 1.589500 | 62.1 |
| 2 (OPTICAL PICKUP LENS SURFACE R2) | −2.233906 | 0.4410299 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 17A

| f (mm) | 1.18 | NA | 0.87 |
|---|---|---|---|
| WORKING DISTANCE WD (mm) | 0.4410299 | EFFECTIVE DIAMETER (mm) | 2.05 |

Fig. 17B

| ASPHERIC COEFFICIENT OF OPTICAL PICKUP LENS SURFACE R1 | | | |
|---|---|---|---|
| k1 | −0.9594913 | $A_1 4$ | 0.14877579 |
| $A_1 6$ | −0.045632834 | $A_1 8$ | 0.35019747 |
| $A_1 10$ | −0.7328475 | $A_1 12$ | 1.0313709 |
| $A_1 14$ | −0.72313909 | $A_1 16$ | 0.21427771 |

Fig. 17C

| ASPHERIC COEFFICIENT OF OPTICAL PICKUP LENS SURFACE R2 | | | |
|---|---|---|---|
| k2 | −161.224 | $A_2 4$ | 0.094760596 |
| $A_2 6$ | 0.50494165 | $A_2 8$ | −2.0833173 |
| $A_2 10$ | 3.3426387 | $A_2 12$ | −2.3085402 |
| $A_2 14$ | 0.18292616 | $A_2 16$ | 0.3648101 |

Fig. 17D

Longitudinal Aberration

NA 0.87

-0.0100    -0.0050    0.0000    0.0050    0.0100

mm

Fig. 18A

0.90
0.80
0.70
0.60
0.50
0.40
0.30
0.20
0.10
0.00

RADIUS OF SURFACE R2 (mm)

-0.03    -0.02    -0.01    0

sag(mm)

Fig. 18B

Fig. 18C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 1.228405 | 1.861999 | 1.610000 | 61.5 |
| 2 (OPTICAL PICKUP LENS SURFACE R2) | -3.709981 | 0.697384 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

## Fig. 19A

| f (mm) | 1.765 | NA | 0.85 |
|---|---|---|---|
| WORKING DISTANCE WD (mm) | 0.697384 | EFFECTIVE DIAMETER (mm) | 3.01 |

## Fig. 19B

| ASPHERIC COEFFICIENT OF OPTICAL PICKUP LENS SURFACE R1 | | | |
|---|---|---|---|
| k1 | -0.933373 | $A_1 4$ | 0.055949772 |
| $A_1 6$ | -0.041886709 | $A_1 8$ | 0.07248633 |
| $A_1 10$ | -0.06826189 | $A_1 12$ | 0.040094777 |
| $A_1 14$ | -0.012519385 | $A_1 16$ | 0.001630436 |

## Fig. 19C

| ASPHERIC COEFFICIENT OF OPTICAL PICKUP LENS SURFACE R2 | | | |
|---|---|---|---|
| k2 | -455.5753 | $A_2 4$ | -0.010152777 |
| $A_2 6$ | 0.14291499 | $A_2 8$ | -0.14735344 |
| $A_2 10$ | -0.027462306 | $A_2 12$ | 0.15058201 |
| $A_1 14$ | -0.1014961 | $A_1 16$ | 0.022479329 |

## Fig. 19D

Longitudinal Aberration
NA 0.85

-0.0100    -0.0050    0.0000    0.0050    0.0100
mm

**Fig. 20A**

**Fig. 20B**

sag(mm)

RADIUS OF SURFACE R2 (mm)

-0.03    -0.02    -0.01    0

**Fig. 20C**

| | CURVATURE RADIUS R (mm) | INTER-PLANE DISTANCE d (mm) | REFRACTIVE INDEX n | ABBE NUMBER ν d |
|---|---|---|---|---|
| 0 (APERTURE STOP SURFACE) | ∞ | 0 | | |
| 1 (OPTICAL PICKUP LENS SURFACE R1) | 1.189682 | 1.892 | 1.580000 | 62.8 |
| 2 (OPTICAL PICKUP LENS SURFACE R2) | -3.053853 | 0.6806319 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 21A

| f (mm) | 1.765 | NA | 0.87 |
|---|---|---|---|
| WORKING DISTANCE WD (mm) | 0.6806319 | EFFECTIVE DIAMETER (mm) | 3.07 |

Fig. 21B

| ASPHERIC COEFFICIENT OF OPTICAL PICKUP LENS SURFACE R1 | | | |
|---|---|---|---|
| k1 | -0.9580877 | $A_1 4$ | 0.045801354 |
| $A_1 6$ | -0.007251242 | $A_1 8$ | 0.021672754 |
| $A_1 10$ | -0.019763282 | $A_1 12$ | 0.012276112 |
| $A_1 14$ | -0.0038263848 | $A_1 16$ | 0.00050735434 |

Fig. 21C

| ASPHERIC COEFFICIENT OF OPTICAL PICKUP LENS SURFACE R2 | | | |
|---|---|---|---|
| k2 | -143.2029 | $A_2 4$ | 0.027970648 |
| $A_2 6$ | 0.067411313 | $A_2 8$ | -0.1237978 |
| $A_2 10$ | 0.088770483 | $A_2 12$ | -0.027492372 |
| $A_2 14$ | 0.0010203336 | $A_2 16$ | 0.0008590202 |

Fig. 21D

Longitudinal Aberration
NA 0.87

Fig. 22A

Fig. 22B

Fig. 22C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.9425122 | 1.502034 | 1.570000 | 63.5 |
| 2 (OPTICAL PICKUP LENS SURFACE R2) | −2.299648 | 0.5402237 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 23A

| f (mm) | 1.41 | NA | 0.87 |
|---|---|---|---|
| WORKING DISTANCE WD (mm) | 0.5402237 | EFFECTIVE DIAMETER (mm) | 2.45 |

Fig. 23B

| ASPHERIC COEFFICIENT OF OPTICAL PICKUP LENS SURFACE R1 | | | |
|---|---|---|---|
| k1 | −0.9565323 | $A_1 4$ | 0.090865527 |
| $A_1 6$ | −0.020422483 | $A_1 8$ | 0.10301823 |
| $A_1 10$ | −0.14836638 | $A_1 12$ | 0.14583109 |
| $A_1 14$ | −0.070851658 | $A_1 16$ | 0.01430004 |

Fig. 23C

| ASPHERIC COEFFICIENT OF OPTICAL PICKUP LENS SURFACE R2 | | | |
|---|---|---|---|
| k2 | −118.3703 | $A_2 4$ | 0.052874754 |
| $A_2 6$ | 0.20738386 | $A_2 8$ | −0.60144087 |
| $A_2 10$ | 0.67131768 | $A_2 12$ | −0.3220786 |
| $A_2 14$ | 0.020383006 | $A_2 16$ | 0.022620086 |

Fig. 23D

Longitudinal Aberration

NA 0.87

-0.0100    -0.0050    0.0000    0.0050    0.0100

mm

Fig. 24A

RADIUS OF SURFACE R2 (mm)

1.20

1.00

0.80

0.60

0.40

0.20

0.00

-0.04    -0.03    -0.02    -0.01    0

sag(mm)

Fig. 24B

Fig. 24C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | $\infty$ | 0 | | |
| 1 (OPTICAL PICKUP LENS SURFACE R1) | 0.7964245 | 1.41 | 1.570000 | 63.5 |
| 2 (OPTICAL PICKUP LENS SURFACE R2) | -1.545441 | 0.367573 | | |
| 3 (LIGHT TRANSMITTING LAYER IN OPTICAL DISC) | $\infty$ | 0.0875 | 1.621308 | 29.8 |
| 4 (LIGHT TRANSMITTING LAYER IN OPTICAL DISC) | $\infty$ | 0 | | |

## Fig. 25A

| f (mm) | 1.18 | NA | 0.87 |
|---|---|---|---|
| WORKING DISTANCE WD (mm) | 0.367573 | EFFECTIVE DIAMETER (mm) | 2.05 |

## Fig. 25B

| ASPHERIC COEFFICIENT OF OPTICAL PICKUP LENS SURFACE R1 | | | |
|---|---|---|---|
| k1 | -0.9605808 | $A_1 4$ | 0.1392074 |
| $A_1 6$ | -0.022166318 | $A_1 8$ | 0.32576885 |
| $A_1 10$ | -0.73020892 | $A_1 12$ | 1.0409532 |
| $A_1 14$ | -0.72543054 | $A_1 16$ | 0.2110024 |

## Fig. 25C

| ASPHERIC COEFFICIENT OF OPTICAL PICKUP LENS SURFACE R2 | | | |
|---|---|---|---|
| k2 | -74.59183 | $A_2 4$ | 0.23922495 |
| $A_2 6$ | 0.24810152 | $A_2 8$ | -2.4411527 |
| $A_2 10$ | 4.3912018 | $A_2 12$ | -0.72293383 |
| $A_2 14$ | -5.729731 | $A_2 16$ | 4.5963303 |

## Fig. 25D

Longitudinal Aberration
NA 0.87

-0.01 00    -0.0050    0.0000    0.0050    0.01 00

mm

Fig. 26A

Fig. 26B

Fig. 26C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 1.268997 | 2.11 | 1.640000 | 55.0 |
| 2 (OPTICAL PICKUP LENS SURFACE R2) | -3.610762 | 0.5657746 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 27A

| f (mm) | 1.765 | NA | 0.87 |
|---|---|---|---|
| WORKING DISTANCE WD (mm) | 0.5657746 | EFFECTIVE DIAMETER (mm) | 3.07 |

Fig. 27B

| ASPHERIC COEFFICIENT OF OPTICAL PICKUP LENS SURFACE R1 | | | |
|---|---|---|---|
| k1 | -1.044086 | $A_1 4$ | 0.056858804 |
| $A_1 6$ | -0.036969722 | $A_1 8$ | 0.06823844 |
| $A_1 10$ | -0.066340745 | $A_1 12$ | 0.039968808 |
| $A_1 14$ | -0.012879695 | $A_1 16$ | 0.0017427414 |

Fig. 27C

| ASPHERIC COEFFICIENT OF OPTICAL PICKUP LENS SURFACE R2 | | | |
|---|---|---|---|
| k2 | -726.2614 | $A_2 4$ | -0.0069533698 |
| $A_2 6$ | 0.42633354 | $A_2 8$ | -0.90876836 |
| $A_2 10$ | 0.61432937 | $A_2 12$ | 0.40910207 |
| $A_2 14$ | -0.76415264 | $A_2 16$ | 0.28848611 |

Fig. 27D

Longitudinal Aberration
NA 0.87

-0.0100    -0.0050    0.0000    0.0050    0.0100
mm

Fig. 28A

RADIUS OF SURFACE R2 (mm)

1.20
1.00
0.80
0.60
0.40
0.20
0.00

-0.02  -0.01    0    0.01   0.02   0.03
sag(mm)

Fig. 28B

Fig. 28C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | $\infty$ | 0 | | |
| 1 (OPTICAL PICKUP LENS SURFACE R1) | 1.124288 | 2.109175 | 1.510000 | 72.1 |
| 2 (OPTICAL PICKUP LENS SURFACE R2) | -1.654282 | 0.5926939 | | |
| 3 (LIGHT TRANSMITTING LAYER IN OPTICAL DISC) | $\infty$ | 0.0875 | 1.621308 | 29.8 |
| 4 (LIGHT TRANSMITTING LAYER IN OPTICAL DISC) | $\infty$ | 0 | | |

Fig. 29A

| f (mm) | 1.765 | NA | 0.87 |
|---|---|---|---|
| WORKING DISTANCE WD (mm) | 0.5926939 | EFFECTIVE DIAMETER (mm) | 3.07 |

Fig. 29B

| ASPHERIC COEFFICIENT OF OPTICAL PICKUP LENS SURFACE R1 | | | |
|---|---|---|---|
| k1 | -0.9384436 | $A_1 4$ | 0.044567441 |
| $A_1 6$ | 0.0031781266 | $A_1 8$ | 0.0071153218 |
| $A_1 10$ | -0.0063732122 | $A_1 12$ | 0.0054324291 |
| $A_1 14$ | -0.0021163885 | $A_1 16$ | 0.00038807555 |

Fig. 29C

| ASPHERIC COEFFICIENT OF OPTICAL PICKUP LENS SURFACE R2 | | | |
|---|---|---|---|
| k2 | -39.44136 | $A_2 4$ | 0.049311919 |
| $A_2 6$ | 0.020205358 | $A_2 8$ | -0.071421532 |
| $A_2 10$ | 0.069017618 | $A_2 12$ | -0.035588392 |
| $A_2 14$ | 0.0095701237 | $A_2 16$ | -0.0010241709 |

Fig. 29D

Longitudinal Aberration
NA 0.87

-0.0100    -0.0050    0.0000    0.0050    0.0100
mm

Fig. 30A

RADIUS OF SURFACE R2 (mm)

1.40
1.20
1.00
0.80
0.60
0.40
0.20
0.00

-0.1    -0.05    0
sag(mm)

Fig. 30B

Fig. 30C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 1.022536 | 1.68495 | 1.640000 | 55.0 |
| 2 (OPTICAL PICKUP LENS SURFACE R2) | -2.741647 | 0.4493312 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 31A

| f (mm) | 1.41 | NA | 0.87 |
|---|---|---|---|
| WORKING DISTANCE WD (mm) | 0.4493312 | EFFECTIVE DIAMETER (mm) | 2.45 |

Fig. 31B

| ASPHERIC COEFFICIENT OF OPTICAL PICKUP LENS SURFACE R1 | | | |
|---|---|---|---|
| k1 | -0.9645603 | $A_1 4$ | 0.10468541 |
| $A_1 6$ | -0.12249481 | $A_1 8$ | 0.34809003 |
| $A_1 10$ | -0.51790173 | $A_1 12$ | 0.46920166 |
| $A_1 14$ | -0.22678856 | $A_1 16$ | 0.046341405 |

Fig. 31C

| ASPHERIC COEFFICIENT OF OPTICAL PICKUP LENS SURFACE R2 | | | |
|---|---|---|---|
| k2 | -606.7909 | $A_2 4$ | 0.10519824 |
| $A_2 6$ | 0.37017977 | $A_2 8$ | -1.2124966 |
| $A_2 10$ | 0.53733141 | $A_2 12$ | 3.2473091 |
| $A_2 14$ | -5.5218119 | $A_2 16$ | 2.6223762 |

Fig. 31D

Longitudinal Aberration
NA 0.87

-0.01 00    -0.0050    0.0000    0.0050    0.01 00
mm

Fig. 32A

0.90
0.80
0.70
0.60
0.50
0.40
0.30
0.20
0.10
0.00

RADIUS OF SURFACE R2 (mm)

-0.02    -0.01    0    0.01    0.02
sag(mm)

Fig. 32B

Fig. 32C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.8427123 | 1.41 | 1.640000 | 55.0 |
| 2 (OPTICAL PICKUP LENS SURFACE R2) | −2.52389 | 0.3555572 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 33A

| f (mm) | 1.18 | NA | 0.87 |
|---|---|---|---|
| WORKING DISTANCE WD (mm) | 0.3555572 | EFFECTIVE DIAMETER (mm) | 2.05 |

Fig. 33B

| ASPHERIC COEFFICIENT OF OPTICAL PICKUP LENS SURFACE R1 | | | |
|---|---|---|---|
| k1 | −0.9827762 | $A_1 4$ | 0.13983568 |
| $A_1 6$ | −0.04947903 | $A_1 8$ | 0.35410773 |
| $A_1 10$ | −0.74497112 | $A_1 12$ | 1.0226357 |
| $A_1 14$ | −0.71959906 | $A_1 16$ | 0.21837798 |

Fig. 33C

| ASPHERIC COEFFICIENT OF OPTICAL PICKUP LENS SURFACE R2 | | | |
|---|---|---|---|
| k2 | −353.6122 | $A_2 4$ | 0.28576337 |
| $A_2 6$ | 0.1897616 | $A_2 8$ | −2.431659 |
| $A_2 10$ | 4.6319539 | $A_2 12$ | −0.63443207 |
| $A_2 14$ | −6.9566166 | $A_2 16$ | 5.5001634 |

Fig. 33D

Longitudinal Aberration
NA 0.87

-0.0100    -0.0050    0.0000    0.0050    0.0100
mm

Fig. 34A

RADIUS OF SURFACE R2 (mm)

0.70
0.60
0.50
0.40
0.30
0.20
0.10
0.00

-0.01    -0.005    0    0.005    0.01
sag(mm)

Fig. 34B

Fig. 34C

| | CURVATURE RADIUS R (mm) | INTER-PLANE DISTANCE d (mm) | REFRACTIVE INDEX n | ABBE NUMBER $\nu d$ |
|---|---|---|---|---|
| 0 (APERTURE STOP SURFACE) | ∞ | 0 | | |
| 1 (OPTICAL PICKUP LENS SURFACE R1) | 0.9877811 | 1.269 | 1.640000 | 55.0 |
| 2 (OPTICAL PICKUP LENS SURFACE R2) | -5.205923 | 0.6491336 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 35A

| f (mm) | 1.41 | NA | 0.87 |
|---|---|---|---|
| WORKING DISTANCE WD (mm) | 0.6491336 | EFFECTIVE DIAMETER (mm) | 2.44 |

Fig. 35B

| ASPHERIC COEFFICIENT OF OPTICAL PICKUP LENS SURFACE R1 | | | |
|---|---|---|---|
| k1 | -1.021529 | $A_14$ | 0.12263938 |
| $A_16$ | -0.13960613 | $A_18$ | 0.38200409 |
| $A_110$ | -0.55699969 | $A_112$ | 0.4973079 |
| $A_114$ | -0.2333599 | $A_116$ | 0.045056312 |

Fig. 35C

| ASPHERIC COEFFICIENT OF OPTICAL PICKUP LENS SURFACE R2 | | | |
|---|---|---|---|
| k2 | -1283.085 | $A_24$ | 0.06691832 |
| $A_26$ | -0.059741496 | $A_28$ | 0.3161995 |
| $A_210$ | -0.79754312 | $A_212$ | 0.91510312 |
| $A_214$ | -0.50238815 | $A_216$ | 0.10800529 |

Fig. 35D

Longitudinal Aberration
NA 0.87

Fig. 36A

RADIUS OF SURFACE R2 (mm)

1.20

1.00

0.80

0.60

0.40

0.20

0.00

-0.02    0    0.02    0.04

sag(mm)

Fig. 36B

Fig. 36C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 1.125578 | 1.69 | 1.530000 | 65.3 |
| 2 (OPTICAL PICKUP LENS SURFACE R2) | -2.657615 | 0.7930357 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 37A

| f (mm) | 1.765 | NA | 0.87 |
|---|---|---|---|
| WORKING DISTANCE WD (mm) | 0.7930357 | EFFECTIVE DIAMETER (mm) | 3.06 |

Fig. 37B

| ASPHERIC COEFFICIENT OF OPTICAL PICKUP LENS SURFACE R1 | | | |
|---|---|---|---|
| k1 | -1.027897 | $A_14$ | 0.059195591 |
| $A_16$ | -0.005568913 | $A_18$ | 0.014102018 |
| $A_110$ | -0.0058692147 | $A_112$ | -0.00026732758 |
| $A_114$ | 0.0016815396 | $A_116$ | -0.00038238792 |

Fig. 37C

| ASPHERIC COEFFICIENT OF OPTICAL PICKUP LENS SURFACE R2 | | | |
|---|---|---|---|
| k2 | -76.97271 | $A_24$ | 0.029612385 |
| $A_26$ | -0.03401654 | $A_28$ | 0.067899864 |
| $A_210$ | -0.069152263 | $A_212$ | 0.035806394 |
| $A_214$ | -0.0093407832 | $A_216$ | 0.00098109414 |

Fig. 37D

Longitudinal Aberration

NA 0.87

-0.0100    -0.0050    0.0000    0.0050    0.0100

mm

Fig. 38A

1.80
1.60
1.40
1.20
1.00
0.80
0.60
0.40
0.20
0.00

RADIUS OF SURFACE R2 (mm)

-0.08   -0.06   -0.04   -0.02   0

sag(mm)

Fig. 38B

Fig. 38C

| | CURVATURE RADIUS R(mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 1.115539 | 1.71 | 1.520000 | 71.2 |
| 2 (OPTICAL PICKUP LENS SURFACE R2) | -2.46248 | 0.7854462 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 39A

| f (mm) | 1.765 | NA | 0.87 |
|---|---|---|---|
| WORKING DISTANCE WD (mm) | 0.7854462 | EFFECTIVE DIAMETER (mm) | 3.054 |

Fig. 39B

| ASPHERIC COEFFICIENT OF OPTICAL PICKUP LENS SURFACE R1 | | | |
|---|---|---|---|
| k1 | -1.022663 | $A_1 4$ | 0.058942889 |
| $A_1 6$ | -0.0053838557 | $A_1 8$ | 0.016002706 |
| $A_1 10$ | -0.0089006439 | $A_1 12$ | 0.0019022455 |
| $A_1 16$ | 0.00098142769 | $A_1 16$ | -0.0002984782 |

Fig. 39C

| ASPHERIC COEFFICIENT OF OPTICAL PICKUP LENS SURFACE R2 | | | |
|---|---|---|---|
| k2 | -63.49834 | $A_2 4$ | 0.03025509 |
| $A_2 6$ | -0.033664287 | $A_2 8$ | 0.068653753 |
| $A_2 10$ | -0.071943926 | $A_2 12$ | 0.038159486 |
| $A_2 16$ | -0.010159171 | $A_2 16$ | 0.0010857375 |

Fig. 39D

Longitudinal Aberration
NA 0.87

-0.0100    -0.0050    0.0000    0.0050    0.0100
mm

Fig. 40A

Fig. 40B

Fig. 40C

| | CURVATURE RADIUS R(mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 1.105804 | 1.75 | 1.510000 | 72.1 |
| 2 (OPTICAL PICKUP LENS SURFACE R2) | -2.253043 | 0.7676265 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

## Fig. 41A

| f (mm) | 1.765 | NA | 0.87 |
|---|---|---|---|
| WORKING DISTANCE WD (mm) | 0.7676265 | EFFECTIVE DIAMETER (mm) | 3.054 |

## Fig. 41B

| ASPHERIC COEFFICIENT OF OPTICAL PICKUP LENS SURFACE R1 | | | |
|---|---|---|---|
| k1 | -1.052229 | $A_14$ | 0.06206122 |
| $A_16$ | -0.0052289708 | $A_18$ | 0.016529271 |
| $A_110$ | -0.0094237781 | $A_112$ | 0.0020510563 |
| $A_114$ | 0.00097282779 | $A_116$ | -0.00029150076 |

## Fig. 41C

| ASPHERIC COEFFICIENT OF OPTICAL PICKUP LENS SURFACE R2 | | | |
|---|---|---|---|
| k2 | -53.38526 | $A_24$ | 0.029752378 |
| $A_26$ | -0.032035616 | $A_28$ | 0.067499761 |
| $A_210$ | -0.071790634 | $A_212$ | 0.038359519 |
| $A_214$ | -0.010259361 | $A_216$ | 0.0011001194 |

## Fig. 41D

Longitudinal Aberration
NA 0.87

-0.0100   -0.0050   0.0000   0.0050   0.0100
mm

Fig. 42A

RADIUS OF SURFACE R2 (mm)

1.80
1.60
1.40
1.20
1.00
0.80
0.60
0.40
0.20
0.00

-0.1   -0.05   0

sag(mm)

Fig. 42B

Fig. 42C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.8951218 | 1.37 | 1.510000 | 72.1 |
| 2 (OPTICAL PICKUP LENS SURFACE R2) | -1.766506 | 0.6271601 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 43A

| f (mm) | 1.41 | NA | 0.87 |
|---|---|---|---|
| WORKING DISTANCE WD (mm) | 0.6271601 | EFFECTIVE DIAMETER (mm) | 2.44 |

Fig. 43B

| ASPHERIC COEFFICIENT OF OPTICAL PICKUP LENS SURFACE R1 | | | |
|---|---|---|---|
| k1 | -1.009089 | $A_1 4$ | 0.12908173 |
| $A_1 6$ | -0.061022809 | $A_1 8$ | 0.16879878 |
| $A_1 10$ | -0.18477171 | $A_1 12$ | 0.097246165 |
| $A_1 14$ | -0.0013373834 | $A_1 16$ | -0.0076762199 |

Fig. 43C

| ASPHERIC COEFFICIENT OF OPTICAL PICKUP LENS SURFACE R2 | | | |
|---|---|---|---|
| k2 | -61.4956 | $A_2 4$ | 0.055416533 |
| $A_2 6$ | -0.19788318 | $A_2 8$ | 0.63194589 |
| $A_2 10$ | -0.95825215 | $A_2 12$ | 0.75560862 |
| $A_2 14$ | -0.30470257 | $A_2 16$ | 0.049895607 |

Fig. 43D

Longitudinal Aberration
NA 0.87

-0.0100    -0.0050    0.0000    0.0050    0.0100
mm

Fig. 44A

RADIUS OF SURFACE R2 (mm)

1.40
1.20
1.00
0.80
0.60
0.40
0.20
0.00

-0.08    -0.06    -0.04    -0.02    0
sag(mm)

Fig. 44B

Fig. 44C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 1.131051 | 1.645339 | 1.550000 | 62.1 |
| 2 (OPTICAL PICKUP LENS SURFACE R2) | -3.313853 | 0.7999673 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

$$\text{Fig. } 45A$$

| f (mm) | 1.765 | NA | 0.86 |
|---|---|---|---|
| WORKING DISTANCE WD (mm) | 0.7999673 | EFFECTIVE DIAMETER (mm) | 3.04 |

$$\text{Fig. } 45B$$

| ASPHERIC COEFFICIENT OF OPTICAL PICKUP LENS SURFACE R1 | | | |
|---|---|---|---|
| k1 | -0.9617149 | $A_1 4$ | 0.046773933 |
| $A_1 6$ | 0.00044250507 | $A_1 8$ | 0.013249302 |
| $A_1 10$ | -0.010233637 | $A_1 12$ | 0.0044753146 |
| $A_1 14$ | -0.00032012855 | $A_1 16$ | -7.6326919e-005 |

$$\text{Fig. } 45C$$

| ASPHERIC COEFFICIENT OF OPTICAL PICKUP LENS SURFACE R2 | | | |
|---|---|---|---|
| k2 | -79.58361 | $A_2 4$ | 0.062982414 |
| $A_2 6$ | -0.096285282 | $A_2 8$ | 0.14032715 |
| $A_2 10$ | -0.12412936 | $A_2 12$ | 0.061702932 |
| $A_2 14$ | -0.016114362 | $A_2 16$ | 0.0017273197 |

$$\text{Fig. } 45D$$

Longitudinal Aberration

NA 0.86

-0.01 00    -0.0050    0.0000    0.0050    0.01 00

mm

Fig.  46A

1.80
1.60
1.40
1.20
1.00
0.80
0.60
0.40
0.20
0.00

RADIUS OF SURFACE R2 (mm)

-0.06    -0.04    -0.02    0

sag(mm)

Fig.  46B

Fig.  46C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | $\infty$ | 0 | | |
| 1 (OPTICAL PICKUP LENS SURFACE R1) | 1.137101 | 1.66 | 1.540000 | 64.3 |
| 2 (OPTICAL PICKUP LENS SURFACE R2) | −2.874943 | 0.8075337 | | |
| 3 (LIGHT TRANSMITTING LAYER IN OPTICAL DISC) | $\infty$ | 0.0875 | 1.621308 | 29.8 |
| 4 (LIGHT TRANSMITTING LAYER IN OPTICAL DISC) | $\infty$ | 0 | | |

Fig. 47A

| f (mm) | 1.765 | NA | 0.86 |
|---|---|---|---|
| WORKING DISTANCE WD (mm) | 0.8075337 | EFFECTIVE DIAMETER (mm) | 3.05 |

Fig. 47B

| ASPHERIC COEFFICIENT OF OPTICAL PICKUP LENS SURFACE R1 | | | |
|---|---|---|---|
| k1 | −1.030853 | $A_1 4$ | 0.058976116 |
| $A_1 6$ | −0.006693647 | $A_1 8$ | 0.016145772 |
| $A_1 10$ | −0.008609903 | $A_1 12$ | 0.001965323 |
| $A_1 14$ | 0.0008359665 | $A_1 16$ | −0.00028122847 |

Fig. 47C

| ASPHERIC COEFFICIENT OF OPTICAL PICKUP LENS SURFACE R2 | | | |
|---|---|---|---|
| k2 | −90.20658 | $A_2 4$ | 0.033031609 |
| $A_2 6$ | −0.035085883 | $A_2 8$ | 0.067129169 |
| $A_2 10$ | −0.07099281 | $A_2 12$ | 0.038498861 |
| $A_2 14$ | −0.010512051 | $A_2 16$ | 0.0011534855 |

Fig. 47D

Longitudinal Aberration
NA 0.86

-0.01 00    -0.0050    0.0000    0.0050    0.01 00

mm

Fig. 48A

RADIUS OF SURFACE R2 (mm)

1.60
1.40
1.20
1.00
0.80
0.60
0.40
0.20
0.00

-0.06        -0.04        -0.02        0

sag(mm)

Fig. 48B

Fig. 48C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.9229223 | 1.269 | 1.550000 | 62.1 |
| 2 (OPTICAL PICKUP LENS SURFACE R2) | −2.486232 | 0.6680973 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 49A

| f (mm) | 1.41 | NA | 0.86 |
|---|---|---|---|
| WORKING DISTANCE WD (mm) | 0.6680973 | EFFECTIVE DIAMETER (mm) | 2.43 |

Fig. 49B

| ASPHERIC COEFFICIENT OF OPTICAL PICKUP LENS SURFACE R1 | | | |
|---|---|---|---|
| k1 | −1.07224 | $A_14$ | 0.13325697 |
| $A_16$ | −0.051674643 | $A_18$ | 0.12916155 |
| $A_110$ | −0.11528444 | $A_112$ | 0.019872451 |
| $A_114$ | 0.048398506 | $A_116$ | −0.021182589 |

Fig. 49C

| ASPHERIC COEFFICIENT OF OPTICAL PICKUP LENS SURFACE R2 | | | |
|---|---|---|---|
| k2 | −116.3511 | $A_24$ | 0.10743055 |
| $A_26$ | −0.42254793 | $A_28$ | 1.1101925 |
| $A_210$ | −1.52129 | $A_212$ | 1.1302302 |
| $A_214$ | −0.43758356 | $A_216$ | 0.069488033 |

Fig. 49D

Longitudinal Aberration
NA 0.86

-0.0100    -0.0050    0.0000    0.0050    0.0100

mm

Fig. 50A

RADIUS OF SURFACE R2 (mm)

1.40
1.20
1.00
0.80
0.60
0.40
0.20
0.00

-0.06    -0.04    -0.02    0

sag(mm)

Fig. 50B

Fig. 50C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.9039366 | 1.33 | 1.530000 | 65.3 |
| 2 (OPTICAL PICKUP LENS SURFACE R2) | -2.114554 | 0.6373816 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 51A

| f (mm) | 1.41 | NA | 0.86 |
|---|---|---|---|
| WORKING DISTANCE WD (mm) | 0.6373816 | EFFECTIVE DIAMETER (mm) | 2.43 |

Fig. 51B

| ASPHERIC COEFFICIENT OF OPTICAL PICKUP LENS SURFACE R1 | | | |
|---|---|---|---|
| k1 | -1.048595 | $A_1 4$ | 0.12559292 |
| $A_1 6$ | -0.040625774 | $A_1 8$ | 0.12904932 |
| $A_1 10$ | -0.14162433 | $A_1 12$ | 0.075984163 |
| $A_1 14$ | 0.0021755834 | $A_1 16$ | -0.0078152356 |

Fig. 51C

| ASPHERIC COEFFICIENT OF OPTICAL PICKUP LENS SURFACE R2 | | | |
|---|---|---|---|
| k2 | -79.03513 | $A_2 4$ | 0.067141601 |
| $A_2 6$ | -0.20497667 | $A_2 8$ | 0.62317868 |
| $A_2 10$ | -0.95004782 | $A_2 12$ | 0.75943913 |
| $A_2 14$ | -0.31082207 | $A_2 16$ | 0.051645069 |

Fig. 51D

Longitudinal Aberration

NA 0.86

-0.0100    -0.0050    0.0000    0.0050    0.0100

mm

Fig. 52A

RADIUS OF SURFACE R2 (mm)

1.40

1.20

1.00

0.80

0.60

.40

0.20

0.00

-0.06    -0.04    -0.02    0

sag(mm)

Fig. 52B

Fig. 52C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 0.9001396 | 1.354 | 1.520000 | 71.2 |
| 2 (OPTICAL PICKUP LENS SURFACE R2) | -1.918996 | 0.6304473 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 53A

| f (mm) | 1.41 | NA | 0.86 |
|---|---|---|---|
| WORKING DISTANCE WD (mm) | 0.6304473 | EFFECTIVE DIAMETER (mm) | 2.43 |

Fig. 53B

| ASPHERIC COEFFICIENT OF OPTICAL PICKUP LENS SURFACE R1 | | | |
|---|---|---|---|
| k1 | -1.021251 | $A_1 4$ | 0.12623005 |
| $A_1 6$ | -0.051814781 | $A_1 8$ | 0.15226555 |
| $A_1 10$ | -0.16958584 | $A_1 12$ | 0.093908025 |
| $A_1 14$ | -0.0044131766 | $A_1 16$ | -0.0064095882 |

Fig. 53C

| ASPHERIC COEFFICIENT OF OPTICAL PICKUP LENS SURFACE R2 | | | |
|---|---|---|---|
| k2 | -69.55357 | $A_2 4$ | 0.062078148 |
| $A_2 6$ | -0.20370474 | $A_2 8$ | 0.62936503 |
| $A_2 10$ | -0.95326807 | $A_2 12$ | 0.75554936 |
| $A_2 14$ | -0.3067312 | $A_2 16$ | 0.050587061 |

Fig. 53D

Longitudinal Aberration

NA 0.86

-0.0100    -0.0050    0.0000    0.0050    0.01 0C

mm

Fig. 54A

RADIUS OF SURFACE R2 (mm)

1.40

1.20

1.00

0.80

0.60

0.40

0.20

0.00

-0.08    -0.06    -0.04    -0.02    0

sag(mm)

Fig. 54B

Fig. 54C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | $\infty$ | 0 | | |
| 1 (OPTICAL PICKUP LENS SURFACE R1) | 0.8051119 | 1.062 | 1.640000 | 55.1 |
| 2 (OPTICAL PICKUP LENS SURFACE R2) | -5.911139 | 0.5186146 | | |
| 3 (LIGHT TRANSMITTING LAYER IN OPTICAL DISC) | $\infty$ | 0.0875 | 1.621308 | 29.8 |
| 4 (LIGHT TRANSMITTING LAYER IN OPTICAL DISC) | $\infty$ | 0 | | |

Fig. 55A

| f (mm) | 1.18 | NA | 0.87 |
|---|---|---|---|
| WORKING DISTANCE WD (mm) | 0.5186146 | EFFECTIVE DIAMETER (mm) | 2.042 |

Fig. 55B

| ASPHERIC COEFFICIENT OF OPTICAL PICKUP LENS SURFACE R1 | | | |
|---|---|---|---|
| k1 | -1.016846 | $A_1 4$ | 0.14336762 |
| $A_1 6$ | -0.012564889 | $A_1 8$ | 0.29470033 |
| $A_1 10$ | -0.6704631 | $A_1 12$ | 1.0542626 |
| $A_1 14$ | -0.78436093 | $A_1 16$ | 0.22618785 |

Fig. 55C

| ASPHERIC COEFFICIENT OF OPTICAL PICKUP LENS SURFACE R2 | | | |
|---|---|---|---|
| k2 | -770.415 | $A_2 4$ | 0.046754134 |
| $A_2 6$ | 0.66689577 | $A_2 8$ | -2.2098704 |
| $A_2 10$ | 3.1209736 | $A_2 12$ | -2.1200379 |
| $A_2 14$ | 0.52924405 | $A_2 16$ | 0.033330668 |

Fig. 55D

Longitudinal Aberration
NA 0.87

-0.0100    -0.0050    0.0000    0.0050    0.0100
mm

Fig. 56A

Fig. 56B

RADIUS OF SURFACE R2 (mm)

1.00
0.90
0.80
0.70
0.60
0.50
0.40
0.30
0.20
0.10
0.00

-0.01    0    0.01    0.02.    0.03    0.04
sag(mm)

Fig. 56C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | $\infty$ | 0 | | |
| 1 (OPTICAL PICKUP LENS SURFACE R1) | 0.9094412 | 1.31 | 1.540000 | 64.3 |
| 2 (OPTICAL PICKUP LENS SURFACE R2) | -2.314889 | 0.6438528 | | |
| 3 (LIGHT TRANSMITTING LAYER IN OPTICAL DISC) | $\infty$ | 0.0875 | 1.621308 | 29.8 |
| 4 (LIGHT TRANSMITTING LAYER IN OPTICAL DISC) | $\infty$ | 0 | | |

Fig. 57A

| f (mm) | 1.41 | NA | 0.86 |
|---|---|---|---|
| WORKING DISTANCE WD (mm) | 0.6438528 | EFFECTIVE DIAMETER (mm) | 2.43 |

Fig. 57B

| ASPHERIC COEFFICIENT OF OPTICAL PICKUP LENS SURFACE R1 | | | |
|---|---|---|---|
| k1 | -1.037216 | $A_1 4$ | 0.12088226 |
| $A_1 6$ | -0.035389603 | $A_1 8$ | 0.11517092 |
| $A_1 10$ | -0.12436494 | $A_1 12$ | 0.066347618 |
| $A_1 14$ | 0.0038566815 | $A_1 16$ | -0.0076722834 |

Fig. 57C

| ASPHERIC COEFFICIENT OF OPTICAL PICKUP LENS SURFACE R2 | | | |
|---|---|---|---|
| k2 | -93.81054 | $A_2 4$ | 0.067898776 |
| $A_2 6$ | -0.20487399 | $A_2 8$ | 0.62345775 |
| $A_2 10$ | -0.95229733 | $A_2 12$ | 0.76263482 |
| $A_2 14$ | -0.31271551 | $A_2 16$ | 0.052060794 |

Fig. 57D

Longitudinal Aberration

NA 0.86

-0.01 00          -0.0050          0.0000          0.0050          0.01 00

mm

## Fig. 58A

1.40

1.20

1.00

0.80

0.60

0.40

0.20

0.00

RADIUS OF SURFACE R2 (mm)

-0.06          -0.04          -0.02          0

sag(mm)

## Fig. 58B

## Fig. 58C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | $\infty$ | 0 | | |
| 1 (OPTICAL PICKUP LENS SURFACE R1) | 0.7703533 | 1.1 | 1.530000 | 65.3 |
| 2 (OPTICAL PICKUP LENS SURFACE R2) | -1.679665 | 0.5423588 | | |
| 3 (LIGHT TRANSMITTING LAYER IN OPTICAL DISC) | $\infty$ | 0.0875 | 1.621308 | 29.8 |
| 4 (LIGHT TRANSMITTING LAYER IN OPTICAL DISC) | $\infty$ | 0 | | |

Fig. 59A

| f (mm) | 1.18 | NA | 0.86 |
|---|---|---|---|
| WORKING DISTANCE WD (mm) | 0.5423588 | EFFECTIVE DIAMETER (mm) | 2.04 |

Fig. 59B

| ASPHERIC COEFFICIENT OF OPTICAL PICKUP LENS SURFACE R1 | | | |
|---|---|---|---|
| k1 | -0.9608537 | $A_1 4$ | 0.23631377 |
| $A_1 6$ | -0.31532825 | $A_1 8$ | 1.0333374 |
| $A_1 10$ | -1.7599185 | $A_1 12$ | 1.6369588 |
| $A_1 14$ | -0.53423029 | $A_1 16$ | -0.020576434 |

Fig. 59C

| ASPHERIC COEFFICIENT OF OPTICAL PICKUP LENS SURFACE R2 | | | |
|---|---|---|---|
| k2 | -103.2593 | $A_2 4$ | 0.032963093 |
| $A_2 6$ | -0.33676253 | $A_2 8$ | 2.2305246 |
| $A_2 10$ | -5.3947166 | $A_2 12$ | 6.4049572 |
| $A_2 14$ | -3.8137658 | $A_2 16$ | 0.91427145 |

Fig. 59D

Longitudinal Aberration
NA 0.86

Fig. 60A

RADIUS OF SURFACE R2 (mm)

sag(mm)

Fig. 60B

Fig. 60C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 1.231135 | 1.589 | 1.640000 | 55.0 |
| 2 (OPTICAL PICKUP LENS SURFACE R2) | -6.797954 | 0.8220361 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 61A

| f (mm) | 1.765 | NA | 0.87 |
|---|---|---|---|
| WORKING DISTANCE WD (mm) | 0.8220361 | EFFECTIVE DIAMETER (mm) | 3.054 |

Fig. 61B

| ASPHERIC COEFFICIENT OF OPTICAL PICKUP LENS SURFACE R1 | | | |
|---|---|---|---|
| k1 | -1.021035 | $A_14$ | 0.062574235 |
| $A_16$ | -0.045241681 | $A_18$ | 0.079327627 |
| $A_110$ | -0.073809846 | $A_112$ | 0.042064319 |
| $A_114$ | -0.012595027 | $A_116$ | 0.0015526444 |

Fig. 61C

| ASPHERIC COEFFICIENT OF OPTICAL PICKUP LENS SURFACE R2 | | | |
|---|---|---|---|
| k2 | -1477.323 | $A_24$ | 0.0346752 |
| $A_26$ | -0.019615736 | $A_28$ | 0.065615895 |
| $A_210$ | -0.10571148 | $A_212$ | 0.077404108 |
| $A_214$ | -0.027088902 | $A_216$ | 0.0037085859 |

Fig. 61D

Longitudinal Aberration

NA 0.87

Fig. 62A

Fig. 62B

Fig. 62C

| | CURVATURE RADIUS R (mm) | INTER-PLANE DISTANCE d (mm) | REFRACTIVE INDEX n | ABBE NUMBER ν d |
|---|---|---|---|---|
| 0 (APERTURE STOP SURFACE) | ∞ | 0 | | |
| 1 (OPTICAL PICKUP LENS SURFACE R1) | 0.7844236 | 1.062 | 1.540000 | 64.3 |
| 2 (OPTICAL PICKUP LENS SURFACE R2) | -1.783328 | 0.5658496 | | |
| 3 (LIGHT TRANSMITTING LAYER IN OPTICAL DISC) | ∞ | 0.0875 | 1.621308 | 2.98 |
| 4 (LIGHT TRANSMITTING LAYER IN OPTICAL DISC) | ∞ | 0 | | |

Fig. 63A

| f (mm) | 1.18 | NA | 0.86 |
|---|---|---|---|
| WORKING DISTANCE WD (mm) | 0.5658496 | EFFECTIVE DIAMETER (mm) | 2.03 |

Fig. 63B

| ASPHERIC COEFFICIENT OF OPTICAL PICKUP LENS SURFACE R1 | | | |
|---|---|---|---|
| $k1$ | -1.067617 | $A_1 4$ | 0.29498064 |
| $A_1 6$ | -0.48058365 | $A_1 8$ | 1.5634422 |
| $A_1 10$ | -2.8433291 | $A_1 12$ | 2.8755736 |
| $A_1 14$ | -1.2503572 | $A_1 16$ | 0.13817705 |

Fig. 63C

| ASPHERIC COEFFICIENT OF OPTICAL PICKUP LENS SURFACE R2 | | | |
|---|---|---|---|
| $k2$ | -130.6428 | $A_2 4$ | 0.093196351 |
| $A_2 6$ | -0.79843961 | $A_2 8$ | 3.65791 |
| $A_2 10$ | -7.7151766 | $A_2 12$ | 8.4989355 |
| $A_2 14$ | -4.8070571 | $A_2 16$ | 1.1070974 |

Fig. 63D

Longitudinal Aberration
NA 0.86

Fig. 64A

Fig. 64B

Fig. 64C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | $\infty$ | 0 | | |
| 1 (OPTICAL PICKUP LENS SURFACE R1) | 1.144334 | 1.5885 | 1.570000 | 63.5 |
| 2 (OPTICAL PICKUP LENS SURFACE R2) | -4.129549 | 0.8215144 | | |
| 3 (LIGHT TRANSMITTING LAYER IN OPTICAL DISC) | $\infty$ | 0.0875 | 1.621308 | 29.8 |
| 4 (LIGHT TRANSMITTING LAYER IN OPTICAL DISC) | $\infty$ | 0 | | |

## Fig. 65A

| f (mm) | 1.765 | NA | 0.87 |
|---|---|---|---|
| WORKING DISTANCE WD (mm) | 0.8215144 | EFFECTIVE DIAMETER (mm) | 3.07 |

## Fig. 65B

| ASPHERIC COEFFICIENT OF OPTICAL PICKUP LENS SURFACE R1 | | | |
|---|---|---|---|
| k1 | -0.9235149 | $A_1 4$ | 0.046192323 |
| $A_1 6$ | -0.0093976409 | $A_1 8$ | 0.02383725 |
| $A_1 10$ | -0.021179362 | $A_1 12$ | 0.013479068 |
| $A_1 14$ | -0.0040714599 | $A_1 16$ | 0.00048835963 |

## Fig. 65C

| ASPHERIC COEFFICIENT OF OPTICAL PICKUP LENS SURFACE R2 | | | |
|---|---|---|---|
| k2 | -204.3627 | $A_2 4$ | -0.018214151 |
| $A_2 6$ | 0.11041367 | $A_2 8$ | -0.12846609 |
| $A_2 10$ | 0.076998924 | $A_2 12$ | -0.026153861 |
| $A_2 14$ | 0.0047664661 | $A_2 16$ | -0.00036133903 |

## Fig. 65D

Longitudinal Aberration
NA 0.87

-0.0100    -0.0050    0.0000    0.0050    0.0100
mm

Fig. 66A

RADIUS OF SURFACE R2 (mm)

1.60
1.40
1.20
1.00
0.80
0.60
0.40
0.20
0.00

-0.04    -0.03    -0.02    -0.01    0
sag(mm)

Fig. 66B

Fig. 66C

| | CURVATURE RADIUS R (mm) | INTER-PLANE DISTANCE d (mm) | REFRACTIVE INDEX n | ABBE NUMBER $\nu$ d |
|---|---|---|---|---|
| 0 (APERTURE STOP SURFACE) | ∞ | 0 | | |
| 1 (OPTICAL PICKUP LENS SURFACE R1) | 1.145264 | 1.63 | 1.560000 | 63.3 |
| 2 (OPTICAL PICKUP LENS SURFACE R2) | -3.529421 | 0.8092724 | | |
| 3 (LIGHT TRANSMITTING LAYER IN OPTICAL DISC) | ∞ | 0.0875 | 1.621308 | 29.8 |
| 4 (LIGHT TRANSMITTING LAYER IN OPTICAL DISC) | ∞ | 0 | | |

Fig. 67A

| f (mm) | 1.765 | NA | 0.86 |
|---|---|---|---|
| WORKING DISTANCE WD (mm) | 0.8092724 | EFFECTIVE DIAMETER (mm) | 3.05 |

Fig. 67B

| ASPHERIC COEFFICIENT OF OPTICAL PICKUP LENS SURFACE R1 | | | |
|---|---|---|---|
| k1 | -0.9484284 | $A_14$ | 0.046363008 |
| $A_16$ | -0.0010598525 | $A_18$ | 0.013732556 |
| $A_110$ | -0.010278977 | $A_112$ | 0.0043817762 |
| $A_114$ | -0.00028907686 | $A_116$ | -8.428967e-005 |

Fig. 67C

| ASPHERIC COEFFICIENT OF OPTICAL PICKUP LENS SURFACE R2 | | | |
|---|---|---|---|
| k2 | -102.2111 | $A_24$ | 0.060907754 |
| $A_26$ | -0.095320706 | $A_28$ | 0.14058537 |
| $A_210$ | -0.12435916 | $A_212$ | 0.061577603 |
| $A_214$ | -0.016000199 | $A_216$ | 0.0017059725 |

Fig. 67D

Longitudinal Aberration
NA 0.86

Fig. 68A

Fig. 68B

Fig. 68C

Europäisches
Patentamt
European
Patent Office
Office européen
des brevets

**EUROPEAN SEARCH REPORT**

Application Number

EP 09 00 6233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/106998 A1 (ITO MITSURU [JP]) 8 May 2008 (2008-05-08) * the whole document * ----- | 1-9 | INV. G02B3/04 G11B7/135 |

TECHNICAL FIELDS
SEARCHED (IPC)

G02B
G11B

The present search report has been drawn up for all claims

| Place of search | Date of completion of the search | Examiner |
|---|---|---|
| Munich | 22 July 2009 | Baur, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 00 6233

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2009

| Patent document cited in search report | Publication date | Patent family member(s) | | Publication date |
|---|---|---|---|---|
| US 2008106998 A1 | 08-05-2008 | CN | 101202068 A | 18-06-2008 |
| | | JP | 2008123573 A | 29-05-2008 |
| | | KR | 20080042019 A | 14-05-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002156579 A
- JP 2001324673 A
- JP 2002303787 A